(19) Europäisches Patentamt
European Patent Office
Office européen des brevets

(11) EP 2 382 865 A1

(12) # EUROPÄISCHE PATENTANMELDUNG

(43) Veröffentlichungstag:
**02.11.2011 Patentblatt 2011/44**

(21) Anmeldenummer: **10190522.2**

(22) Anmeldetag: **09.11.2010**

(51) Int Cl.:
***A01N 43/56*** *(2006.01)* ***A01N 43/78*** *(2006.01)*
***A01N 43/824*** *(2006.01)* ***A01P 7/04*** *(2006.01)*
***A01N 43/82*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **28.04.2010 EP 10161282**

(71) Anmelder: **Bayer CropScience AG**
**40789 Monheim (DE)**

(72) Erfinder:
- **Bretschneider, Thomas, Dr.**
  **53797 Lohmar (DE)**
- **Hungenberg, Heike**
  **40764 Langenfeld (DE)**
- **Füßlein, Martin, Dr.**
  **40225 Düsseldorf (DE)**

(54) **Synergistische Wirkstoffkombinationen**

(57) Neue Wirkstoffkombinationen enthaltend Verbindungen der Formel (I) und Verbindungen aus der Gruppe (II) besitzen sehr gute insektizide und akarizide Eigenschaften.

EP 2 382 865 A1

## Beschreibung

Die vorliegende Anmeldung betrifft neue Wirkstoffkombinationen, die mindestens eine Verbindung der Formel (I) einerseits und mindestens einen weiteren Wirkstoff aus der Klasse der Makrolide, der Carboxylate, Neonicotinoide, der Chitin-Synthese-Inhibitoren, der Molting Hormon Agonisten, der Organophosphate oder Carbamate, der Phthalsäurediamide, der Tetron-oder Tetramsäure, der Pyrethroide oder anderen Klassen andererseits enthalten und sehr gut zur Bekämpfung von tierischen Schädlingen wie Insekten und unerwünschten Akariden geeignet sind. Die Erfindung betrifft auch Verfahren zur Bekämpfung tierischer Schädlinge auf Pflanzen und Saatgut, ein Verfahren zum Schutz von Saatgut und nicht zuletzt das mit den erfindungsgemäßen Wirkstoffkombinationen behandelte Saatgut.

Es ist bereits bekannt, dass Verbindungen der Formel (I)

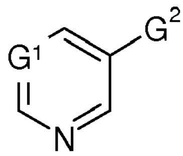

(I)

worin

(Ia)

$G^1$ für N, CH oder C-Halogen steht,

$G^2$ für

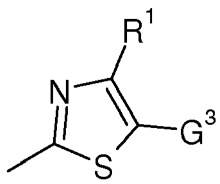

(A)

steht, worin

$R^1$ für Wasserstoff oder Alkyl steht und

$G^3$ für gegebenenfalls substituiertes Heterocyclyl, für gegebenenfalls substituiertes Heteroaryl oder für gegebenenfalls substituiertes Aryl steht oder

(Ib)

$G^1$ für N oder C-Halogen steht,

$G^2$ für

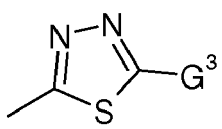

(B)

steht, worin

$G^3$ für gegebenenfalls substituiertes Heterocyclyl, für gegebenenfalls substituiertes Heteroaryl oder für gegebenenfalls substituiertes Aryl steht oder

(Ic)

$G^1$ für CH steht,

$G^2$ für

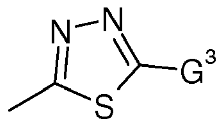 (B)

steht, worin

$G^3$ für gegebenenfalls substituiertes Heterocyclyl oder für substituiertes Furanyl oder für durch Halogen, Nitro, Amino, Alkylamino, Dialkylamino, Halogenalkyl, Cycloalkylalkyl, Alkoxy, Halogenalkoxy, Alkylthio, Alkoxyalkyl, Bis(alkoxy)alkyl, Alkoxycarbonyl, alpha-Hydroxyimino-alkoxycarbonylmethyl, alpha-Alkoxyimino-alkoxycarbonylmethyl, $C(X)NR^2R^3$, (worin X für Sauerstoff oder Schwefel steht, $R^2$ für Wasserstoff oder Alkyl steht und $R^3$ für Alkyl, Halogenalkyl, Alkoxy, Cyanoalkyl, Alkinyl, Cycloalkyl, Cycloalkylalkyl, Alkoxyalkyl, Alkylthioalkyl oder Arylalkyl steht oder $R^2$ und $R^3$ gemeinsam mit dem Stickstoffatom, an das sie gebunden sind, einen Ring bilden), Alkylsulfinyl, Alkylsulfonyl, Heterocyclyl, Aryl (welches selbst wiederum substituiert sein kann durch Halogen, Cyano, Nitro, Alkyl und Halogenalkyl), Heteroaryl (welches selbst wiederum substituiert sein kann durch Halogen, Nitro, Alkyl, Halogenalkyl, Alkoxy, Halogenalkoxy, Alkoxyalkyl, Alkylthio, Alkylthioalkyl und Cycloalkyl), Heteroarylalkyl (welches selbst wiederum substituiert sein kann durch Halogen, Nitro, Alkyl, Halogenalkyl, Alkoxy, Halogenalkoxy, Alkoxyalkyl, Alkylthio, Alkylthioalkyl und Cycloalkyl) substituiertes Thienyl oder für jeweils gegebenenfalls substituiertes Hetaryl aus der Reihe Pyrrolyl, Pyrazolyl, Imidazolyl, 1,2,3-Triazolyl, 1,2,4-Triazolyl, Oxazolyl, Isoxazolyl, Thiazolyl, Isothiazolyl, 1,2,3-Oxadiazolyl, 1,2,4-Oxadiazolyl, 1,3,4-Oxadiazolyl, 1,2,5-Oxadiazolyl, 1,2,3-Thiadiazolyl, 1,2,4-Thiadiazolyl, 1,3,4-Thiadiazolyl, 1,2,5-Thiadiazolyl, Pyridyl, Pyrimidinyl, Pyridazinyl, Pyrazinyl, 1,2,3-Triazinyl, 1,2,4-Triazinyl, 1,3,5-Triazinyl, Benzofuryl, Benzisofuryl, Benzothienyl, Benzisothienyl, Indolyl, Isoindolyl, Indazolyl, Benzothiazolyl, Benzisothiazolyl, Benzoxazolyl, Benzisoxazolyl, Benzimidazolyl, 2,1,3-Benzoxadiazole, Chinolinyl, Isochinolinyl, Cinnolinyl, Phthalazinyl, Chinazolinyl, Chinoxalinyl, Naphthyridinyl, Benzotriazinyl, Purinyl, Pteridinyl und Indolizinyl oder für durch Cyano, Nitro, Halogenalkoxy oder Heterocyclyl substituiertes Aryl steht

oder

(Id)

$G^1$ für N, CH oder C-Halogen steht,

$G^2$ für

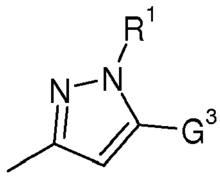 (C)

steht, worin

$R^1$ für Wasserstoff oder Alkyl steht und

$G^3$ für gegebenenfalls substituiertes Heterocyclyl oder für gegebenenfalls substituiertes Heteroaryl oder für gegebenenfalls substituiertes Aryl steht,

sowie Salze, Metallkomplexe und N-Oxide der Verbindungen der Formel (I), insektizide Wirkung aufweisen (vgl. WO 2010/006713).

Die akarizide und / oder insektizide Wirksamkeit und / oder Wirkungsbreite und / oder die Pflanzenverträglichkeit dieser Verbindungen, insbesondere gegenüber Kulturpflanzen, ist jedoch nicht immer ausreichend.

Es wurde nun gefunden, dass Wirkstoffkombinationen enthaltend mindestens eine und bevorzugt genau eine Verbindung der Formel (I)

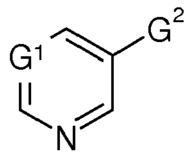

(I)

worin

(Ia)

$G^1$ für N, CH oder C-Halogen steht,

$G^2$ für

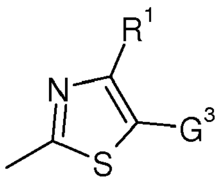

(A)

steht, worin

$R^1$ für Wasserstoff oder Alkyl steht und

$G^3$ für gegebenenfalls substituiertes Heterocyclyl, für gegebenenfalls substituiertes Heteroaryl oder für gegebenenfalls substituiertes Aryl steht oder

(Ib)

$G^1$ für N oder C-Halogen steht,

$G^2$ für

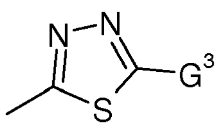

(B)

steht, worin

$G^3$ für gegebenenfalls substituiertes Heterocyclyl, für gegebenenfalls substituiertes Heteroaryl oder für gegebenenfalls substituiertes Aryl steht oder

(Ic)

$G^1$ für CH steht, $G^2$ für

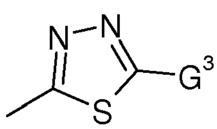

(B)

steht, worin

$G^3$ für gegebenenfalls substituiertes Heterocyclyl oder für substituiertes Furanyl oder für durch Halogen, Nitro, Amino, Alkylamino, Dialkylamino, Halogenalkyl, Cycloalkylalkyl, Alkoxy, Halogenalkoxy, Alkylthio, Alkoxyalkyl, Bis(alkoxy)alkyl, Alkoxycarbonyl, alpha-Hydroxyimino-alkoxycarbonylmethyl, alpha-Alkoxyimino-alkoxycarbonylmethyl, $C(X)NR^2R^3$, (worin X für Sauerstoff oder Schwefel steht, $R^2$ für Wasserstoff oder Alkyl steht und $R^3$ für Alkyl, Halogenalkyl, Alkoxy,

Cyanoalkyl, Alkinyl, Cycloalkyl, Cycloalkylalkyl, Alkoxyalkyl, Alkylthioalkyl oder Arylalkyl steht oder $R^2$ und $R^3$ gemeinsam mit dem Stickstoffatom, an das sie gebunden sind, einen Ring bilden), Alkylsulfinyl, Alkylsulfonyl, Heterocyclyl, Aryl (welches selbst wiederum substituiert sein kann durch Halogen, Cyano, Nitro, Alkyl und Halogenalkyl), Heteroaryl (welches selbst wiederum substituiert sein kann durch Halogen, Nitro, Alkyl, Halogenalkyl, Alkoxy, Halogenalkoxy, Alkoxyalkyl, Alkylthio, Alkylthioalkyl und Cycloalkyl), Heteroarylalkyl (welches selbst wiederum substituiert sein kann durch Halogen, Nitro, Alkyl, Halogenalkyl, Alkoxy, Halogenalkoxy, Alkoxyalkyl, Alkylthio, Alkylthioalkyl und Cycloalkyl) substituiertes Thienyl oder für jeweils gegebenenfalls substituiertes Hetaryl aus der Reihe Pyrrolyl, Pyrazolyl, Imidazolyl, 1,2,3-Triazolyl, 1,2,4-Triazolyl, Oxazolyl, Isoxazolyl, Thiazolyl, Isothiazolyl, 1,2,3-Oxadiazolyl, 1,2,4-Oxadiazolyl, 1,3,4-Oxadiazolyl, 1,2,5-Oxadiazolyl, 1,2,3-Thiadiazolyl, 1,2,4-Thiadiazolyl, 1,3,4-Thiadiazolyl, 1,2,5-Thiadiazolyl, Pyridyl, Pyrimidinyl, Pyridazinyl, Pyrazinyl, 1,2,3-Triazinyl, 1,2,4-Triazinyl, 1,3,5-Triazinyl, Benzofuryl, Benzisofuryl, Benzothienyl, Benzisothienyl, Indolyl, Isoindolyl, Indazolyl, Benzothiazolyl, Benzisothiazolyl, Benzoxazolyl, Benzisoxazolyl, Benzimidazolyl, 2,1,3-Benzoxadiazole, Chinolinyl, Isochinolinyl, Cinnolinyl, Phthalazinyl, Chinazolinyl, Chinoxalinyl, Naphthyridinyl, Benzotriazinyl, Purinyl, Pteridinyl und Indolizinyl oder für durch Cyano, Nitro, Halogenalkoxy oder Heterocyclyl substituiertes Aryl steht

oder

(Id)

$G^1$ für N, CH oder C-Halogen steht, $G^2$ für

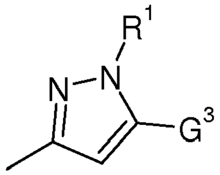

(C)

steht, worin

$R^1$ für Wasserstoff oder Alkyl steht und

$G^3$ für gegebenenfalls substituiertes Heterocyclyl oder für gegebenenfalls substituiertes Heteroaryl oder für gegebenenfalls substituiertes Aryl steht,

sowie Salze, Metallkomplexe und N-Oxide der Verbindungen der Formel (I),

und einen oder mehrere weitere Wirkstoffe aus der Gruppe (der Formel) (II) sich sehr gut zur Bekämpfung von tierischen Schädlingen wie beispielsweise Insekten und / oder Akariden eignen.

Die Wirkstoffe aus der Gruppe (II) sind gemäß der IRAC-Klassifizierung (Version 6.1 August 2008) verschiedenen Klassen (1-29) und Untergruppen nach ihrem Wirkmechanismus zugeordnet:

Acetylcholinesterase (AChE) Inhibitoren II-1

II-1.A Carbamate, zum Beispiel Alanycarb (II-1.A-1), Aldicarb (II-1.A-2), Aldoxycarb (II-1.A-3), Allyxycarb (II-1.A-4), Aminocarb (II-1.A-5), Bendiocarb (II-1.A-6), Benfuracarb (II-1.A-7), Bufencarb (II-1.A-8), Butacarb (II-1.A-9), Butocarboxim (II-1.A-10), Butoxycarboxim (II-1.A-11), Carbaryl (II-1.A-12), Carbofuran (II-1.A-13), Carbosulfan (II-1.A-14), Cloethocarb (II-1.A-15), Dimetilan (II-1.A-16), Ethiofencarb (II-1.A-17), Fenobucarb (II-1.A-18), Fenothiocarb (II-1.A-19), Formetanate (II-1.A-20), Furathiocarb (II-1.A-21), Isoprocarb (II-1.A-22), Metam-sodium (II-1.A-23), Methiocarb (II-1.A-24), Methomyl (II-1.A-25), Metolcarb (II-1.A-26), Oxamyl (II-1.A-27), Pirimicarb (II-1.A-28), Promecarb (II-1.A-29), Propoxur (II-1.A-30), Thiodicarb (II-1.A-31), Thiofanox (II-1.A-32), Trimethacarb (II-1.A-33), XMC (II-1.A-34), Xylylcarb (II-1.A-35)

II-1.B Organophosphate, zum Beispiel Acephate (II-1.B-1), Azamethiphos (II-1.B-2), Azinphos (-methyl, -ethyl) (II-1.B-3), Bromophos-ethyl (II-1.B-4), Bromfenvinfos (-methyl) (II-1.B-5), Butathiofos (II-1.B-6), Cadusafos (II-1.B-7), Carbophenothion (II-1.B-8), Chlorethoxyfos (II-1.B-9), Chlorfenvinphos (II-1.B-10), Chlormephos (II-1.B-11), Chlorpyrifos (-methyl/-ethyl) (II-1.B-12), Coumaphos (II-1.B-13), Cyanofenphos (II-1.B-14), Cyanophos (II-1.B-15), Chlorfenvinphos (II-1.B-16), Demeton-S-methyl (II-1.B-17), Demeton-S-methylsulphon (II-1.B-18), Dialifos (II-1.B-19), Diazinon (II-1.B-20), Dichlofenthion (II-1.B-21), Dichlorvos/DDVP (II-1.B-22), Dicrotophos (II-1.B-23), Dimethoate

(II-1.B-24), Dimethylvinphos (II-1.B-25), Dioxabenzofos (II-1.B-26), Disulfoton (II-1.B-27), EPN (II-1.B-28), Ethion (II-1.B-29), Ethoprophos (II-1.B-30), Etrimfos (II-1.B-31), Famphur (II-1.B-32), Fenamiphos (II-1.B-33), Fenitrothion (II-1 .B-34), Fensulfothion (II-1.B-35), Fenthion (II-1.B-36), Flupyrazofos (II-1.B-37), Fonofos (II-1.B-38), Formothion (II-1.B-39), Fosmethilan (II-1.B-40), Fosthiazate (II-1.B-41), Heptenophos (II-1.B-42), lodofenphos (II-1.B-43), Iprobenfos (II-1.B-44), Isazofos (II-1.B-45), Isofenphos (II-1.B-46), Isopropyl (II-1.B-47), O-salicylate (II-1.B-48), Isoxathion (II-1.B-49), Malathion (II-1.B-50), Mecarbam (II-1.B-51), Methacrifos (II-1.B-52), Methamidophos (II-1.B-53), Methidathion (II-1.B-54), Mevinphos (II-1.B-55), Monocrotophos (II-1.B-56), Naled (II-1.B-57), Omethoate (II-1.B-58), Oxydemeton-methyl (II-1.B-59), Parathion (-methyl/-ethyl) (II-1.B-60), Phenthoate (II-1.B-61), Phorate (II-1.B-62), Phosalone (II-1.B-63), Phosmet (II-1.B-64), Phosphamidon (II-1.B-65), Phosphocarb (II-1.B-66), Phoxim (II-1.B-67), Pirimiphos (-methyl/-ethyl) (II-1.B-68), Profenofos (II-1.B-69), Propaphos (II-1.B-70), Propetamphos (II-1.B-71), Prothiofos (II-1.B-72), Prothoate (II-1.B-73), Pyraclofos (II-1.B-74), Pyridaphenthion (II-1.B-75), Pyridathion (II-1.B-76), Quinalphos (II-1.B-77), Sebufos (II-1.B-78), Sulfotep (II-1.B-79), Sulprofos (II-1.B-80), Tebupirimfos (II-1.B-81), Temephos (11-1.B-82), Terbufos (II-1.B-83), Tetrachlorvinphos (II-1.B-84), Thiometon (II-1.B-85), Triazophos (II-1.B-86), Triclorfon (II-1.B-87), Vamidothion (II-1.B-88)

GABA-gesteuerte Chlorid-Kanal-Antagonisten II-2

II-2A Organochlorine,
zum Beispiel Camphechlor (II-2A-1), Chlordane (II-2A-2), Endosulfan (II-2A-3), Gamma-HCH (II-2A-4), HCH (II-2A-5), Heptachlor (II-2A-6), Lindane (II-2A-7), Methoxychlor (II-2A-8)

II-2B Fiprole (Phenylpyrazole),
zum Beispiel Acetoprole (II-2B-1), Ethiprole (II-2B-2), Fipronil (II-2B-3), Pyrafluprole (II-2B-4), Pyriprole (II-2B-5), Vaniliprole (II-2B-6)
Natrium-Kanal-Modulatoren / Spannungsabhängige Natrium-Kanal-Blocker II-3

II-3 Pyrethroide, zum Beispiel Acrinathrin (II-3-1), Allethrin (d-cis-trans, d-trans) (11-3-2), Beta-Cyfluthrin (11-3-3), Bifenthrin (11-3-4), Bioallethrin (11-3-5), Bioallethrin-S-cyclopentyl-isomer (11-3-6), Bioethanomethrin (11-3-7), Biopermethrin (11-3-8), Bioresmethrin (11-3-9), Chlovaporthrin (11-3-10), Cis-Cypermethrin (II-3-11), Cis-Resmethrin (11-3-12), Cis-Permethrin (11-3-13), Clocythrin (11-3-14), Cycloprothrin (11-3-15), Cyfluthrin (11-3-16), Cyhalothrin (11-3-17), Cypermethrin (alpha-, beta-, theta-, zeta-)(II-3-18), Cyphenothrin (II-3-19), Deltamethrin (11-3-20), Empenthrin (1R-isomer) (II-3-21), Esfenvalerate (11-3-22), Etofenprox (11-3-23), Fenfluthrin (11-3-24), Fenpropathrin (11-3-25), Fenpyrithrin (11-3-26), Fenvalerate (11-3-27), Flubrocythrinate (11-3-28), Flucythrinate (11-3-29), Flufenprox (11-3-30), Flumethrin (11-3-31), Fluvalinate (11-3-32), Fubfenprox (11-3-33), Gamma-Cyhalothrin (11-3-34), Imiprothrin (11-3-35), Kadethrin (11-3-36), Lambda-Cyhalothrin (11-3-37), Metofluthrin (11-3-38), Permethrin (cis-, trans-) (11-3-39), Phenothrin (IR-trans isomer) (11-3-40), Prallethrin (11-3-41), Profluthrin (11-3-42), Protrifenbute (11-3-43), Pyresmethrin (11-3-44), Resmethrin (11-3-45), RU 15525 (11-3-46), Silafluofen (11-3-47), Tau-Fluvalinate (11-3-48), Tefluthrin (11-3-49), Terallethrin (11-3-50), Tetramethrin (-1R- isomer) (11-3-51), Tralomethrin (11-3-52), Transfluthrin (11-3-53), ZXI 8901 (11-3-54), Pyrethrin (pyrethrum) (11-3-55), Eflusilanat (11-3-56), DDT (11-3-57), Methoxychlor (11-3-58),

Nikotinerge Acetylcholin-Rezeptor-Agonisten/-Antagonisten II-4

II-4A Chloronicotinyle,
zum Beispiel Acetamiprid (II-4A-1), Clothianidin (II-4A-2), Dinotefuran (II-4A-3), Imidacloprid (II-4A-4), Imidaclothiz (II-4A-5), Nitenpyram (II-4A-6), Nithiazin (II-4A-7), Thiacloprid (II-4A-8), Thiamethoxam (II-4A-9),
II-4B Nicotine (II-4B-1), Bensultap (II-4B-2), Cartap (II-4B-3), Thiosulfap-Natrium (II-4B-4), Thiocylam (II-4C-4)
Allosterische Acetylcholin-Rezeptor-Modulatoren (Agonisten)
II-5 Spinosyne,
zum Beispiel Spinosad (II-5-1), Spinetoram (II-5-2)
Chlorid-Kanal-Aktivatoren
II-6 Mectine / Macrolide,
zum Beispiel Abamectin (11-6-1), Emamectin (11-6-2), Emamectin-benzoate (11-6-3), Ivermectin (II-6-4), Lepimectin (11-6-5), Milbemectin (II-6-6)

II-7A Juvenilhormon Analoge,
zum Beispiel Hydroprene (II-7A-1), Kinoprene (II-7A-2), Methoprene (II-7A-3), Epofenonane (II-7A-4), Triprene (II-7A-5), Fenoxycarb (II-7B-1),
Pyriproxifen (II-7C-1), Diofenolan (II-7C-2)
Wirkstoffe mit unbekannten oder nicht spezifischen Wirkmechanismen
II-8 Begasungsmittel,
zum Beispiel Methyl bromide (II-8A-1), Chloropicrin (II-8B-1), Sulfuryl fluoride (II-8C-1)
II-9 Selektive Fraßhemmer,
zum Beispiel Cryolite (II-9A-1), Pymetrozine (II-9B-1), Pyrifluquinazon (NNI0101) (II-9B-2), Flonicamid (II-9C-1)
II-10 Milbenwachstumsinhibitoren,
zum Beispiel Clofentezine (II-10A-1), Hexythiazox (II-10A-2),), Etoxazole (II-10B-1) Inhibitoren der oxidativen Phosphorylierung, ATP-Disruptoren II-12
II-12A Diafenthiuron (II-12A-1)
II-12B Organozinnverbindungen,
zum Beispiel Azocyclotin (II-12B-1), Cyhexatin (II-12B-2), Fenbutatin-oxide (II-12B-3)
II-12C Propargite (II-12C-1), Tetradifon (II-12C-2)
Entkoppler der oxidativen Phoshorylierung durch Unterbrechung des H-Protongradienten II-13 Chlorfenapyr (II-13-1) Binapacyrl (II-13-2), Dinobuton (II-13-3), Dinocap (II-13-4), DNOC (II-13-5) Mikrobielle Disruptoren der Insektendarmmembran
Bacillus thuringiensis-Stämme (II-13-6)
Inhibitoren der Chitinbiosynthese
II-15 Benzoylharnstoffe, zum Beispiel Bistrifluron (11-15-1), Chlorfluazuron (11-15-2), Diflubenzuron (11-15-3), Fluazuron (II-15-4), Flucycloxuron (11-15-5), Flufenoxuron (11-15-6), Hexaflumuron (11-15-7), Lufenuron (II-15-8), Novaluron (11-15-9), Noviflumuron (11-15-10), Penfluron (II-15-11), Teflubenzuron (II-15-12), Triflumuron (II-15-13)
II-16 Buprofezin (II-16-1)
Häutungsstörende Wirkstoffe Cyromazine (II-17-1)
Ecdysonagonisten/-disruptoren (II-18)
II-18A Diacylhydrazine,
zum Beispiel Chromafenozide (II-18A-1), Halofenozide (II-18A-2), Methoxyfenozide (II-18A-3), Tebufenozide (II-18A-4), Fufenozide (JS-118) (II-18A-5)
Azadirachtin (II-18B-1)
Oktopaminerge Agonisten
zum Beispiel Amitraz (II-19-1)
II-20 Seite-III-Elektronentransportinhibitoren/Seite-II-Elektronentransportinhibitoren
Hydramethylnon (II-20A-1)
Acequinocyl (II-20B-1)
Fluacrypyrim (II-20C-1)
Cyflumetofen (II-20D-1), Cyenopyrafen (II-20D-2)
Elektronentransportinhibitoren
II-21 Seite-I-Elektronentransportinhibitoren
aus der Gruppe der METI-Akarizide,
zum Beispiel Fenazaquin (II-21-1), Fenpyroximate (II-21-2), Pyrimidifen (II-21-3), Pyridaben (II-21-4), Tebufenpyrad (II-21-5), Tolfenpyrad (II-21-6), Rotenone (II-21-7)
II-22 Spannungsabhängige Natriumkanal-Blocker
zum Beispiel Indoxacarb (II-22A-1)
zum Beispiel Metaflumizone (BAS 3201) (II-22B-1)
II-23 Inhibitoren der Fettsäurebiosynthese
II-23A Tetronsäure-Derivate
zum Beispiel Spirodiclofen (II-23A-1), Spiromesifen (II-23A-2)
II-23B Tetramsäure-Derivate,
zum Beispiel Spirotetramat (II-23B-1)
II-25 Neuronale Inhibitoren mit unbekannten Wirkmechanismus Bifenazate (II-25-1) Ryanodinrezeptor-Effektoren
II-28 Diamide,
zum Beispiel Flubendiamide (II-28-1),

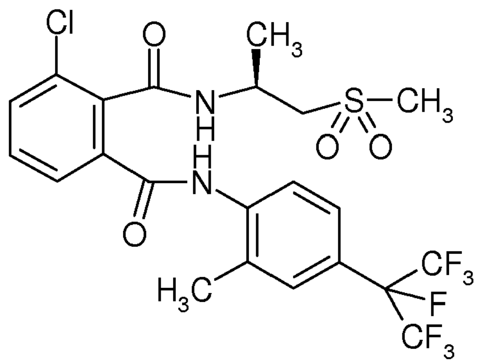

(II-28-2)

Chlorantraniliprole (Rynaxypyr (11-28-3), Cyantraniliprole (Cyazypyr, II-28-4)

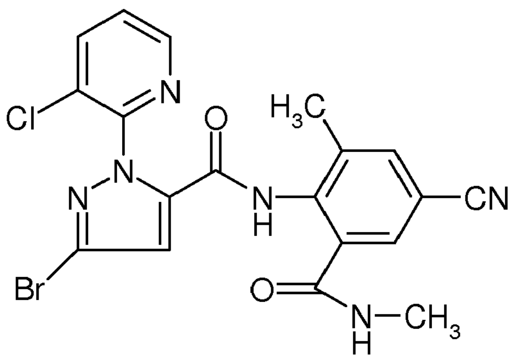

(II-28-4)

II-29 Wirkstoffe mit unbekanntem Wirkmechanismus

Amidoflumet (11-29-1), Benclothiaz (11-29-2), Benzoximate (11-29-3), Bromopropylate (11-29-4), Buprofezin (11-29-5), Chinomethionat (11-29-6), Chlordimeform (11-29-7), Chlorobenzilate (II-29-8), Clothiazoben (11-29-9), Cycloprene (11-29-10), Dicofol (II-29-11), Dicyclanil (11-29-12), Fenoxacrim (11-29-13), Fentrifanil (11-29-14), Flubenzimine (11-29-15), Fluensulfone (5-chloro-2-[(3,4,4-trifluorobut-3-en-1-yl)sulfonyl]-1,3-thiazole), Flufenerim (11-29-16), Flutenzin (11-29-17), Gossyplure (11-29-18), Japonilure (11-29-19), Metoxadiazone (11-29-20), Petroleum (11-29-21), Potassium oleate (11-29-22), Pyridalyl (11-29-23), Sulfluramid (11-29-24), Tetrasul (11-29-25), Triarathene (II-29-26), Verbutin (11-29-27), desweiteren Präparate auf Basis von Bacillus firmus (I-1582, BioNeem, Votivo), 4-{[(6-Chlorpyrid-3-yl)methyl](methyl)amino}furan-2(5H)-on (bekannt aus EP-A-0 539 588) (11-29-28), 4-{[(6-Chlorpyrid-3-yl)methyl](2,2-difluorethyl) amino}furan-2(5H)-on (bekannt aus WO 2007/115644) (II-29-29), 4-{[(6-Chlorpyrid-3-yl)methyl](cyclopropyl) amino}furan-2(5H)-on (bekannt aus EP-A-0 539 588) (11-29-30), 1-{2-Fluor-4-methyl-5-[(2,2,2-trifluorethyl)sulfinyl]phenyl}-3-(trifluormethyl)-1H-1,2,4-triazol-5-amino (bekannt aus WO 2006/043635) (II-29-31) und Sulfoxaflor (II-29-32).

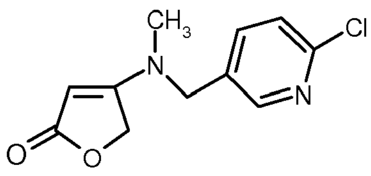

II-29-28

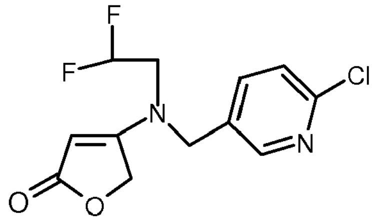

II-29-29

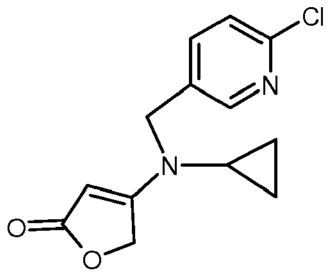

II-29-30

Die in dieser Beschreibung mit ihrem "common name" genannten Wirkstoffe sind beispielsweise aus "The Pesticide Manual" 13th Ed., British Crop Protection Council 2003, und der Webseite http://www.alanwood.net/pesticides/ bekannt.

Wenn im Rahmen dieser Beschreibung die Kurzform des "common name" eines Wirkstoffes verwendet wird, so sind damit jeweils alle gängigen Derivate, wie die Ester und Salze, und Isomere, insbesondere optische Isomere umfasst, insbesondere die handelsübliche Form bzw. Formen. Wird mit dem "common name" ein Ester oder Salz bezeichnet, so sind damit auch jeweils alle anderen gängigen Derivate wie andere Ester und Salze, die freien Säuren und Neutralverbindungen, und Isomere, insbesondere optische Isomere umfasst, insbesondere die handelsübliche Form bzw. Formen. Die angegebenen chemischen Verbindungsnamen bezeichnen zumindest ein der von dem "common name" umfassten Verbindungen, häufig eine bevorzugte Verbindung.

Die Verbindungen der Formel (I) können, auch in Abhängigkeit von der Art der Substituenten, als optische Isomere oder Isomerengemische, in unterschiedlicher Zusammensetzung vorliegen, die gegebenenfalls in üblicher Art und Weise getrennt werden können. Sowohl die reinen Isomeren als auch die Isomerengemische, deren Herstellung und Verwendung sowie diese enthaltende Mittel sind Gegenstand der vorliegenden Erfindung. Im folgenden wird der Einfachheit halber jedoch stets von Verbindungen der Formel (I) gesprochen, obwohl sowohl die reinen Verbindungen als gegebenenfalls auch Gemische mit unterschiedlichen Anteilen an isomeren Verbindungen gemeint sind.

Die erfindungsgemäßen Wirkstoffkombinationen enthalten bevorzugt Verbindungen der Formel (I), worin

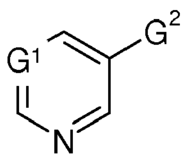

(I)

(Ia)

$G^1$ für N, CH oder C-Halogen steht, $G^2$ für

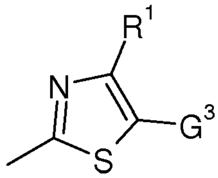

(A)

steht, worin

$R^1$ für Wasserstoff oder $C_1$-$C_6$-Alkyl steht und

$G^3$ jeweils für gegebenenfalls durch Halogen, Cyano, Nitro, $C_1$-$C_6$-Alkyl, $C_1$-$C_6$-Halogenalkyl, $C_3$-$C_6$-Cycloalkyl, $C_1$-$C_6$-Alkoxy, $C_1$-$C_6$-Halogenalkoxy, $C_1$-$C_6$-Alkylthio, $C_1$-$C_6$-Haloalkylthio, $C_1$-$C_6$-Alkylsulfinyl, $C_1$-$C_6$-Alkylsulfonyl, $C_1$-$C_6$-Haloalkylsulfinyl, $C_1$-$C_6$-Haloalkylsulfonyl, Amino, $C_1$-$C_6$-Alkylamino, Di-($C_1$-$C_6$-alkyl)amino, $C_1$-$C_6$-Alkylcarbonylamino, $C_1$-$C_6$-Alkoxycarbonylamino, $C_1$-$C_6$-Alkoxy-$C_1$-$C_6$-alkyl, $C_1$-$C_6$-Halogenalkoxy-$C_1$-$C_6$-alkyl, $C_2$-$C_6$-Alkenyl, $C_2$-$C_6$-Alkinyl, $C_1$-$C_6$-Alkyl-$C_3$-$C_6$-cycloalkyl, $C_1$-$C_6$-Alkylcarbonyl, $C_1$-$C_6$-Alkoxycarbonyl, Aminocarbonyl, Pyridyl oder Pyrimidyl substituiertes Oxazolinyl, Dihydrooxadiazinyl, Dihydrodioxazinyl oder Hydroxypyridyl,

für jeweils gegebenenfalls durch Halogen, Nitro, Amino, $C_1$-$C_6$-Alkylamino, Di-($C_1$-$C_6$-alkyl)amino, $C_1$-$C_6$-Alkyl, $C_1$-$C_6$-Halogenalkyl, $C_3$-$C_6$-Cycloalkyl-$C_1$-$C_6$-alkyl, $C_1$-$C_6$-Alkoxy, $C_1$-$C_6$-Halogenalkoxy, $C_1$-$C_6$-Alkylthio, $C_1$-$C_6$-Alkoxy-$C_1$-$C_6$-alkyl, Bis($C_1$-$C_6$-alkoxy)-$C_1$-$C_6$-alkyl, $C_1$-$C_6$-Alkoxycarbonyl, alpha-Hydroxyimino-$C_1$-$C_6$-alkoxycarbonylmethyl, alpha- $C_1$-$C_6$-Alkoxyimino-$C_1$-$C_6$-alkoxycarbonylmethyl, $C(X)NR^2R^3$, (worin X für Sauerstoff oder Schwefel steht, $R^2$ für Wasserstoff oder $C_1$-$C_6$-Alkyl steht und $R^3$ für $C_1$-$C_6$-Alkyl, $C_1$-$C_6$-Halogenalkyl, $C_1$-$C_6$-Alkoxy, Cyano-$C_1$-$C_6$-alkyl, $C_2$-$C_6$-Alkinyl, $C_3$-$C_6$-Cycloalkyl, $C_3$-$C_6$-Cycloalkyl-$C_1$-$C_6$-alkyl, $C_1$-$C_6$-Alkoxy-$C_1$-$C_6$-alkyl, $C_1$-$C_6$-Alkylthio-$C_1$-$C_6$-alkyl oder Phenyl-$C_1$-$C_6$-alkyl steht), $C_1$-$C_6$-Alkylsulfinyl, $C_1$-$C_6$-Alkylsulfonyl, die Heterocyclylreste Morpholinyl, Triazolinonyl, Dihydrodioxazinyl, Dihydrooxadiazinyl, Dioxolanyl, Dioxanyl, Piperidinonyl, Pyrrolidinonyl und Pyrazolinon-yl (welche selbst wiederum substituiert sein können durch $C_1$-$C_6$-Alkyl oder $C_1$-$C_6$-Halogenalkyl), Phenyl (welches selbst wiederum substituiert sein kann durch Halogen, Cyano, Nitro, $C_1$-$C_6$-Alkyl oder $C_1$-$C_6$-Halogenalkyl), die Heteroarylreste Pyrrolyl, Pyridyl, Pyridyl-N-oxid, Pyrimidyl, Imidazolyl, Pyrazolyl, Oxazolyl, Thiazolyl, Furanyl, Thienyl, Triazolyl, Oxadiazolyl, Thiadiazolyl, Pyrazinyl, Triazinyl, Tetrazinyl und Isochinolinyl (welche selbst wiederum substituiert sein können durch Halogen, Nitro, $C_1$-$C_6$-Alkyl, $C_1$-$C_6$-Halogenalkyl, $C_3$-$C_5$-Alkandiyl, $C_1$-$C_6$-Alkoxy, $C_1$-$C_6$-Halogenalkoxy, $C_1$-$C_6$-Alkoxy-$C_1$-$C_6$-alkyl, $C_1$-$C_6$-Alkylthio, $C_1$-$C_6$-Alkylthio-$C_1$-$C_6$-alkyl und $C_3$-$C_6$-Cycloalkyl), die Heteroarylalkylreste Triazolyl-$C_1$-$C_6$-alkyl, Pyridyl-$C_1$-$C_6$-alkyl, Pyrimidyl-$C_1$-$C_6$-alkyl oder Oxadiazolyl-$C_1$-$C_6$-alkyl (welche selbst wiederum substituiert sein können durch $C_1$-$C_6$-Alkyl) substituiertes Pyrrolyl, Pyrazolyl, Imidazolyl, 1,2,3-Triazolyl, 1,2,4-Triazolyl, Oxazolyl, Isoxazolyl, Thiazolyl, Isothiazolyl, 1,2,3-Oxadiazolyl, 1,2,4-Oxadiazolyl, 1,3,4-Oxadiazolyl, 1,2,5-Oxadiazolyl, 1,2,3-Thiadiazolyl, 1,2,4-Thiadiazolyl, 1,3,4-Thiadiazolyl, 1,2,5-Thiadiazolyl, Pyridyl, Pyrimidinyl, Pyridazinyl, Pyrazinyl, 1,2,3-Triazinyl, 1,2,4-Triazinyl, 1,3,5-Triazinyl, Benzofuryl, Benzisofuryl, Benzothienyl, Benzisothienyl, Indolyl, Isoindolyl, Indazolyl, Benzothiazolyl, Benzisothiazolyl, Benzoxazolyl, Benzisoxazolyl, Benzimidazolyl, 2,1,3-Benzoxadiazole, Chinolinyl, Isochinolinyl, Cinnolinyl, Phthalazinyl, Chinazolinyl, Chinoxalinyl, Naphthyridinyl, Benzotriazinyl, Purinyl, Pteridinyl und Indolizinyl (insbesondere Pyridyl, Pyrimidyl, Imidazolyl, Pyrazolyl, Triazinyl, Thiazolyl, Thiadiazolyl, Oxadiazolyl oder Oxazolyl) oder

für gegebenenfalls durch Halogen, Cyano, $C_1$-$C_6$-Alkyl, $C_1$-$C_6$-Halogenalkyl, $C_1$-$C_6$-Alkoxy, $C_1$-$C_6$-Halogenalkoxy, Dioxolanyl, Piperidinonyl, Pyrrolidinonyl oder Dihydrodioxazinyl substituiertes Phenyl steht oder

(Ib)

$G^1$ für N oder C-Halogen steht, $G^2$ für

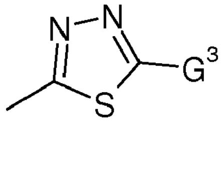

(B)

steht, worin

$G^3$ jeweils für gegebenenfalls durch Halogen, Cyano, Nitro, $C_1$-$C_6$-Alkyl, $C_1$-$C_6$-Halogenalkyl, $C_3$-$C_6$-Cycloalkyl,

$C_1$-$C_6$-Alkoxy, $C_1$-$C_6$-Halogenalkoxy, $C_1$-$C_6$-Alkylthio, $C_1$-$C_6$-Haloalkylthio, $C_1$-$C_6$-Alkylsulfinyl, $C_1$-$C_6$-Alkylsulfonyl, $C_1$-$C_6$-Haloalkylsulfinyl, $C_1$-$C_6$-Haloalkylsulfonyl, Amino, $C_1$-$C_6$-Alkylamino, Di-($C_1$-$C_6$-alkyl)amino, $C_1$-$C_6$-Alkylcarbonylamino, $C_1$-$C_6$-Alkoxycarbonylamino, $C_1$-$C_6$-Alkoxy-$C_1$-$C_6$-alkyl, $C_1$-$C_6$-Halogenalkoxy-$C_1$-$C_6$-alkyl, $C_2$-$C_6$-Alkenyl, $C_2$-$C_6$-Alkinyl, $C_1$-$C_6$-Alkyl-$C_3$-$C_6$-cycloalkyl, $C_1$-$C_6$-Alkylcarbonyl, $C_1$-$C_6$-Alkoxycarbonyl, Aminocarbonyl, Pyridyl oder Pyrimidyl substituiertes Oxazolinyl, Dihydrooxadiazinyl, Dihydrodioxazinyl oder Hydroxypyridyl,

für jeweils gegebenenfalls durch Halogen, Nitro, Amino, $C_1$-$C_6$-Alkylamino, Di-($C_1$-$C_6$-alkyl)amino, $C_1$-$C_6$-Alkyl, $C_1$-$C_6$-Halogenalkyl, $C_3$-$C_6$-Cycloalkyl-$C_1$-$C_6$-alkyl, $C_1$-$C_6$-Alkoxy, $C_1$-$C_6$-Halogenalkoxy, $C_1$-$C_6$-Alkylthio, $C_1$-$C_6$-Alkoxy-$C_1$-$C_6$-alkyl, Bis($C_1$-$C_6$-alkoxy)-$C_1$-$C_6$-alkyl, $C_1$-$C_6$-Alkoxycarbonyl, alpha-Hydroxyimino-$C_1$-$C_6$-alkoxycarbonylmethyl, alpha- $C_1$-$C_6$-Alkoxyimino-$C_1$-$C_6$-alkoxycarbonylmethyl, C(X)$NR^2R^3$, (worin X für Sauerstoff oder Schwefel steht, $R^2$ für Wasserstoff oder $C_1$-$C_6$-Alkyl steht und $R^3$ für $C_1$-$C_6$-Alkyl, $C_1$-$C_6$-Halogenalkyl, $C_1$-$C_6$-Alkoxy, Cyano-$C_1$-$C_6$-alkyl, $C_2$-$C_6$-Alkinyl, $C_3$-$C_6$-Cycloalkyl, $C_3$-$C_6$-Cycloalkyl-$C_1$-$C_6$-alkyl, $C_1$-$C_6$-Alkoxy-$C_1$-$C_6$-alkyl, $C_1$-$C_6$-Alkylthio-$C_1$-$C_6$-alkyl oder Phenyl-$C_1$-$C_6$-alkyl steht), $C_1$-$C_6$-Alkylsulfinyl, $C_1$-$C_6$-Alkylsulfonyl, die Heterocyclylreste Morpholinyl, Triazolinonyl, Dihydrodioxazinyl, Dihydrooxadiazinyl, Dioxolanyl, Dioxanyl, Piperidinonyl, Pyrrolidinonyl und Pyrazolinon-yl (welche selbst wiederum substituiert sein können durch $C_1$-$C_6$-Alkyl oder $C_1$-$C_6$-Halogenalkyl), Phenyl (welches selbst wiederum substituiert sein kann durch Halogen, Cyano, Nitro, $C_1$-$C_6$-Alkyl oder $C_1$-$C_6$-Halogenalkyl), die Heteroarylreste Pyrrolyl, Pyridyl, Pyridyl-N-oxid, Pyrimidyl, Imidazolyl, Pyrazolyl, Oxazolyl, Thiazolyl, Furanyl, Thienyl, Triazolyl, Oxadiazolyl, Thiadiazolyl, Pyrazinyl, Triazinyl, Tetrazinyl und Isochinolinyl (welche selbst wiederum substituiert sein können durch Halogen, Nitro, $C_1$-$C_6$-Alkyl, $C_1$-$C_6$-Halogenalkyl, $C_1$-$C_6$-Alkoxy, $C_1$-$C_6$-Halogenalkoxy, $C_1$-$C_6$-Alkoxy-$C_1$-$C_6$-alkyl, $C_1$-$C_6$-Alkylthio, $C_1$-$C_6$-Alkylthio-$C_1$-$C_6$-alkyl und $C_3$-$C_6$-Cycloalkyl), die Heteroarylalkylreste Triazolyl-$C_1$-$C_6$-alkyl, Pyridyl-$C_1$-$C_6$-alkyl, Pyrimidyl-$C_1$-$C_6$-alkyl oder Oxadiazolyl-$C_1$-$C_6$-alkyl (welche selbst wiederum substituiert sein können durch $C_1$-$C_6$-Alkyl) substituiertes Pyrrolyl, Pyrazolyl, Imidazolyl, 1,2,3-Triazolyl, 1,2,4-Triazolyl, Oxazolyl, Isoxazolyl, Thiazolyl, Isothiazolyl, 1,2,3-Oxadiazolyl, 1,2,4-Oxadiazolyl, 1,3,4-Oxadiazolyl, 1,2,5-Oxadiazolyl, 1,2,3-Thiadiazolyl, 1,2,4-Thiadiazolyl, 1,3,4-Thiadiazolyl, 1,2,5-Thiadiazolyl, Pyridyl, Pyrimidinyl, Pyridazinyl, Pyrazinyl, 1,2,3-Triazinyl, 1,2,4-Triazinyl, 1,3,5-Triazinyl, Benzofuryl, Benzisofuryl, Benzothienyl, Benzisothienyl, Indolyl, Isoindolyl, Indazolyl, Benzothiazolyl, Benzisothiazolyl, Benzoxazolyl, Benzisoxazolyl, Benzimidazolyl, 2,1,3-Benzoxadiazole, Chinolinyl, Isochinolinyl, Cinnolinyl, Phthalazinyl, Chinazolinyl, Chinoxalinyl, Naphthyridinyl, Benzotriazinyl, Purinyl, Pteridinyl und Indolizinyl (insbesondere Pyridyl, Pyrimidyl, Imidazolyl, Pyrazolyl, Triazinyl, Thiazolyl, Thiadiazolyl, Oxadiazolyl oder Oxazolyl) oder

für gegebenenfalls durch Halogen, Cyano, $C_1$-$C_6$-Alkyl, $C_1$-$C_6$-Halogenalkyl, $C_1$-$C_6$-Alkoxy, $C_1$-$C_6$-Halogenalkoxy, Dioxolanyl, Piperidinonyl, Pyrrolidinonyl oder Dihydrodioxazinyl substituiertes Phenyl steht oder

(Ic)

$G^1$ für CH steht, $G^2$ für

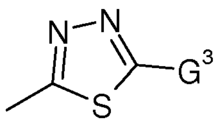

(B)

steht, worin

$G^3$ jeweils für gegebenenfalls durch Halogen, Cyano, Nitro, $C_1$-$C_6$-Alkyl, $C_1$-$C_6$-Halogenalkyl, $C_3$-$C_6$-Cycloalkyl, $C_1$-$C_6$-Alkoxy, $C_1$-$C_6$-Halogenalkoxy, $C_1$-$C_6$-Alkylthio, $C_1$-$C_6$-Haloalkylthio, $C_1$-$C_6$-Alkylsulfinyl, $C_1$-$C_6$-Alkylsulfonyl, $C_1$-$C_6$-Haloalkylsulfinyl, $C_1$-$C_6$-Haloalkylsulfonyl, Amino, $C_1$-$C_6$-Alkylamino, Di-($C_1$-$C_6$-alkyl)amino, $C_1$-$C_6$-Alkylcarbonylamino, $C_1$-$C_6$-Alkoxycarbonylamino, $C_1$-$C_6$-Alkoxy-$C_1$-$C_6$-alkyl, $C_1$-$C_6$-Halogenalkoxy-$C_1$-$C_6$-alkyl, $C_2$-$C_6$-Alkenyl, $C_2$-$C_6$-Alkinyl, $C_1$-$C_6$-Alkyl-$C_3$-$C_6$-cycloalkyl, $C_1$-$C_6$-Alkylcarbonyl, $C_1$-$C_6$-Alkoxycarbonyl, Aminocarbonyl, Pyridyl oder Pyrimidyl substituiertes Oxazolinyl, Dihydrooxadiazinyl, Dihydrodioxazinyl oder Hydroxypyridyl oder

für durch Halogen, Nitro, Amino, $C_1$-$C_6$-Alkylamino, Di-$C_1$-$C_6$-alkylamino, $C_1$-$C_6$-Alkyl, $C_1$-$C_6$-Halogenalkyl, $C_3$-$C_6$-Cycloalkyl-$C_1$-$C_6$-alkyl, $C_1$-$C_6$-Alkoxy, $C_1$-$C_6$-Halogenalkoxy, $C_1$-$C_6$-Alkylthio, $C_1$-$C_6$-Alkoxy-$C_1$-$C_6$-alkyl, Bis($C_1$-$C_6$-alkoxy)-$C_1$-$C_6$-alkyl, $C_1$-$C_6$-Alkoxycarbonyl, alpha-Hydroxyimino-$C_1$-$C_6$-alkoxycarbonylmethyl, alpha-$C_1$-$C_6$-Alkoxyimino-$C_1$-$C_6$-alkoxycarbonylmethyl, C(X)$NR^2R^3$, (worin X für Sauerstoff oder Schwefel steht, $R^2$ für Wasserstoff oder $C_1$-$C_6$-Alkyl steht und $R^3$ für $C_1$-$C_6$-Alkyl, $C_1$-$C_6$-Halogenalkyl, $C_1$-$C_6$-Alkoxy, $C_1$-$C_6$-Cyanoalkyl, $C_2$-$C_6$-Alkinyl, $C_3$-$C_6$-Cycloalkyl, $C_3$-$C_6$-Cycloalkyl-$C_1$-$C_6$-alkyl, $C_1$-$C_6$-Alkoxy-$C_1$-$C_6$-alkyl, $C_1$-$C_6$-Alkylthio-$C_1$-$C_6$-alkyl oder Phenyl-$C_1$-$C_6$-alkyl steht), $C_1$-$C_6$-Alkylsulfinyl, $C_1$-$C_6$-Alkylsulfonyl, die Heterocyclylreste Morpholinyl, Triazolinon-yl, Dihydrodioxazinyl, Dihydrooxadiazinyl, Dioxolanyl, Dioxanyl, Piperidinonyl, Pyrrolidinonyl und Pyrazolinon-yl (welche selbst wiederum substituiert sein können durch $C_1$-$C_6$-Alkyl oder $C_1$-$C_6$-Halogenalkyl), Phenyl (welches selbst wiederum substituiert sein kann durch Halogen, Cyano, Nitro, $C_1$-$C_6$-Alkyl oder $C_1$-$C_6$-Halogenalkyl), die Heteroarylreste Pyrrolyl, Pyridyl, Pyridyl-N-oxid, Pyrimidyl, Imidazolyl, Pyrazolyl, Oxazolyl, Thiazolyl, Furanyl, Thienyl, Triazolyl, Oxadiazolyl, Thiadiazolyl, Pyrazinyl, Triazinyl, Tetrazinyl und Isochinolinyl (welche selbst wiederum substituiert sein können durch Halogen, Nitro, $C_1$-$C_6$-Alkyl, $C_1$-$C_6$-Halogenalkyl, $C_1$-$C_6$-Alkoxy, $C_1$-$C_6$-Halogenalkoxy, $C_1$-$C_6$-Alkoxy-$C_1$-$C_6$-alkyl, $C_1$-$C_6$-Alkylthio, $C_1$-$C_6$-Alkylthio-$C_1$-$C_6$-alkyl und $C_3$-$C_6$-Cycloalkyl), die Heteroarylalkylreste Triazolylalkyl, Pyridylalkyl, Pyrimidylalkyl oder Oxadiazolylalkyl (welche selbst wiederum substituiert sein können durch $C_1$-$C_6$-Alkyl) substituiertes Furanyl oder

für durch Halogen, Nitro, Amino, $C_1$-$C_6$-Alkylamino, Di-$C_1$-$C_6$-alkylamino, $C_1$-$C_6$-Halogenalkyl, $C_3$-$C_6$-Cycloalkyl-$C_1$-$C_6$-alkyl, $C_1$-$C_6$-Alkoxy, $C_1$-$C_6$-Halogenalkoxy, $C_1$-$C_6$-Alkylthio, $C_1$-$C_6$-Alkoxy-$C_1$-$C_6$-alkyl, Bis($C_1$-$C_6$-alkoxy)-$C_1$-$C_6$-alkyl, $C_1$-$C_6$-Alkoxycarbonyl, alpha-Hydroxyimino-$C_1$-$C_6$-alkoxycarbonylmethyl, alpha-$C_1$-$C_6$-Alkoxyimino-$C_1$-$C_6$-alkoxycarbonylmethyl, C(X)$NR^2R^3$, (worin X für Sauerstoff oder Schwefel steht, $R^2$ für Wasserstoff oder $C_1$-$C_6$-Alkyl steht und $R^3$ für $C_1$-$C_6$-Alkyl, $C_1$-$C_6$-Halogenalkyl, $C_1$-$C_6$-Alkoxy, $C_1$-$C_6$-Cyanoalkyl, $C_2$-$C_6$-Alkinyl, $C_3$-$C_6$-Cycloalkyl, $C_3$-$C_6$-Cycloalkyl-$C_1$-$C_6$-alkyl, $C_1$-$C_6$-Alkoxy-$C_1$-$C_6$-alkyl, $C_1$-$C_6$-Alkylthio-$C_1$-$C_6$-alkyl oder Phenyl-$C_1$-$C_6$-alkyl steht), $C_1$-$C_6$-Alkylsulfinyl, $C_1$-$C_6$-Alkylsulfonyl, die Heterocyclylreste Morpholinyl, Triazolinon-yl, Dihydrodioxazinyl, Dihydrooxadiazinyl, Dioxolanyl, Dioxanyl, Piperidinonyl, Pyrrolidinonyl und Pyrazolinon-yl (welche selbst wiederum substituiert sein können durch $C_1$-$C_6$-Alkyl oder $C_1$-$C_6$-Halogenalkyl), Phenyl (welches selbst wiederum substituiert sein kann durch Halogen, Cyano, Nitro, $C_1$-$C_6$-Alkyl oder $C_1$-$C_6$-Halogenalkyl), die Heteroarylreste Pyrrolyl, Pyridyl, Pyridyl-N-oxid, Pyrimidyl, Imidazolyl, Pyrazolyl, Oxazolyl, Thiazolyl, Furanyl, Thienyl, Triazolyl, Oxadiazolyl, Thiadiazolyl, Pyrazinyl, Triazinyl, Tetrazinyl und Isochinolinyl (welche selbst wiederum substituiert sein können durch Halogen, Nitro, $C_1$-$C_6$-Alkyl, $C_1$-$C_6$-Halogenalkyl, $C_1$-$C_6$-Alkoxy, $C_1$-$C_6$-Halogenalkoxy, $C_1$-$C_6$-Alkoxy-$C_1$-$C_6$-alkyl, $C_1$-$C_6$-Alkylthio, $C_1$-$C_6$-Alkylthio-$C_1$-$C_6$-alkyl und $C_3$-$C_6$-Cycloalkyl), die Heteroarylalkylreste Triazolylalkyl, Pyridylalkyl, Pyrimidylalkyl oder Oxadiazolylalkyl (welche selbst wiederum substituiert sein können durch $C_1$-$C_6$-Alkyl) substituiertes Thienyl oder

für jeweils gegebenenfalls durch Halogen, Nitro, Amino, $C_1$-$C_6$-Alkylamino, Di-($C_1$-$C_6$-alkyl)amino, $C_1$-$C_6$-Alkyl, $C_1$-$C_6$-Halogenalkyl, $C_3$-$C_6$-Cycloalkyl-$C_1$-$C_6$-alkyl, $C_1$-$C_6$-Alkoxy, $C_1$-$C_6$-Halogenalkoxy, $C_1$-$C_6$-Alkylthio, $C_1$-$C_6$-Alkoxy-$C_1$-$C_6$-alkyl, Bis($C_1$-$C_6$-alkoxy)-$C_1$-$C_6$-alkyl, $C_1$-$C_6$-Alkoxycarbonyl, alpha-Hydroxyimino-$C_1$-$C_6$-alkoxycarbonylmethyl, alpha- $C_1$-$C_6$-Alkoxyimino-$C_1$-$C_6$-alkoxycarbonylmethyl, C(X)$NR^2R^3$, (worin X für Sauerstoff oder Schwefel steht, $R^2$ für Wasserstoff oder $C_1$-$C_6$-Alkyl steht und $R^3$ für $C_1$-$C_6$-Alkyl, $C_1$-$C_6$-Halogenalkyl, $C_1$-$C_6$-Alkoxy, Cyano-$C_1$-$C_6$-alkyl, $C_2$-$C_6$-Alkinyl, $C_3$-$C_6$-Cycloalkyl, $C_3$-$C_6$-Cycloalkyl-$C_1$-$C_6$-alkyl, $C_1$-$C_6$-Alkoxy-$C_1$-$C_6$-alkyl, $C_1$-$C_6$-Alkylthio-$C_1$-$C_6$-alkyl oder Phenyl-$C_1$-$C_6$-alkyl steht), $C_1$-$C_6$-Alkylthio, $C_1$-$C_6$-Alkylsulfinyl, $C_1$-$C_6$-Alkylsulfonyl, die Heterocyclylreste Morpholinyl, Triazolinon-yl, Dihydrodioxazinyl, Dihydrooxadiazinyl, Dioxolanyl, Dioxanyl, Piperidinonyl, Pyrrolidinonyl und Pyrazolinon-yl (welche selbst wiederum substituiert sein können durch $C_1$-$C_6$-Alkyl oder $C_1$-$C_6$-Halogenalkyl), Phenyl (welches selbst wiederum substituiert sein kann durch Halogen, Cyano, Nitro, $C_1$-$C_6$-Alkyl oder $C_1$-$C_6$-Halogenalkyl), die Heteroarylreste Pyrrolyl, Pyridyl, Pyridyl-N-oxid, Pyrimidyl, Imidazolyl, Pyrazolyl, Oxazolyl, Thiazolyl, Furanyl, Thienyl, Triazolyl, Oxadiazolyl, Thiadiazolyl, Pyrazinyl, Triazinyl, Tetrazinyl und Isochinolinyl (welche selbst wiederum substituiert sein können durch Halogen, Nitro, $C_1$-$C_6$-Alkyl, $C_1$-$C_6$-Halogenalkyl, $C_1$-$C_6$-Alkoxy, $C_1$-$C_6$-Halogenalkoxy, $C_1$-$C_6$-Alkoxy-$C_1$-$C_6$-alkyl, $C_1$-$C_6$-Alkylthio, $C_1$-$C_6$-Alkylthio-$C_1$-$C_6$-alkyl und $C_3$-$C_6$-Cycloalkyl), die Heteroarylalkylreste Triazolyl-$C_1$-$C_6$-alkyl, Pyridyl-$C_1$-$C_6$-alkyl, Pyrimidyl-$C_1$-$C_6$-alkyl oder Oxadiazolyl-$C_1$-$C_6$-alkyl (welche selbst wiederum substituiert sein können durch $C_1$-$C_6$-Alkyl) substituiertes Pyrrolyl, Pyrazolyl, Imidazolyl, 1,2,3-Triazolyl, 1,2,4-Triazolyl, Oxazolyl, Isoxazolyl, Thiazolyl, Isothiazolyl, 1,2,3-Oxadiazolyl, 1,2,4-Oxadiazolyl, 1,3,4-Oxadiazolyl, 1,2,5-Oxadiazolyl, 1,2,3-Thiadiazolyl, 1,2,4-Thiadiazolyl, 1,3,4-Thiadiazolyl, 1,2,5-Thiadiazolyl, Pyridyl, Pyrimidinyl, Pyridazinyl, Pyrazinyl, 1,2,3-Triazinyl, 1,2,4-Triazinyl, 1,3,5-Triazinyl, Benzofuryl, Benzisofuryl, Benzothienyl, Benzisothienyl, Indolyl, Isoindolyl, Indazolyl, Benzothiazolyl, Benzisothiazolyl, Benzoxazolyl, Benzisoxazolyl, Benzimidazolyl, 2,1,3-Benzoxadiazole, Chinolinyl, Isochinolinyl, Cinnolinyl, Phthalazinyl, Chinazolinyl, Chinoxalinyl, Naphthyridinyl, Benzotriazinyl, Purinyl, Pteridinyl und Indolizinyl (insbesondere Pyridyl, Pyrimidyl, Imidazolyl, Pyrazolyl, Triazinyl, Thiazolyl, Thiadiazolyl, Oxadiazolyl oder Oxazolyl) oder

für durch Cyano, Nitro, $C_1$-$C_6$-Halogenalkoxy, Dioxolanyl, Piperidinonyl, Pyrrolidinonyl oder Dihydrodioxazinyl substituiertes Phenyl steht

oder

(Id)

$G^1$ für N, CH oder C-Halogen steht, $G^2$ für

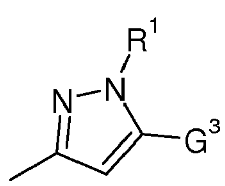

(C)

steht, worin

$R^1$ für Wasserstoff oder $C_1$-$C_6$-Alkyl steht und

$G^3$ jeweils für gegebenenfalls durch Halogen, Cyano, Nitro, $C_1$-$C_6$-Alkyl, $C_1$-$C_6$-Halogenalkyl, $C_3$-$C_6$-Cycloalkyl, $C_1$-$C_6$-Alkoxy, $C_1$-$C_6$-Halogenalkoxy, $C_1$-$C_6$-Alkylthio, $C_1$-$C_6$-Haloalkylthio, $C_1$-$C_6$-Alkylsulfinyl, $C_1$-$C_6$-Alkylsulfonyl, $C_1$-$C_6$-Haloalkylsulfinyl, $C_1$-$C_6$-Haloalkylsulfonyl, Amino, $C_1$-$C_6$-Alkylamino, Di-($C_1$-$C_6$-alkyl)amino, $C_1$-$C_6$-Alkylcarbonylamino, $C_1$-$C_6$-Alkoxycarbonylamino, $C_1$-$C_6$-Alkoxy-$C_1$-$C_6$-alkyl, $C_1$-$C_6$-Halogenalkoxy-$C_1$-$C_6$-alkyl, $C_2$-$C_6$-Alkenyl, $C_2$-$C_6$-Alkinyl, $C_1$-$C_6$-Alkyl-$C_3$-$C_6$-cycloalkyl, $C_1$-$C_6$-Alkylcarbonyl, $C_1$-$C_6$-Alkoxycarbonyl, Aminocarbonyl, Pyridyl oder Pyrimidyl substituiertes Oxazolinyl, Dihydrooxadiazinyl, Dihydrodioxazinyl oder Hydroxypyridyl,

für jeweils gegebenenfalls durch Halogen, Nitro, Amino, $C_1$-$C_6$-Alkylamino, Di-($C_1$-$C_6$-alkyl)amino, $C_1$-$C_6$-Alkyl, $C_1$-$C_6$-Halogenalkyl, $C_3$-$C_6$-Cycloalkyl-$C_1$-$C_6$-alkyl, $C_1$-$C_6$-Alkoxy, $C_1$-$C_6$-Halogenalkoxy, $C_1$-$C_6$-Alkylthio, $C_1$-$C_6$-Alkoxy-$C_1$-$C_6$-alkyl, Bis($C_1$-$C_6$-alkoxy)-$C_1$-$C_6$-alkyl, $C_1$-$C_6$-Alkoxycarbonyl, alpha-Hydroxyimino-$C_1$-$C_6$-alkoxycarbonylmethyl, alpha- $C_1$-$C_6$-Alkoxyimino-$C_1$-$C_6$-alkoxycarbonylmethyl, $C(X)NR^2R^3$, (worin X für Sauerstoff oder Schwefel steht, $R^2$ für Wasserstoff oder $C_1$-$C_6$-Alkyl steht und $R^3$ für $C_1$-$C_6$-Alkyl, $C_1$-$C_6$-Halogenalkyl, $C_1$-$C_6$-Alkoxy, Cyano-$C_1$-$C_6$-alkyl, $C_2$-$C_6$-Alkinyl, $C_3$-$C_6$-Cycloalkyl, $C_3$-$C_6$-Cycloalkyl-$C_1$-$C_6$-alkyl, $C_1$-$C_6$-Alkoxy-$C_1$-$C_6$-alkyl, $C_1$-$C_6$-Alkylthio-$C_1$-$C_6$-alkyl oder Phenyl-$C_1$-$C_6$-alkyl steht), $C_1$-$C_6$-Alkylsulfinyl, $C_1$-$C_6$-Alkylsulfonyl, die Heterocyclylreste Morpholinyl, Triazolinonyl, Dihydrodioxazinyl, Dihydrooxadiazinyl, Dioxolanyl, Dioxanyl, Piperidinonyl, Pyrrolidinonyl und Pyrazolinon-yl (welche selbst wiederum substituiert sein können durch $C_1$-$C_6$-Alkyl oder $C_1$-$C_6$-Halogenalkyl), Phenyl (welches selbst wiederum substituiert sein kann durch Halogen, Cyano, Nitro, $C_1$-$C_6$-Alkyl oder $C_1$-$C_6$-Halogenalkyl), die Heteroarylreste Pyrrolyl, Pyridyl, Pyridyl-N-oxid, Pyrimidyl, Imidazolyl, Pyrazolyl, Oxazolyl, Thiazolyl, Furanyl, Thienyl, Triazolyl, Oxadiazolyl, Thiadiazolyl, Pyrazinyl, Triazinyl, Tetrazinyl und Isochinolinyl (welche selbst wiederum substituiert sein können durch Halogen, Nitro, $C_1$-$C_6$-Alkyl, $C_1$-$C_6$-Halogenalkyl, $C_1$-$C_6$-Alkoxy, $C_1$-$C_6$-Halogenalkoxy, $C_1$-$C_6$-Alkoxy-$C_1$-$C_6$-alkyl, $C_1$-$C_6$-Alkylthio, $C_1$-$C_6$-Alkylthio-$C_1$-$C_6$-alkyl und $C_3$-$C_6$-Cycloalkyl), die Heteroarylalkylreste Triazolyl-$C_1$-$C_6$-alkyl, Pyridyl-$C_1$-$C_6$-alkyl, Pyrimidyl-$C_1$-$C_6$-alkyl oder Oxadiazolyl-$C_1$-$C_6$-alkyl (welche selbst wiederum substituiert sein können durch $C_1$-$C_6$-Alkyl) substituiertes Pyrrolyl, Pyrazolyl, Imidazolyl, 1,2,3-Triazolyl, 1,2,4-Triazolyl, Oxazolyl, Isoxazolyl, Thiazolyl, Isothiazolyl, 1,2,3-Oxadiazolyl, 1,2,4-Oxadiazolyl, 1,3,4-Oxadiazolyl, 1,2,5-Oxadiazolyl, 1,2,3-Thiadiazolyl, 1,2,4-Thiadiazolyl, 1,3,4-Thiadiazolyl, 1,2,5-Thiadiazolyl, Pyridyl, Pyrimidinyl, Pyridazinyl, Pyrazinyl, 1,2,3-Triazinyl, 1,2,4-Triazinyl, 1,3,5-Triazinyl, Benzofuryl, Benzisofuryl, Benzothienyl, Benzisothienyl, Indolyl, Isoindolyl, Indazolyl, Benzothiazolyl, Benzisothiazolyl, Benzoxazolyl, Benzisoxazolyl, Benzimidazolyl, 2,1,3-Benzoxadiazole, Chinolinyl, Isochinolinyl, Cinnolinyl, Phthalazinyl, Chinazolinyl, Chinoxalinyl, Naphthyridinyl, Benzotriazinyl, Purinyl, Pteridinyl und Indolizinyl (insbesondere Pyridyl, Pyrimidyl, Imidazolyl, Pyrazolyl, Triazinyl, Thiazolyl, Thiadiazolyl, Oxadiazolyl oder Oxazolyl) oder

für gegebenenfalls durch Halogen, Cyano, $C_1$-$C_6$-Alkyl, $C_1$-$C_6$-Halogenalkyl, $C_1$-$C_6$-Alkoxy, $C_1$-$C_6$-Halogenalkoxy, Dioxolanyl, Piperidinonyl, Pyrrolidinonyl oder Dihydrodioxazinyl substituiertes Phenyl steht sowie Salze und N-Oxide der Verbindungen der Formel (I).

Erfindungsgemäß bevorzugt verwendet werden Verbindungen der Formel (I), in welchen eine Kombination der vorstehend als bevorzugt aufgeführten Bedeutungen vorliegt.

Im Folgenden sind bevorzugte Untergruppen für die Verbindungen der Formel (I) in den erfindungsgemäßen Wirkstoffkombinationen aufgeführt:

Eine hervorgehobene Gruppe von Verbindungen für die erfindungsgemäße Verwendung sind die unter (Ia) definierten Verbindungen.

Eine weitere hervorgehobene Gruppe von Verbindungen für die erfindungsgemäße Verwendung sind die unter (Ib) definierten Verbindungen.

Eine weitere hervorgehobene Gruppe von Verbindungen für die erfindungsgemäße Verwendung sind die unter (Ic) definierten Verbindungen.

Eine weitere hervorgehobene Gruppe von Verbindungen für die erfindungsgemäße Verwendung sind die unter (Id) definierten Verbindungen.

In einer weiteren hervorgehobenen Gruppe von erfindungsgemäß zu verwendenden Verbindungen (Ia) steht $G^1$ für CH.

In einer weiteren hervorgehobenen Gruppe von erfindungsgemäß zu verwendenden Verbindungen (Ia) steht $G^1$ für N.

In einer weiteren hervorgehobenen Gruppe von erfindungsgemäß zu verwendenden Verbindungen (Ia) steht $G^1$

für C-Halogen.

In einer weiteren hervorgehobenen Gruppe von erfindungsgemäß zu verwendenden Verbindungen (Ib) steht $G^1$ für N.

In einer weiteren hervorgehobenen Gruppe von erfindungsgemäß zu verwendenden Verbindungen (Ib) steht $G^1$ für C-Halogen.

In einer weiteren hervorgehobenen Gruppe von erfindungsgemäß zu verwendenden Verbindungen (Id) steht $G^1$ für CH.

In einer weiteren hervorgehobenen Gruppe von erfindungsgemäß zu verwendenden Verbindungen (Id) steht $G^1$ für N.

In einer weiteren hervorgehobenen Gruppe von erfindungsgemäß zu verwendenden Verbindungen (Id) steht $G^1$ für C-Halogen.

In einer weiteren hervorgehobenen Gruppe von erfindungsgemäß zu verwendenden Verbindungen (Ia) steht $G^1$ für CH und $R^1$ für Wasserstoff.

In einer weiteren hervorgehobenen Gruppe von erfindungsgemäß zu verwendenden Verbindungen (Ia) steht $G^1$ für N und $R^1$ für Wasserstoff .

In einer weiteren hervorgehobenen Gruppe von erfindungsgemäß zu verwendenden Verbindungen (Ia) steht $G^1$ für C-Halogen und $R^1$ für Wasserstoff.

In einer weiteren hervorgehobenen Gruppe von erfindungsgemäß zu verwendenden Verbindungen (Ia) steht $G^1$ für CH und $R^1$ für Methyl.

In einer weiteren hervorgehobenen Gruppe von erfindungsgemäß zu verwendenden Verbindungen (Ia) steht $G^1$ für N und $R^1$ für Methyl .

In einer weiteren hervorgehobenen Gruppe von erfindungsgemäß zu verwendenden Verbindungen (Ia) steht $G^1$ für C-Halogen und $R^1$ für Methyl.

In einer weiteren hervorgehobenen Gruppe von erfindungsgemäß zu verwendenden Verbindungen (Id) steht $G^1$ für CH und $R^1$ für Wasserstoff.

In einer weiteren hervorgehobenen Gruppe von erfindungsgemäß zu verwendenden Verbindungen (Id) steht $G^1$ für N und $R^1$ für Wasserstoff.

In einer weiteren hervorgehobenen Gruppe von erfindungsgemäß zu verwendenden Verbindungen (Id) steht $G^1$ für C-Halogen und $R^1$ für Wasserstoff.

In einer weiteren hervorgehobenen Gruppe von erfindungsgemäß zu verwendenden Verbindungen (Id) steht $G^1$ für CH und $R^1$ für Methyl.

In einer weiteren hervorgehobenen Gruppe von erfindungsgemäß zu verwendenden Verbindungen (Id) steht $G^1$ für N und $R^1$ für Methyl.

In einer weiteren hervorgehobenen Gruppe von erfindungsgemäß zu verwendenden Verbindungen (Id) steht $G^1$ für C-Halogen und $R^1$ für Methyl.

Die Verbindungen der allgemeinen Formel (I) können, gegebenenfalls in Abhängigkeit von der Art der Substituenten, als geometrische und/oder als optisch aktive Isomere oder entsprechende Isomerengemische in unterschiedlicher Zusammensetzung vorliegen. Die Erfindung betrifft sowohl die reinen Isomere als auch die Isomerengemische.

Im Einzelnen seien die aus WO 2010/006713 bekannten folgenden Verbindungen der Formel (I) genannt:

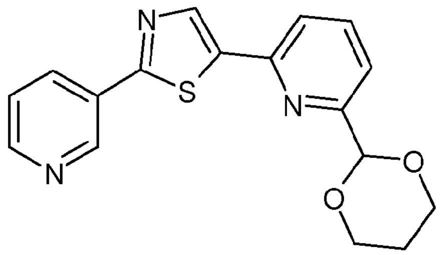

I-1 (Beispiel Nr. 203 in WO 2010/006713)

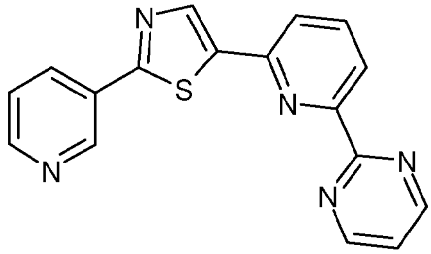

I-2 (Beispiel Nr.5 in WO 2010/006713)

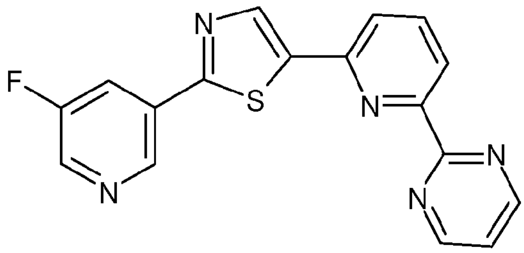

I-3 (Beispiel Nr.153 in WO 2010/006713)

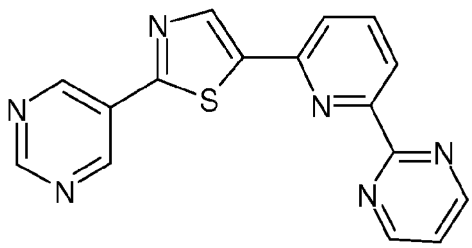

I-4 (Beispiel Nr.151 in WO 2010/006713)

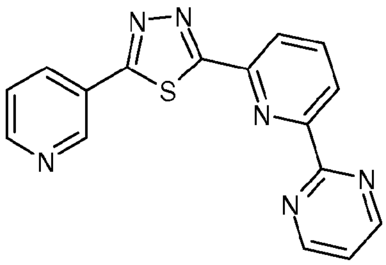

I-5 (Beispiel Nr.10 in WO 2010/006713).

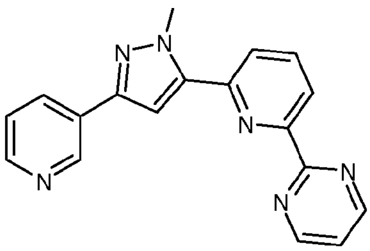

I I-6 (Beispiel Nr.191 in WO 2010/006713)

Bevorzugt enthalten die erfindungsgemäßen Wirkstoffkombinationen folgende Verbindungen der Formel (I):

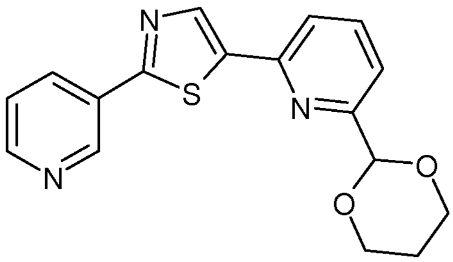

I-1

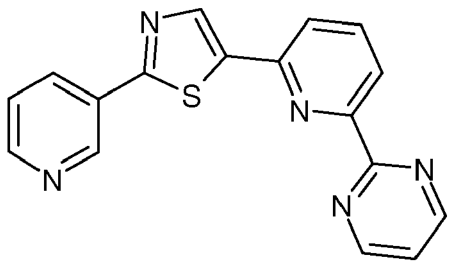

I-2

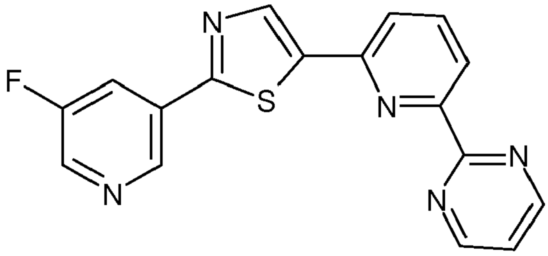

I-3

Überraschenderweise ist die insektizide und / oder akarizide Wirkung der erfindungsgemäßen Wirkstoffkombinationen wesentlich höher als die Summe der Wirkungen der einzelnen Wirkstoffe. Es liegt ein nicht vorhersehbarer echter synergistischer Effekt vor und nicht nur eine Wirkungsergänzung.

Bevorzugt sind Wirkstoffkombinationen enthaltend mindestens eine, insbesondere genau eine Verbindung der Formeln (I-1) bis (I-6) und mindestens einen, insbesondere genau einen Wirkstoff der Formel (II).

Besonders bevorzugt sind Wirkstoffkombinationen enthaltend mindestens eine, insbesondere genau eine Verbindung der Formeln (I-1) bis (I-3) und mindestens einen, insbesondere genau einen Wirkstoff der Formel (II).

Von besonderem Interesse sind folgende Kombinationen:

| | | | | | | | | |
|---|---|---|---|---|---|---|---|---|
| I-1 | + | II-1A-1 | I-1 | + | II-1A-32 | I-1 | + | II-1B-28 |
| I-1 | + | II-1A-2 | I-1 | + | II-1A-33 | I-1 | + | II-1B-29 |
| I-1 | + | II-1A-3 | I-1 | + | II-1A-34 | I-1 | + | II-1B-30 |
| I-1 | + | II-1A-4 | I-1 | + | II-1A-35 | I-1 | + | II-1B-31 |
| I-1 | + | II-1A-5 | I-1 | + | II-1B-1 | I-1 | + | II-1B-32 |
| I-1 | + | II-1A-6 | I-1 | + | II-1B-2 | I-1 | + | II-1B-33 |
| I-1 | + | II-1A-7 | I-1 | + | II-1B-3 | I-1 | + | II-1B-34 |
| I-1 | + | II-1A-8 | I-1 | + | II-1B-4 | I-1 | + | II-1B-35 |
| I-1 | + | II-1A-9 | I-1 | + | II-1B-5 | I-1 | + | II-1B-36 |
| I-1 | + | II-1A-10 | I-1 | + | II-1B-6 | I-1 | + | II-1B-37 |
| I-1 | + | II-1A-11 | I-1 | + | II-1B-7 | I-1 | + | II-1B-38 |
| I-1 | + | II-1A-12 | I-1 | + | II-1B-8 | I-1 | + | II-1B-39 |
| I-1 | + | II-1A-13 | I-1 | + | II-1B-9 | I-1 | + | II-1B-40 |
| I-1 | + | II-1A-14 | I-1 | + | II-1B-10 | I-1 | + | II-1B-41 |
| I-1 | + | II-1A-15 | I-1 | + | II-1B-11 | I-1 | + | II-1B-42 |
| I-1 | + | II-1A-16 | I-1 | + | II-1B-12 | I-1 | + | II-1B-43 |
| I-1 | + | II-1A-17 | I-1 | + | II-1B-13 | I-1 | + | II-1B-44 |
| I-1 | + | II-1A-18 | I-1 | + | II-1B-14 | I-1 | + | II-1B-45 |
| I-1 | + | II-1A-19 | I-1 | + | II-1B-15 | I-1 | + | II-1B-46 |
| I-1 | + | II-1A-20 | I-1 | + | II-1B-16 | I-1 | + | II-1B-47 |
| I-1 | + | II-1A-21 | I-1 | + | II-1B-17 | I-1 | + | II-1B-48 |
| I-1 | + | II-1A-22 | I-1 | + | II-1B-18 | I-1 | + | II-1B-49 |
| I-1 | + | II-1A-23 | I-1 | + | II-1B-19 | I-1 | + | II-1B-50 |
| I-1 | + | II-1A-24 | I-1 | + | II-1B-20 | I-1 | + | II-1B-51 |
| I-1 | + | II-1A-25 | I-1 | + | II-1B-21 | I-1 | + | II-1B-52 |
| I-1 | + | II-1A-26 | I-1 | + | II-1B-22 | I-1 | + | II-1B-53 |
| I-1 | + | II-1A-27 | I-1 | + | II-1B-23 | I-1 | + | II-1B-54 |
| I-1 | + | II-1A-28 | I-1 | + | II-1B-24 | I-1 | + | II-1B-55 |
| I-1 | + | II-1A-29 | I-1 | + | II-1B-25 | I-1 | + | II-1B-56 |
| I-1 | + | II-1A-30 | I-1 | + | II-1B-26 | I-1 | + | II-1B-57 |

(fortgesetzt)

| | | | | | | | | |
|---|---|---|---|---|---|---|---|---|
| I-1 | + | II-1A-31 | I-1 | + | II-1B-27 | I-1 | + | II-1B-58 |
| I-1 | + | II-1B-59 | I-1 | + | II-3-7 | I-1 | + | II-3-57 |
| I-1 | + | II-1B-60 | I-1 | + | II-3-8 | I-1 | + | II-3-58 |
| I-1 | + | II-1B-61 | I-1 | + | II-3-9 | I-1 | + | II-4A-1 |
| I-1 | + | II-1B-62 | I-1 | + | II-3-10 | I-1 | + | II-4A-2 |
| I-1 | + | II-1B-63 | I-1 | + | II-3-11 | I-1 | + | II-4A-3 |
| I-1 | + | II-1B-64 | I-1 | + | II-3-12 | I-1 | + | II-4A-4 |
| I-1 | + | II-1B-65 | I-1 | + | II-3-13 | I-1 | + | II-4A-5 |
| I-1 | + | II-1B-66 | I-1 | + | II-3-14 | I-1 | + | II-4A-6 |
| I-1 | + | II-1B-67 | I-1 | + | II-3-15 | I-1 | + | II-4A-7 |
| I-1 | + | II-1B-68 | I-1 | + | II-3-16 | I-1 | + | II-4A-8 |
| I-1 | + | II-1B-69 | I-1 | + | II-3-17 | I-1 | + | II-4A-9 |
| I-1 | + | II-1B-70 | I-1 | + | II-3-18 | I-1 | + | II-4B-1 |
| I-1 | + | II-1B-71 | I-1 | + | II-3-19 | I-1 | + | II-4B-2 |
| I-1 | + | II-1B-72 | I-1 | + | II-3-20 | I-1 | + | II-4B-3 |
| I-1 | + | II-1B-73 | I-1 | + | II-3-21 | I-1 | + | II-4B-4 |
| I-1 | + | II-1B-74 | I-1 | + | II-3-22 | I-1 | + | II-4C-4 |
| I-1 | + | II-1B-75 | I-1 | + | II-3-23 | I-1 | + | II-5-1 |
| I-1 | + | II-1B-76 | I-1 | + | II-3-24 | I-1 | + | II-5-2 |
| I-1 | + | II-1B-77 | I-1 | + | II-3-25 | I-1 | + | II-6-1 |
| I-1 | + | II-1B-78 | I-1 | + | II-3-26 | I-1 | + | II-6-2 |
| I-1 | + | II-1B-79 | I-1 | + | II-3-27 | I-1 | + | II-6-3 |
| I-1 | + | II-1B-80 | I-1 | + | II-3-28 | I-1 | + | II-6-4 |
| I-1 | + | II-1B-81 | I-1 | + | II-3-29 | I-1 | + | II-6-5 |
| I-1 | + | II-1B-82 | I-1 | + | II-3-30 | I-1 | + | II-6-6 |
| I-1 | + | II-1B-83 | I-1 | + | II-3-31 | I-1 | + | II-7A-1 |
| I-1 | + | II-1B-84 | I-1 | + | II-3-32 | I-1 | + | II-7A-2 |
| I-1 | + | II-1B-85 | I-1 | + | II-3-33 | I-1 | + | II-7A-3 |
| I-1 | + | II-1B-86 | I-1 | + | II-3-34 | I-1 | + | II-7A-4 |
| I-1 | + | II-1B-87 | I-1 | + | II-3-35 | I-1 | + | II-7A-5 |
| I-1 | + | II-1B-88 | I-1 | + | II-3-36 | I-1 | + | II-7B-1 |
| I-1 | + | II-2A-1 | I-1 | + | II-3-37 | I-1 | + | II-7C-1 |
| I-1 | + | II-2A-2 | I-1 | + | II-3-38 | I-1 | + | II-7C-2 |
| I-1 | + | II-2A-3 | I-1 | + | II-3-39 | I-1 | + | II-8A-1 |
| I-1 | + | II-2A-4 | I-1 | + | II-3-40 | I-1 | + | II-8B-1 |
| I-1 | + | II-2A-5 | I-1 | + | II-3-41 | I-1 | + | II-8C-1 |
| I-1 | + | II-2A-6 | I-1 | + | II-3-42 | I-1 | + | II-9A-1 |
| I-1 | + | II-2A-7 | I-1 | + | II-3-43 | I-1 | + | II-9B-1 |
| I-1 | + | II-2A-8 | I-1 | + | II-3-44 | I-1 | + | II-9B-2 |
| I-1 | + | II-2B-1 | I-1 | + | II-3-45 | I-1 | + | II-9C-1 |
| I-1 | + | II-2B-2 | I-1 | + | II-3-46 | I-1 | + | II-10A-1 |
| I-1 | + | II-2B-3 | I-1 | + | II-3-47 | I-1 | + | II-10A-2 |
| I-1 | + | II-2B-4 | I-1 | + | II-3-48 | I-1 | + | II-10B-1 |
| I-1 | + | II-2B-5 | I-1 | + | II-3-49 | I-1 | + | II-12A-1 |
| I-1 | + | II-2B-6 | I-1 | + | II-3-50 | I-1 | + | II-12B-1 |
| I-1 | + | II-3-1 | I-1 | + | II-3-51 | I-1 | + | II-12B-2 |
| I-1 | + | II-3-2 | I-1 | + | II-3-52 | I-1 | + | II-12B-3 |
| I-1 | + | II-3-3 | I-1 | + | II-3-53 | I-1 | + | II-12C-1 |
| I-1 | + | II-3-4 | I-1 | + | II-3-54 | I-1 | + | II-12C-2 |
| I-1 | + | II-3-5 | I-1 | + | II-3-55 | I-1 | + | II-13-1 |
| I-1 | + | II-3-6 | I-1 | + | II-3-56 | I-1 | + | II-13-2 |

(fortgesetzt)

| | | | | | | | | |
|---|---|---|---|---|---|---|---|---|
| I-1 | + | II-13-3 | I-1 | + | II-29-3 | I-2 | + | II-1A-21 |
| I-1 | + | II-13-4 | I-1 | + | II-29-4 | I-2 | + | II-1A-22 |
| I-1 | + | II-13-5 | I-1 | + | II-29-5 | I-2 | + | II-1A-23 |
| I-1 | + | II-13-6 | I-1 | + | II-29-6 | I-2 | + | II-1A-24 |
| I-1 | + | II-15-1 | I-1 | + | II-29-7 | I-2 | + | II-1A-25 |
| I-1 | + | II-15-2 | I-1 | + | II-29-8 | I-2 | + | II-1A-26 |
| I-1 | + | II-15-3 | I-1 | + | II-29-9 | I-2 | + | II-1A-27 |
| I-1 | + | II-15-4 | I-1 | + | II-29-10 | I-2 | + | II-1A-28 |
| I-1 | + | II-15-5 | I-1 | + | II-29-11 | I-2 | + | II-1A-29 |
| I-1 | + | II-15-6 | I-1 | + | II-29-12 | I-2 | + | II-1A-30 |
| I-1 | + | II-15-7 | I-1 | + | II-29-13 | I-2 | + | II-1A-31 |
| I-1 | + | II-15-8 | I-1 | + | II-29-14 | I-2 | + | II-1A-32 |
| I-1 | + | II-15-9 | I-1 | + | II-29-15 | I-2 | + | II-1A-33 |
| I-1 | + | II-15-10 | I-1 | + | II-29-16 | I-2 | + | II-1A-34 |
| I-1 | + | II-15-11 | I-1 | + | II-29-17 | I-2 | + | II-1A-35 |
| I-1 | + | II-15-12 | I-1 | + | II-29-18 | I-2 | + | II-1B-1 |
| I-1 | + | II-15-13 | I-1 | + | II-29-19 | I-2 | + | II-1B-2 |
| I-1 | + | II-16-1 | I-1 | + | II-29-20 | I-2 | + | II-1B-3 |
| I-1 | + | II-17-1 | I-1 | + | II-29-21 | I-2 | + | II-1B-4 |
| I-1 | + | II-18A-1 | I-1 | + | II-29-22 | I-2 | + | II-1B-5 |
| I-1 | + | II-18A-2 | I-1 | + | II-29-23 | I-2 | + | II-1B-6 |
| I-1 | + | II-18A-3 | I-1 | + | II-29-24 | I-2 | + | II-1B-7 |
| I-1 | + | II-18A-4 | I-1 | + | II-29-25 | I-2 | + | II-1B-8 |
| I-1 | + | II-18A-5 | I-1 | + | II-29-26 | I-2 | + | II-1B-9 |
| I-1 | + | II-18B-1 | I-1 | + | II-29-27 | I-2 | + | II-1B-10 |
| I-1 | + | II-19-1 | I-1 | + | II-29-28 | I-2 | + | II-1B-11 |
| I-1 | + | II-20A-1 | I-1 | + | II-29-29 | I-2 | + | II-1B-12 |
| I-1 | + | II-20B-1 | I-1 | + | II-29-30 | I-2 | + | II-1B-13 |
| I-1 | + | II-20C-1 | I-1 | + | II-29-31 | I-2 | + | II-1B-14 |
| I-1 | + | II-20D-1 | I-1 | + | II-29-32 | I-2 | + | II-1B-15 |
| I-1 | + | II-20D-2 | I-2 | + | II-1A-1 | I-2 | + | II-1B-16 |
| I-1 | + | II-21-1 | I-2 | + | II-1A-2 | I-2 | + | II-1B-17 |
| I-1 | + | II-21-2 | I-2 | + | II-1A-3 | I-2 | + | II-1B-18 |
| I-1 | + | II-21-3 | I-2 | + | II-1A-4 | I-2 | + | II-1B-19 |
| I-1 | + | II-21-4 | I-2 | + | II-1A-5 | I-2 | + | II-1B-20 |
| I-1 | + | II-21-5 | I-2 | + | II-1A-6 | I-2 | + | II-1B-21 |
| I-1 | + | II-21-6 | I-2 | + | II-1A-7 | I-2 | + | II-1B-22 |
| I-1 | + | II-21-7 | I-2 | + | II-1A-8 | I-2 | + | II-1B-23 |
| I-1 | + | II-22A-1 | I-2 | + | II-1A-9 | I-2 | + | II-1B-24 |
| I-1 | + | II-22B-1 | I-2 | + | II-1A-10 | I-2 | + | II-1B-25 |
| I-1 | + | II-23A-1 | I-2 | + | II-1A-11 | I-2 | + | II-1B-26 |
| I-1 | + | II-23A-2 | I-2 | + | II-1A-12 | I-2 | + | II-1B-27 |
| I-1 | + | II-23B-1 | I-2 | + | II-1A-13 | I-2 | + | II-1B-28 |
| I-1 | + | II-25-1 | I-2 | | II-1A-14 | I-2 | + | II-1B-29 |
| I-1 | + | II-28-1 | I-2 | + | II-1A-15 | I-2 | + | II-1B-30 |
| I-1 | + | II-28-2 | I-2 | + | II-1A-16 | I-2 | + | II-1B-31 |
| I-1 | + | II-28-3 | I-2 | + | II-1A-17 | I-2 | + | II-1B-32 |
| I-1 | + | II-28-4 | I-2 | + | II-1A-18 | I-2 | + | II-1B-33 |
| I-1 | + | II-29-1 | I-2 | + | II-1A-19 | I-2 | + | II-1B-34 |
| I-1 | + | II-29-2 | I-2 | + | II-1A-20 | I-2 | + | II-1B-35 |
| I-2 | + | II-1B-36 | I-2 | + | II-1B-86 | I-2 | + | II-3-34 |

(fortgesetzt)

| | | | | | | | | |
|---|---|---|---|---|---|---|---|---|
| I-2 | + | II-1B-37 | I-2 | + | II-1B-87 | I-2 | + | II-3-35 |
| I-2 | + | II-1B-38 | I-2 | + | II-1B-88 | I-2 | + | II-3-36 |
| I-2 | + | II-1B-39 | I-2 | + | II-2A-1 | I-2 | + | II-3-37 |
| I-2 | + | II-1B-40 | I-2 | + | II-2A-2 | I-2 | + | II-3-38 |
| I-2 | + | II-1B-41 | I-2 | + | II-2A-3 | I-2 | + | II-3-39 |
| I-2 | + | II-1B-42 | I-2 | + | II-2A-4 | I-2 | + | II-3-40 |
| I-2 | + | II-1B-43 | I-2 | + | II-2A-5 | I-2 | + | II-3-41 |
| I-2 | + | II-1B-44 | I-2 | + | II-2A-6 | I-2 | + | II-3-42 |
| I-2 | + | II-1B-45 | I-2 | + | II-2A-7 | I-2 | + | II-3-43 |
| I-2 | + | II-1B-46 | I-2 | + | II-2A-8 | I-2 | + | II-3-44 |
| I-2 | + | II-1B-47 | I-2 | + | II-2B-1 | I-2 | + | II-3-45 |
| I-2 | + | II-1B-48 | I-2 | + | II-2B-2 | I-2 | + | II-3-46 |
| I-2 | + | II-1B-49 | I-2 | + | II-2B-3 | I-2 | + | II-3-47 |
| I-2 | + | II-1B-50 | I-2 | + | II-2B-4 | I-2 | + | II-3-48 |
| I-2 | + | II-1B-51 | I-2 | + | II-2B-5 | I-2 | + | II-3-49 |
| I-2 | + | II-1B-52 | I-2 | + | II-2B-6 | I-2 | + | II-3-50 |
| I-2 | + | II-1B-53 | I-2 | + | II-3-1 | I-2 | + | II-3-51 |
| I-2 | + | II-1B-54 | I-2 | + | II-3-2 | I-2 | + | II-3-52 |
| I-2 | + | II-1B-55 | I-2 | + | II-3-3 | I-2 | + | II-3-53 |
| I-2 | + | II-1B-56 | I-2 | + | II-3-4 | I-2 | + | II-3-54 |
| I-2 | + | II-1B-57 | I-2 | + | II-3-5 | I-2 | + | II-3-55 |
| I-2 | + | II-1B-58 | I-2 | + | II-3-6 | I-2 | + | II-3-56 |
| I-2 | + | II-1B-59 | I-2 | + | II-3-7 | I-2 | + | II-3-57 |
| I-2 | + | II-1B-60 | I-2 | + | II-3-8 | I-2 | + | II-3-58 |
| I-2 | + | II-1B-61 | I-2 | + | II-3-9 | I-2 | + | II-4A-1 |
| I-2 | + | II-1B-62 | I-2 | + | II-3-10 | I-2 | + | II-4A-2 |
| I-2 | + | II-1B-63 | I-2 | + | II-3-11 | I-2 | + | II-4A-3 |
| I-2 | + | II-1B-64 | I-2 | + | II-3-12 | I-2 | + | II-4A-4 |
| I-2 | + | II-1B-65 | I-2 | + | II-3-13 | I-2 | + | II-4A-5 |
| I-2 | + | II-1B-66 | I-2 | + | II-3-14 | I-2 | + | II-4A-6 |
| I-2 | + | II-1B-67 | I-2 | + | II-3-15 | I-2 | + | II-4A-7 |
| I-2 | + | II-1B-68 | I-2 | + | II-3-16 | I-2 | + | II-4A-8 |
| I-2 | + | II-1B-69 | I-2 | + | II-3-17 | I-2 | + | II-4A-9 |
| I-2 | + | II-1B-70 | I-2 | + | II-3-18 | I-2 | + | II-4B-1 |
| I-2 | + | II-1B-71 | I-2 | + | II-3-19 | I-2 | + | II-4B-2 |
| I-2 | + | II-1B-72 | I-2 | + | II-3-20 | I-2 | + | II-4B-3 |
| I-2 | + | II-1B-73 | I-2 | + | II-3-21 | I-2 | + | II-4B-4 |
| I-2 | + | II-1B-74 | I-2 | + | II-3-22 | I-2 | + | II-4C-4 |
| I-2 | + | II-1B-75 | I-2 | + | II-3-23 | I-2 | + | II-5-1 |
| I-2 | + | II-1B-76 | I-2 | + | II-3-24 | I-2 | + | II-5-2 |
| I-2 | + | II-1B-77 | I-2 | + | II-3-25 | I-2 | + | II-6-1 |
| I-2 | + | II-1B-78 | I-2 | + | II-3-26 | I-2 | + | II-6-2 |
| I-2 | + | II-1B-79 | I-2 | + | II-3-27 | I-2 | + | II-6-3 |
| I-2 | + | II-1B-80 | I-2 | + | II-3-28 | I-2 | + | II-6-4 |
| I-2 | + | II-1B-81 | I-2 | + | II-3-29 | I-2 | + | II-6-5 |
| I-2 | + | II-1B-82 | I-2 | + | II-3-30 | I-2 | + | II-6-6 |
| I-2 | + | II-1B-83 | I-2 | + | II-3-31 | I-2 | + | II-7A-1 |
| I-2 | + | II-1B-84 | I-2 | + | II-3-32 | I-2 | + | II-7A-2 |
| I-2 | + | II-1B-85 | I-2 | + | II-3-33 | I-2 | + | II-7A-3 |
| I-2 | + | II-7A-4 | I-2 | + | II-20B-1 | I-2 | + | II-29-30 |
| I-2 | + | II-7A-5 | I-2 | + | II-20C-1 | I-2 | + | II-29-31 |

(fortgesetzt)

| | | | | | | | | |
|---|---|---|---|---|---|---|---|---|
| I-2 | + | II-7B-1 | I-2 | + | II-20D-1 | I-2 | + | II-29-32 |
| I-2 | + | II-7C-1 | I-2 | + | II-20D-2 | I-3 | + | II-1A-1 |
| I-2 | + | II-7C-2 | I-2 | + | II-21-1 | I-3 | + | II-1A-2 |
| I-2 | + | II-8A-1 | I-2 | + | II-21-2 | I-3 | + | II-1A-3 |
| I-2 | + | II-8B-1 | I-2 | + | II-21-3 | I-3 | + | II-1A-4 |
| I-2 | + | II-8C-1 | I-2 | + | II-21-4 | I-3 | + | II-1A-5 |
| I-2 | + | II-9A-1 | I-2 | + | II-21-5 | I-3 | + | II-1A-6 |
| I-2 | + | II-9B-1 | I-2 | + | II-21-6 | I-3 | + | II-1A-7 |
| I-2 | + | II-9B-2 | I-2 | + | II-21-7 | I-3 | + | II-1A-8 |
| I-2 | + | II-9C-1 | I-2 | + | II-22A-1 | I-3 | + | II-1A-9 |
| I-2 | + | II-10A-1 | I-2 | + | II-22B-1 | I-3 | + | II-1A-10 |
| I-2 | + | II-10A-2 | I-2 | + | II-23A-1 | I-3 | + | II-1A-11 |
| I-2 | + | II-10B-1 | I-2 | + | II-23A-2 | I-3 | + | II-1A-12 |
| I-2 | + | II-12A-1 | I-2 | + | II-23B-1 | I-3 | + | II-1A-13 |
| I-2 | + | II-12B-1 | I-2 | + | II-25-1 | I-3 | + | II-1A-14 |
| I-2 | + | II-12B-2 | I-2 | + | II-28-1 | I-3 | + | II-1A-15 |
| I-2 | + | II-12B-3 | I-2 | + | II-28-2 | I-3 | + | II-1A-16 |
| I-2 | + | II-12C-1 | I-2 | + | II-28-3 | I-3 | + | II-1A-17 |
| I-2 | + | II-12C-2 | I-2 | + | II-28-4 | I-3 | + | II-1A-18 |
| I-2 | + | II-13-1 | I-2 | + | II-29-1 | I-3 | + | II-1A-19 |
| I-2 | + | II-13-2 | I-2 | + | II-29-2 | I-3 | + | II-1A-20 |
| I-2 | + | II-13-3 | I-2 | + | II-29-3 | I-3 | + | II-1A-21 |
| I-2 | + | II-13-4 | I-2 | + | II-29-4 | I-3 | + | II-1A-22 |
| I-2 | + | II-13-5 | I-2 | + | II-29-5 | I-3 | + | II-1A-23 |
| I-2 | + | II-13-6 | I-2 | + | II-29-6 | I-3 | + | II-1A-24 |
| I-2 | + | II-15-1 | I-2 | + | II-29-7 | I-3 | + | II-1A-25 |
| I-2 | + | II-15-2 | I-2 | + | II-29-8 | I-3 | + | II-1A-26 |
| I-2 | + | II-15-3 | I-2 | + | II-29-9 | I-3 | + | II-1A-27 |
| I-2 | + | II-15-4 | I-2 | + | II-29-10 | I-3 | + | II-1A-28 |
| I-2 | + | II-15-5 | I-2 | + | II-29-11 | I-3 | + | II-1A-29 |
| I-2 | + | II-15-6 | I-2 | + | II-29-12 | I-3 | + | II-1A-30 |
| I-2 | + | II-15-7 | I-2 | + | II-29-13 | I-3 | + | II-1A-31 |
| I-2 | + | II-15-8 | I-2 | + | II-29-14 | I-3 | + | II-1A-32 |
| I-2 | + | II-15-9 | I-2 | + | II-29-15 | I-3 | + | II-1A-33 |
| I-2 | + | II-15-10 | I-2 | + | II-29-16 | I-3 | + | II-1A-34 |
| I-2 | + | II-15-11 | I-2 | + | II-29-17 | I-3 | + | II-1A-35 |
| I-2 | + | II-15-12 | I-2 | + | II-29-18 | I-3 | + | II-1B-1 |
| I-2 | + | II-15-13 | I-2 | + | II-29-19 | I-3 | + | II-1B-2 |
| I-2 | + | II-16-1 | I-2 | + | II-29-20 | I-3 | + | II-1B-3 |
| I-2 | + | II-17-1 | I-2 | + | II-29-21 | I-3 | + | II-1B-4 |
| I-2 | + | II-18A-1 | I-2 | + | II-29-22 | I-3 | + | II-1B-5 |
| I-2 | + | II-18A-2 | I-2 | + | II-29-23 | I-3 | + | II-1B-6 |
| I-2 | + | II-18A-3 | I-2 | + | II-29-24 | I-3 | + | II-1B-7 |
| I-2 | + | II-18A-4 | I-2 | + | II-29-25 | I-3 | + | II-1B-8 |
| I-2 | + | II-18A-5 | I-2 | + | II-29-26 | I-3 | + | II-1B-9 |
| I-2 | + | II-18B-1 | I-2 | + | II-29-27 | I-3 | + | II-1B-10 |
| I-2 | + | II-19-1 | I-2 | + | II-29-28 | I-3 | + | II-1B-11 |
| I-2 | + | II-20A-1 | I-2 | + | II-29-29 | I-3 | + | II-1B-12 |
| I-3 | + | II-1B-13 | I-3 | + | II-1B-63 | I-3 | + | II-3-11 |
| I-3 | + | II-1B-14 | I-3 | + | II-1B-64 | I-3 | + | II-3-12 |
| I-3 | + | II-1B-15 | I-3 | + | II-1B-65 | I-3 | + | II-3-13 |

(fortgesetzt)

| | | | | | | | | |
|---|---|---|---|---|---|---|---|---|
| I-3 | + | II-1B-16 | I-3 | + | II-1B-66 | I-3 | + | II-3-14 |
| I-3 | + | II-1B-17 | I-3 | + | II-1B-67 | I-3 | + | II-3-15 |
| I-3 | + | II-1B-18 | I-3 | + | II-1B-68 | I-3 | + | II-3-16 |
| I-3 | + | II-1B-19 | I-3 | + | II-1B-69 | I-3 | + | II-3-17 |
| I-3 | + | II-1B-20 | I-3 | + | II-1B-70 | I-3 | + | II-3-18 |
| I-3 | + | II-1B-21 | I-3 | + | II-1B-71 | I-3 | + | II-3-19 |
| I-3 | + | II-1B-22 | I-3 | + | II-1B-72 | I-3 | + | II-3-20 |
| I-3 | + | II-1B-23 | I-3 | + | II-1B-73 | I-3 | + | II-3-21 |
| I-3 | + | II-1B-24 | I-3 | + | II-1B-74 | I-3 | + | II-3-22 |
| I-3 | + | II-1B-25 | I-3 | + | II-1B-75 | I-3 | + | II-3-23 |
| I-3 | + | II-1B-26 | I-3 | + | II-1B-76 | I-3 | + | II-3-24 |
| I-3 | + | II-1B-27 | I-3 | + | II-1B-77 | I-3 | + | II-3-25 |
| I-3 | + | II-1B-28 | I-3 | + | II-1B-78 | I-3 | + | II-3-26 |
| I-3 | + | II-1B-29 | I-3 | + | II-1B-79 | I-3 | + | II-3-27 |
| I-3 | + | II-1B-30 | I-3 | + | II-1B-80 | I-3 | + | II-3-28 |
| I-3 | + | II-1B-31 | I-3 | + | II-1B-81 | I-3 | + | II-3-29 |
| I-3 | + | II-1B-32 | I-3 | + | II-1B-82 | I-3 | + | II-3-30 |
| I-3 | + | II-1B-33 | I-3 | + | II-1B-83 | I-3 | + | II-3-31 |
| I-3 | + | II-1B-34 | I-3 | + | II-1B-84 | I-3 | + | II-3-32 |
| I-3 | + | II-1B-35 | I-3 | + | II-1B-85 | I-3 | + | II-3-33 |
| I-3 | + | II-1B-36 | I-3 | + | II-1B-86 | I-3 | + | II-3-34 |
| I-3 | + | II-1B-37 | I-3 | + | II-1B-87 | I-3 | + | II-3-35 |
| I-3 | + | II-1B-38 | I-3 | + | II-1B-88 | I-3 | + | II-3-36 |
| I-3 | + | II-1B-39 | I-3 | + | II-2A-1 | I-3 | + | II-3-37 |
| I-3 | + | II-1B-40 | I-3 | + | II-2A-2 | I-3 | + | II-3-38 |
| I-3 | + | II-1B-41 | I-3 | + | II-2A-3 | I-3 | + | II-3-39 |
| I-3 | + | II-1B-42 | I-3 | + | II-2A-4 | I-3 | + | II-3-40 |
| I-3 | + | II-1B-43 | I-3 | + | II-2A-5 | I-3 | + | II-3-41 |
| I-3 | + | II-1B-44 | I-3 | + | II-2A-6 | I-3 | + | II-3-42 |
| I-3 | + | II-1B-45 | I-3 | + | II-2A-7 | I-3 | + | II-3-43 |
| I-3 | + | II-1B-46 | I-3 | + | II-2A-8 | I-3 | + | II-3-44 |
| I-3 | + | II-1B-47 | I-3 | + | II-2B-1 | I-3 | + | II-3-45 |
| I-3 | + | II-1B-48 | I-3 | + | II-2B-2 | I-3 | + | II-3-46 |
| I-3 | + | II-1B-49 | I-3 | + | II-2B-3 | I-3 | + | II-3-47 |
| I-3 | + | II-1B-50 | I-3 | + | II-2B-4 | I-3 | + | II-3-48 |
| I-3 | + | II-1B-51 | I-3 | + | II-2B-5 | I-3 | + | II-3-49 |
| I-3 | + | II-1B-52 | I-3 | + | II-2B-6 | I-3 | + | II-3-50 |
| I-3 | + | II-1B-53 | I-3 | + | II-3-1 | I-3 | + | II-3-51 |
| I-3 | + | II-1B-54 | I-3 | + | II-3-2 | I-3 | + | II-3-52 |
| I-3 | + | II-1B-55 | I-3 | + | II-3-3 | I-3 | + | II-3-53 |
| I-3 | + | II-1B-56 | I-3 | + | II-3-4 | I-3 | + | II-3-54 |
| I-3 | + | II-1B-57 | I-3 | + | II-3-5 | I-3 | + | II-3-55 |
| I-3 | + | II-1B-58 | I-3 | + | II-3-6 | I-3 | + | II-3-56 |
| I-3 | + | II-1B-59 | I-3 | + | II-3-7 | I-3 | + | II-3-57 |
| I-3 | + | II-1B-60 | I-3 | + | II-3-8 | I-3 | + | II-3-58 |
| I-3 | + | II-1B-61 | I-3 | + | II-3-9 | I-3 | + | II-4A-1 |
| I-3 | + | II-1B-62 | I-3 | + | II-3-10 | I-3 | + | II-4A-2 |
| I-3 | + | II-4A-3 | I-3 | + | 11-15-1 | I-3 | + | II-29-7 |
| I-3 | + | II-4A-4 | I-3 | + | II-15-2 | I-3 | + | II-29-8 |
| I-3 | + | II-4A-5 | I-3 | + | II-15-3 | I-3 | + | II-29-9 |
| I-3 | + | II-4A-6 | I-3 | + | II-15-4 | I-3 | + | II-29-10 |

(fortgesetzt)

| | | | | | | | | |
|---|---|---|---|---|---|---|---|---|
| I-3 | + | II-4A-7 | I-3 | + | II-15-5 | I-3 | + | II-29-11 |
| I-3 | + | II-4A-8 | I-3 | + | II-15-6 | I-3 | + | II-29-12 |
| I-3 | + | II-4A-9 | I-3 | + | II-15-7 | I-3 | + | II-29-13 |
| I-3 | + | II-4B-1 | I-3 | + | II-15-8 | I-3 | + | II-29-14 |
| I-3 | + | II-4B-2 | I-3 | + | II-15-9 | I-3 | + | II-29-15 |
| I-3 | + | II-4B-3 | I-3 | + | II-15-10 | I-3 | + | II-29-16 |
| I-3 | + | II-4B-4 | I-3 | + | II-15-11 | I-3 | + | II-29-17 |
| I-3 | + | II-4C-4 | I-3 | + | II-15-12 | I-3 | + | 11-29-18 |
| I-3 | + | II-5-1 | I-3 | + | II-15-13 | I-3 | + | II-29-19 |
| I-3 | + | II-5-2 | I-3 | + | II-16-1 | I-3 | + | II-29-20 |
| I-3 | + | II-6-1 | I-3 | + | II-17-1 | I-3 | + | II-29-21 |
| I-3 | + | II-6-2 | I-3 | + | II-18A-1 | I-3 | + | II-29-22 |
| I-3 | + | II-6-3 | I-3 | + | II-18A-2 | I-3 | + | II-29-23 |
| I-3 | + | II-6-4 | I-3 | + | II-18A-3 | I-3 | + | II-29-24 |
| I-3 | + | II-6-5 | I-3 | + | II-18A-4 | I-3 | + | II-29-25 |
| I-3 | + | II-6-6 | I-3 | + | II-18A-5 | I-3 | + | II-29-26 |
| I-3 | + | II-7A-1 | I-3 | + | II-18B-1 | I-3 | + | II-29-27 |
| I-3 | + | II-7A-2 | I-3 | + | II-19-1 | I-3 | + | II-29-28 |
| I-3 | + | II-7A-3 | I-3 | + | II-20A-1 | I-3 | + | II-29-29 |
| I-3 | + | II-7A-4 | I-3 | + | II-20B-1 | I-3 | + | II-29-30 |
| I-3 | + | II-7A-5 | I-3 | + | II-20C-1 | I-3 | + | II-29-31 |
| I-3 | + | II-7B-1 | I-3 | + | II-20D-1 | I-3 | + | II-29-32 |
| I-3 | + | II-7C-1 | I-3 | + | II-20D-2 | I-4 | + | II-1A-1 |
| I-3 | + | II-7C-2 | I-3 | + | II-21-1 | I-4 | + | II-1A-2 |
| I-3 | + | II-8A-1 | I-3 | + | II-21-2 | I-4 | + | II-1A-3 |
| I-3 | + | II-8B-1 | I-3 | + | II-21-3 | I-4 | + | II-1A-4 |
| I-3 | + | II-8C-1 | I-3 | + | II-21-4 | I-4 | + | II-1A-5 |
| I-3 | + | II-9A-1 | I-3 | + | II-21-5 | I-4 | + | II-1A-6 |
| I-3 | + | II-9B-1 | I-3 | + | II-21-6 | I-4 | + | II-1A-7 |
| I-3 | + | II-9B-2 | I-3 | + | II-21-7 | I-4 | + | II-1A-8 |
| I-3 | + | II-9C-1 | I-3 | + | II-22A-1 | I-4 | + | II-1A-9 |
| I-3 | + | II-10A-1 | I-3 | + | II-22B-1 | I-4 | + | II-1A-10 |
| I-3 | + | II-10A-2 | I-3 | + | II-23A-1 | I-4 | + | II-1A-11 |
| I-3 | + | II-10B-1 | I-3 | + | II-23A-2 | I-4 | + | II-1A-12 |
| I-3 | + | II-12A-1 | I-3 | + | II-23B-1 | I-4 | + | II-1A-13 |
| I-3 | + | II-12B-1 | I-3 | + | II-25-1 | I-4 | + | II-1A-14 |
| I-3 | + | II-12B-2 | I-3 | + | II-28-1 | I-4 | + | II-1A-15 |
| I-3 | + | II-12B-3 | I-3 | + | II-28-2 | I-4 | + | II-1A-16 |
| I-3 | + | II-12C-1 | I-3 | + | II-28-3 | I-4 | + | II-1A-17 |
| I-3 | + | II-12C-2 | I-3 | + | II-28-4 | I-4 | + | II-1A-18 |
| I-3 | + | 11-13-1 | I-3 | + | II-29-1 | I-4 | + | II-1A-19 |
| I-3 | + | II-13-2 | I-3 | + | II-29-2 | I-4 | + | II-1A-20 |
| I-3 | + | II-13-3 | I-3 | + | II-29-3 | I-4 | + | II-1A-21 |
| 1-3 | + | II-13-4 | I-3 | + | II-29-4 | I-4 | + | II-1A-22 |
| 1-3 | + | II-13-5 | I-3 | + | II-29-5 | I-4 | + | II-1A-23 |
| 1-3 | + | II-13-6 | I-3 | + | II-29-6 | I-4 | + | II-1A-24 |
| I-4 | + | II-1A-25 | I-4 | + | II-1B-40 | I-4 | + | II-2A-2 |
| I-4 | + | II-1A-26 | I-4 | + | II-1B-41 | I-4 | + | II-2A-3 |
| I-4 | + | II-1A-27 | I-4 | + | II-1B-42 | I-4 | + | II-2A-4 |
| I-4 | + | II-1A-28 | I-4 | + | II-1B-43 | I-4 | + | II-2A-5 |
| I-4 | + | II-1A-29 | I-4 | + | II-1B-44 | I-4 | + | II-2A-6 |

(fortgesetzt)

| | | | | | | | | |
|---|---|---|---|---|---|---|---|---|
| I-4 | + | II-1A-30 | I-4 | + | II-1B-45 | I-4 | + | II-2A-7 |
| I-4 | + | II-1A-31 | I-4 | + | II-1B-46 | I-4 | + | II-2A-8 |
| I-4 | + | II-1A-32 | I-4 | + | II-1B-47 | I-4 | + | II-2B-1 |
| I-4 | + | II-1A-33 | I-4 | + | II-1B-48 | I-4 | + | II-2B-2 |
| I-4 | + | II-1A-34 | I-4 | + | II-1B-49 | I-4 | + | II-2B-3 |
| I-4 | + | II-1A-35 | I-4 | + | II-1B-50 | I-4 | + | II-2B-4 |
| I-4 | + | II-1B-1 | I-4 | + | II-1B-51 | I-4 | + | II-2B-5 |
| I-4 | + | II-1B-2 | I-4 | + | II-1B-52 | I-4 | + | II-2B-6 |
| I-4 | + | II-1B-3 | I-4 | + | II-1B-53 | I-4 | + | II-3-1 |
| I-4 | + | II-1B-4 | I-4 | + | II-1B-54 | I-4 | + | II-3-2 |
| I-4 | + | II-1B-5 | I-4 | + | II-1B-55 | I-4 | + | II-3-3 |
| I-4 | + | II-1B-6 | I-4 | + | II-1B-56 | I-4 | + | II-3-4 |
| I-4 | + | II-1B-7 | I-4 | + | II-1B-57 | I-4 | + | II-3-5 |
| I-4 | + | II-1B-8 | I-4 | + | II-1B-58 | I-4 | + | II-3-6 |
| I-4 | + | II-1B-9 | I-4 | + | II-1B-59 | I-4 | + | II-3-7 |
| I-4 | + | II-1B-10 | I-4 | + | II-1B-60 | I-4 | + | II-3-8 |
| I-4 | + | II-1B-11 | I-4 | + | II-1B-61 | I-4 | + | II-3-9 |
| I-4 | + | II-1B-12 | I-4 | + | II-1B-62 | I-4 | + | II-3-10 |
| I-4 | + | II-1B-13 | I-4 | + | II-1B-63 | I-4 | + | II-3-11 |
| I-4 | + | II-1B-14 | I-4 | + | II-1B-64 | I-4 | + | II-3-12 |
| I-4 | + | II-1B-15 | I-4 | + | II-1B-65 | I-4 | + | II-3-13 |
| I-4 | + | II-1B-16 | I-4 | + | II-1B-66 | I-4 | + | II-3-14 |
| I-4 | + | II-1B-17 | I-4 | + | II-1B-67 | I-4 | + | II-3-15 |
| I-4 | + | II-1B-18 | I-4 | + | II-1B-68 | I-4 | + | II-3-16 |
| I-4 | + | II-1B-19 | I-4 | + | II-1B-69 | I-4 | + | II-3-17 |
| I-4 | + | II-1B-20 | I-4 | + | II-1B-70 | I-4 | + | II-3-18 |
| I-4 | + | II-1B-21 | I-4 | + | II-1B-71 | I-4 | + | II-3-19 |
| I-4 | + | II-1B-22 | I-4 | + | II-1B-72 | I-4 | + | II-3-20 |
| I-4 | + | II-1B-23 | I-4 | + | II-1B-73 | I-4 | + | II-3-21 |
| I-4 | + | II-1B-24 | I-4 | + | II-1B-74 | I-4 | + | II-3-22 |
| I-4 | + | II-1B-25 | I-4 | + | II-1B-75 | I-4 | + | II-3-23 |
| I-4 | + | II-1B-26 | I-4 | + | II-1B-76 | I-4 | + | II-3-24 |
| I-4 | + | II-1B-27 | I-4 | + | II-1B-77 | I-4 | + | II-3-25 |
| I-4 | + | II-1B-28 | I-4 | + | II-1B-78 | I-4 | + | II-3-26 |
| I-4 | + | II-1B-29 | I-4 | + | II-1B-79 | I-4 | + | II-3-27 |
| I-4 | + | II-1B-30 | I-4 | + | II-1B-80 | I-4 | + | II-3-28 |
| I-4 | + | II-1B-31 | I-4 | + | II-1B-81 | I-4 | + | II-3-29 |
| I-4 | + | II-1B-32 | I-4 | + | II-1B-82 | I-4 | + | II-3-30 |
| I-4 | + | II-1B-33 | I-4 | + | II-1B-83 | I-4 | + | II-3-31 |
| I-4 | + | II-1B-34 | I-4 | + | II-1B-84 | I-4 | + | II-3-32 |
| I-4 | + | II-1B-35 | I-4 | + | II-1B-85 | I-4 | + | II-3-33 |
| I-4 | + | II-1B-36 | I-4 | + | II-1B-86 | I-4 | + | II-3-34 |
| I-4 | + | II-1B-37 | I-4 | + | II-1B-87 | I-4 | + | II-3-35 |
| I-4 | + | II-1B-38 | I-4 | + | II-1B-88 | I-4 | + | II-3-36 |
| I-4 | + | II-1B-39 | I-4 | + | II-2A-1 | I-4 | + | II-3-37 |
| I-4 | + | II-3-38 | I-4 | + | II-7C-2 | I-4 | + | II-21-1 |
| I-4 | + | II-3-39 | I-4 | + | II-8A-1 | I-4 | + | II-21-2 |
| I-4 | + | II-3-40 | I-4 | + | II-8B-1 | I-4 | + | II-21-3 |
| I-4 | + | II-3-41 | I-4 | + | II-8C-1 | I-4 | + | II-21-4 |
| I-4 | + | II-3-42 | I-4 | + | II-9A-1 | I-4 | + | II-21-5 |
| I-4 | + | II-3-43 | I-4 | + | II-9B-1 | I-4 | + | II-21-6 |

(fortgesetzt)

| | | | | | | | | |
|---|---|---|---|---|---|---|---|---|
| I-4 | + | II-3-44 | I-4 | + | II-9B-2 | I-4 | + | II-21-7 |
| I-4 | + | II-3-45 | I-4 | + | II-9C-1 | I-4 | + | II-22A-1 |
| I-4 | + | II-3-46 | I-4 | + | II-10A-1 | I-4 | + | II-22B-1 |
| I-4 | + | II-3-47 | I-4 | + | II-10A-2 | I-4 | + | II-23A-1 |
| I-4 | + | II-3-48 | I-4 | + | II-10B-1 | I-4 | + | II-23A-2 |
| I-4 | + | II-3-49 | I-4 | + | II-12A-1 | I-4 | + | II-23B-1 |
| I-4 | + | II-3-50 | I-4 | + | II-12B-1 | I-4 | + | II-25-1 |
| I-4 | + | II-3-51 | I-4 | + | II-12B-2 | I-4 | + | II-28-1 |
| I-4 | + | II-3-52 | I-4 | + | II-12B-3 | I-4 | + | II-28-2 |
| I-4 | + | II-3-53 | I-4 | + | II-12C-1 | I-4 | + | II-28-3 |
| I-4 | + | II-3-54 | I-4 | + | II-12C-2 | I-4 | + | II-28-4 |
| I-4 | + | II-3-55 | I-4 | + | II-13-1 | I-4 | + | II-29-1 |
| I-4 | + | II-3-56 | I-4 | + | II-13-2 | I-4 | + | II-29-2 |
| I-4 | + | II-3-57 | I-4 | + | II-13-3 | I-4 | + | II-29-3 |
| I-4 | + | II-3-58 | I-4 | + | II-13-4 | I-4 | + | II-29-4 |
| I-4 | + | II-4A-1 | I-4 | + | II-13-5 | I-4 | + | II-29-5 |
| I-4 | + | II-4A-2 | I-4 | + | II-13-6 | I-4 | + | II-29-6 |
| I-4 | + | II-4A-3 | I-4 | + | II-15-1 | I-4 | + | II-29-7 |
| I-4 | + | II-4A-4 | I-4 | + | II-15-2 | I-4 | + | II-29-8 |
| I-4 | + | II-4A-5 | I-4 | + | II-15-3 | I-4 | + | II-29-9 |
| I-4 | + | II-4A-6 | I-4 | + | II-15-4 | I-4 | + | II-29-10 |
| I-4 | + | II-4A-7 | I-4 | + | II-15-5 | I-4 | + | II-29-11 |
| I-4 | + | II-4A-8 | I-4 | + | II-15-6 | I-4 | + | II-29-12 |
| I-4 | + | II-4A-9 | I-4 | + | II-15-7 | I-4 | + | II-29-13 |
| I-4 | + | II-4B-1 | I-4 | + | II-15-8 | I-4 | + | II-29-14 |
| I-4 | + | II-4B-2 | I-4 | + | II-15-9 | I-4 | + | II-29-15 |
| I-4 | + | II-4B-3 | I-4 | + | II-15-10 | I-4 | + | II-29-16 |
| I-4 | + | II-4B-4 | I-4 | + | II-15-11 | I-4 | + | II-29-17 |
| I-4 | + | II-4C-4 | I-4 | + | II-15-12 | I-4 | + | II-29-18 |
| I-4 | + | 11-5-1 | I-4 | + | II-15-13 | I-4 | + | II-29-19 |
| I-4 | + | II-5-2 | I-4 | + | II-16-1 | I-4 | + | II-29-20 |
| I-4 | + | II-6-1 | I-4 | + | II-17-1 | I-4 | + | II-29-21 |
| I-4 | + | II-6-2 | I-4 | + | II-18A-1 | I-4 | + | II-29-22 |
| I-4 | + | II-6-3 | I-4 | + | II-18A-2 | I-4 | + | II-29-23 |
| I-4 | + | II-6-4 | I-4 | + | II-18A-3 | I-4 | + | II-29-24 |
| I-4 | + | II-6-5 | I-4 | + | II-18A-4 | I-4 | + | II-29-25 |
| I-4 | + | II-6-6 | I-4 | + | II-18A-5 | I-4 | + | II-29-26 |
| I-4 | + | II-7A-1 | I-4 | + | II-18B-1 | I-4 | + | II-29-27 |
| I-4 | + | II-7A-2 | I-4 | + | II-19-1 | I-4 | + | II-29-28 |
| I-4 | + | II-7A-3 | I-4 | + | II-20A-1 | I-4 | + | II-29-29 |
| I-4 | + | II-7A-4 | I-4 | + | II-20B-1 | I-4 | + | II-29-30 |
| I-4 | + | II-7A-5 | I-4 | + | II-20C-1 | I-4 | + | II-29-31 |
| I-4 | + | II-7B-1 | I-4 | + | II-20D-1 | I-4 | + | II-29-32 |
| I-4 | + | II-7C-1 | I-4 | + | II-20D-2 | I-5 | + | II-1A-1 |
| I-5 | + | II-1A-2 | I-5 | + | II-1B-17 | I-5 | + | II-1B-67 |
| I-5 | + | II-1A-3 | I-5 | + | II-1B-18 | I-5 | + | II-1B-68 |
| I-5 | + | II-1A-4 | I-5 | + | II-1B-19 | I-5 | + | II-1B-69 |
| I-5 | + | II-1A-5 | I-5 | + | II-1B-20 | I-5 | + | II-1B-70 |
| I-5 | + | II-1A-6 | I-5 | + | II-1B-21 | I-5 | + | II-1B-71 |
| I-5 | + | II-1A-7 | I-5 | + | II-1B-22 | I-5 | + | II-1B-72 |
| I-5 | + | II-1A-8 | I-5 | + | II-1B-23 | I-5 | + | II-1B-73 |

(fortgesetzt)

| | | | | | | | | |
|---|---|---|---|---|---|---|---|---|
| I-5 | + | II-1A-9 | I-5 | + | II-1B-24 | I-5 | + | II-1B-74 |
| I-5 | + | II-1A-10 | I-5 | + | II-1B-25 | I-5 | + | II-1B-75 |
| I-5 | + | II-1A-11 | I-5 | + | II-1B-26 | I-5 | + | II-1B-76 |
| I-5 | + | II-1A-12 | I-5 | + | II-1B-27 | I-5 | + | II-1B-77 |
| I-5 | + | II-1A-13 | I-5 | + | II-1B-28 | I-5 | + | II-1B-78 |
| I-5 | + | II-1A-14 | I-5 | + | II-1B-29 | I-5 | + | II-1B-79 |
| I-5 | + | II-1A-15 | I-5 | + | II-1B-30 | I-5 | + | II-1B-80 |
| I-5 | + | II-1A-16 | I-5 | + | II-1B-31 | I-5 | + | II-1B-81 |
| I-5 | + | II-1A-17 | I-5 | + | II-1B-32 | I-5 | + | II-1B-82 |
| I-5 | + | II-1A-18 | I-5 | + | II-1B-33 | I-5 | + | II-1B-83 |
| I-5 | + | II-1A-19 | I-5 | + | II-1B-34 | I-5 | + | II-1B-84 |
| I-5 | + | II-1A-20 | I-5 | + | II-1B-35 | I-5 | + | II-1B-85 |
| I-5 | + | II-1A-21 | I-5 | + | II-1B-36 | I-5 | + | II-1B-86 |
| I-5 | + | II-1A-22 | I-5 | + | II-1B-37 | I-5 | + | II-1B-87 |
| I-5 | + | II-1A-23 | I-5 | + | II-1B-38 | I-5 | + | II-1B-88 |
| I-5 | + | II-1A-24 | I-5 | + | II-1B-39 | I-5 | + | II-2A-1 |
| I-5 | + | II-1A-25 | I-5 | + | II-1B-40 | I-5 | + | II-2A-2 |
| I-5 | + | II-1A-26 | I-5 | + | II-1B-41 | I-5 | + | II-2A-3 |
| I-5 | + | II-1A-27 | I-5 | + | II-1B-42 | I-5 | + | II-2A-4 |
| I-5 | + | II-1A-28 | I-5 | + | II-1B-43 | I-5 | + | II-2A-5 |
| I-5 | + | II-1A-29 | I-5 | + | II-1B-44 | I-5 | + | II-2A-6 |
| I-5 | + | II-1A-30 | I-5 | + | II-1B-45 | I-5 | + | II-2A-7 |
| I-5 | + | II-1A-31 | I-5 | + | II-1B-46 | I-5 | + | II-2A-8 |
| I-5 | + | II-1A-32 | I-5 | + | II-1B-47 | I-5 | + | II-2B-1 |
| I-5 | + | II-1A-33 | I-5 | + | II-1B-48 | I-5 | + | II-2B-2 |
| I-5 | + | II-1A-34 | I-5 | + | II-1B-49 | I-5 | + | II-2B-3 |
| I-5 | + | II-1A-35 | I-5 | + | II-1B-50 | I-5 | + | II-2B-4 |
| I-5 | + | II-1B-1 | I-5 | + | II-1B-51 | I-5 | + | II-2B-5 |
| I-5 | + | II-1B-2 | I-5 | + | II-1B-52 | I-5 | + | II-2B-6 |
| I-5 | + | II-1B-3 | I-5 | + | II-1B-53 | I-5 | + | II-3-1 |
| I-5 | + | II-1B-4 | I-5 | + | II-1B-54 | I-5 | + | II-3-2 |
| I-5 | + | II-1B-5 | I-5 | + | II-1B-55 | I-5 | + | II-3-3 |
| I-5 | + | II-1B-6 | I-5 | + | II-1B-56 | I-5 | + | II-3-4 |
| I-5 | + | II-1B-7 | I-5 | + | II-1B-57 | I-5 | + | II-3-5 |
| I-5 | + | II-1B-8 | I-5 | + | II-1B-58 | I-5 | + | II-3-6 |
| I-5 | + | II-1B-9 | I-5 | + | II-1B-59 | I-5 | + | II-3-7 |
| I-5 | + | II-1B-10 | I-5 | + | II-1B-60 | I-5 | + | II-3-8 |
| I-5 | + | II-1B-11 | I-5 | + | II-1B-61 | I-5 | + | II-3-9 |
| I-5 | + | II-1B-12 | I-5 | + | II-1B-62 | I-5 | + | II-3-10 |
| I-5 | + | II-1B-13 | I-5 | + | II-1B-63 | I-5 | + | II-3-11 |
| I-5 | + | II-1B-14 | I-5 | + | II-1B-64 | I-5 | + | II-3-12 |
| I-5 | + | II-1B-15 | I-5 | + | II-1B-65 | I-5 | + | II-3-13 |
| I-5 | + | II-1B-16 | I-5 | + | II-1B-66 | I-5 | + | II-3-14 |
| I-5 | + | II-3-15 | I-5 | + | II-4A-7 | I-5 | + | II-15-5 |
| I-5 | + | II-3-16 | I-5 | + | II-4A-8 | I-5 | + | II-15-6 |
| I-5 | + | II-3-17 | I-5 | + | II-4A-9 | I-5 | + | II-15-7 |
| I-5 | + | II-3-18 | I-5 | + | II-4B-1 | I-5 | + | II-15-8 |
| I-5 | + | II-3-19 | I-5 | + | II-4B-2 | I-5 | + | II-15-9 |
| I-5 | + | II-3-20 | I-5 | + | II-4B-3 | I-5 | + | II-15-10 |
| I-5 | + | II-3-21 | I-5 | + | II-4B-4 | I-5 | + | II-15-11 |
| I-5 | + | II-3-22 | I-5 | + | II-4C-4 | I-5 | + | II-15-12 |

(fortgesetzt)

| | | | | | | | | |
|---|---|---|---|---|---|---|---|---|
| I-5 | + | II-3-23 | I-5 | + | II-5-1 | I-5 | + | II-15-13 |
| I-5 | + | II-3-24 | I-5 | + | II-5-2 | I-5 | + | II-16-1 |
| I-5 | + | II-3-25 | I-5 | + | II-6-1 | I-5 | + | II-17-1 |
| I-5 | + | II-3-26 | I-5 | + | II-6-2 | I-5 | + | II-18A-1 |
| I-5 | + | II-3-27 | I-5 | + | II-6-3 | I-5 | + | II-18A-2 |
| I-5 | + | II-3-28 | I-5 | + | II-6-4 | I-5 | + | II-18A-3 |
| I-5 | + | II-3-29 | I-5 | + | II-6-5 | I-5 | + | II-18A-4 |
| I-5 | + | II-3-30 | I-5 | + | II-6-6 | I-5 | + | II-18A-5 |
| I-5 | + | II-3-31 | I-5 | + | II-7A-1 | I-5 | + | II-18B-1 |
| I-5 | + | II-3-32 | I-5 | + | II-7A-2 | I-5 | + | II-19-1 |
| I-5 | + | II-3-33 | I-5 | + | II-7A-3 | I-5 | + | II-20A-1 |
| I-5 | + | II-3-34 | I-5 | + | II-7A-4 | I-5 | + | II-20B-1 |
| I-5 | + | II-3-35 | I-5 | + | II-7A-5 | I-5 | + | II-20C-1 |
| I-5 | + | II-3-36 | I-5 | + | II-7B-1 | I-5 | + | II-20D-1 |
| I-5 | + | II-3-37 | I-5 | + | II-7C-1 | I-5 | + | II-20D-2 |
| I-5 | + | II-3-38 | I-5 | + | II-7C-2 | I-5 | + | II-21-1 |
| I-5 | + | II-3-39 | I-5 | + | II-8A-1 | I-5 | + | II-21-2 |
| I-5 | + | II-3-40 | I-5 | + | II-8B-1 | I-5 | + | II-21-3 |
| I-5 | + | II-3-41 | I-5 | + | II-8C-1 | I-5 | + | II-21-4 |
| I-5 | + | II-3-42 | I-5 | + | II-9A-1 | I-5 | + | II-21-5 |
| I-5 | + | II-3-43 | I-5 | + | II-9B-1 | I-5 | + | II-21-6 |
| I-5 | + | II-3-44 | I-5 | + | II-9B-2 | I-5 | + | II-21-7 |
| I-5 | + | II-3-45 | I-5 | + | II-9C-1 | I-5 | + | II-22A-1 |
| I-5 | + | II-3-46 | I-5 | + | II-10A-1 | I-5 | + | II-22B-1 |
| I-5 | + | II-3-47 | I-5 | + | II-10A-2 | I-5 | + | II-23A-1 |
| I-5 | + | II-3-48 | I-5 | + | II-10B-1 | I-5 | + | II-23A-2 |
| I-5 | + | II-3-49 | I-5 | + | II-12A-1 | I-5 | + | II-23B-1 |
| I-5 | + | II-3-50 | I-5 | + | II-12B-1 | I-5 | + | II-25-1 |
| I-5 | + | II-3-51 | I-5 | + | II-12B-2 | I-5 | + | II-28-1 |
| I-5 | + | II-3-52 | I-5 | + | II-12B-3 | I-5 | + | II-28-2 |
| I-5 | + | II-3-53 | I-5 | + | II-12C-1 | I-5 | + | II-28-3 |
| I-5 | + | II-3-54 | I-5 | + | II-12C-2 | I-5 | + | II-28-4 |
| I-5 | + | II-3-55 | I-5 | + | II-13-1 | I-5 | + | II-29-1 |
| I-5 | + | II-3-56 | I-5 | + | II-13-2 | I-5 | + | II-29-2 |
| I-5 | + | II-3-57 | I-5 | + | II-13-3 | I-5 | + | II-29-3 |
| I-5 | + | II-3-58 | I-5 | + | II-13-4 | I-5 | + | II-29-4 |
| I-5 | + | II-4A-1 | I-5 | + | II-13-5 | I-5 | + | II-29-5 |
| I-5 | + | II-4A-2 | I-5 | + | II-13-6 | I-5 | + | II-29-6 |
| I-5 | + | II-4A-3 | I-5 | + | II-15-1 | I-5 | + | II-29-7 |
| I-5 | + | II-4A-4 | I-5 | + | II-15-2 | I-5 | + | II-29-8 |
| I-5 | + | II-4A-5 | I-5 | + | II-15-3 | I-5 | + | II-29-9 |
| I-5 | + | II-4A-6 | I-5 | + | II-15-4 | I-5 | + | II-29-10 |
| I-5 | + | II-29-11 | I-6 | + | II-1A-29 | I-6 | + | II-1B-44 |
| I-5 | + | II-29-12 | I-6 | + | II-1A-30 | I-6 | + | II-1B-45 |
| I-5 | + | II-29-13 | I-6 | + | II-1A-31 | I-6 | + | II-1B-46 |
| I-5 | + | II-29-14 | I-6 | + | II-1A-32 | I-6 | + | II-1B-47 |
| I-5 | + | II-29-15 | I-6 | + | II-1A-33 | I-6 | + | II-1B-48 |
| I-5 | + | II-29-16 | I-6 | + | II-1A-34 | I-6 | + | II-1B-49 |
| I-5 | + | II-29-17 | I-6 | + | II-1A-35 | I-6 | + | II-1B-50 |
| I-5 | + | II-29-18 | I-6 | + | II-1B-1 | I-6 | + | II-1B-51 |
| I-5 | + | II-29-19 | I-6 | + | II-1B-2 | I-6 | + | II-1B-52 |

(fortgesetzt)

| | | | | | | | | |
|---|---|---|---|---|---|---|---|---|
| I-5 | + | II-29-20 | I-6 | + | II-1B-3 | I-6 | + | II-1B-53 |
| I-5 | + | II-29-21 | I-6 | + | II-1B-4 | I-6 | + | II-1B-54 |
| I-5 | + | II-29-22 | I-6 | + | II-1B-5 | I-6 | + | II-1B-55 |
| I-5 | + | II-29-23 | I-6 | + | II-1B-6 | I-6 | + | II-1B-56 |
| I-5 | + | II-29-24 | I-6 | + | II-1B-7 | I-6 | + | II-1B-57 |
| I-5 | + | II-29-25 | I-6 | + | II-1B-8 | I-6 | + | II-1B-58 |
| I-5 | + | II-29-26 | I-6 | + | II-1B-9 | I-6 | + | II-1B-59 |
| I-5 | + | II-29-27 | I-6 | + | II-1B-10 | I-6 | + | II-1B-60 |
| I-5 | + | II-29-28 | I-6 | + | II-1B-11 | I-6 | + | II-1B-61 |
| I-5 | + | II-29-29 | I-6 | + | II-1B-12 | I-6 | + | II-1B-62 |
| I-5 | + | II-29-30 | I-6 | + | II-1B-13 | I-6 | + | II-1B-63 |
| I-5 | + | II-29-31 | I-6 | + | II-1B-14 | I-6 | + | II-1B-64 |
| I-5 | + | II-29-32 | I-6 | + | II-1B-15 | I-6 | + | II-1B-65 |
| I-6 | + | II-1A-1 | I-6 | + | II-1B-16 | I-6 | + | II-1B-66 |
| I-6 | + | II-1A-2 | I-6 | + | II-1B-17 | I-6 | + | II-1B-67 |
| I-6 | + | II-1A-3 | I-6 | + | II-1B-18 | I-6 | + | II-1B-68 |
| I-6 | + | II-1A-4 | I-6 | + | II-1B-19 | I-6 | + | II-1B-69 |
| I-6 | + | II-1A-5 | I-6 | + | II-1B-20 | I-6 | + | II-1B-70 |
| I-6 | + | II-1A-6 | I-6 | + | II-1B-21 | I-6 | + | II-1B-71 |
| I-6 | + | II-1A-7 | I-6 | + | II-1B-22 | I-6 | + | II-1B-72 |
| I-6 | + | II-1A-8 | I-6 | + | II-1B-23 | I-6 | + | II-1B-73 |
| I-6 | + | II-1A-9 | I-6 | + | II-1B-24 | I-6 | + | II-1B-74 |
| I-6 | + | II-1A-10 | I-6 | + | II-1B-25 | I-6 | + | II-1B-75 |
| I-6 | + | II-1A-11 | I-6 | + | II-1B-26 | I-6 | + | II-1B-76 |
| I-6 | + | II-1A-12 | I-6 | + | II-1B-27 | I-6 | + | II-1B-77 |
| I-6 | + | II-1A-13 | I-6 | + | II-1B-28 | I-6 | + | II-1B-78 |
| I-6 | + | II-1A-14 | I-6 | + | II-1B-29 | I-6 | + | II-1B-79 |
| I-6 | + | II-1A-15 | I-6 | + | II-1B-30 | I-6 | + | II-1B-80 |
| I-6 | + | II-1A-16 | I-6 | + | II-1B-31 | I-6 | + | II-1B-81 |
| I-6 | + | II-1A-17 | I-6 | + | II-1B-32 | I-6 | + | II-1B-82 |
| I-6 | + | II-1A-18 | I-6 | + | II-1B-33 | I-6 | + | II-1B-83 |
| I-6 | + | II-1A-19 | I-6 | + | II-1B-34 | I-6 | + | II-1B-84 |
| I-6 | + | II-1A-20 | I-6 | + | II-1B-35 | I-6 | + | II-1B-85 |
| I-6 | + | II-1A-21 | I-6 | + | II-1B-36 | I-6 | + | II-1B-86 |
| I-6 | + | II-1A-22 | I-6 | + | II-1B-37 | I-6 | + | II-1B-87 |
| I-6 | + | II-1A-23 | I-6 | + | II-1B-38 | I-6 | + | II-1B-88 |
| I-6 | + | II-1A-24 | I-6 | + | II-1B-39 | I-6 | + | II-2A-1 |
| I-6 | + | II-1A-25 | I-6 | + | II-1B-40 | I-6 | + | II-2A-2 |
| I-6 | + | II-1A-26 | I-6 | + | II-1B-41 | I-6 | + | II-2A-3 |
| I-6 | + | II-1A-27 | I-6 | + | II-1B-42 | I-6 | + | II-2A-4 |
| I-6 | + | II-1A-28 | I-6 | + | II-1B-43 | I-6 | + | II-2A-5 |
| I-6 | + | II-2A-6 | I-6 | + | II-3-42 | 1-6 | + | II-9A-1 |
| I-6 | + | II-2A-7 | I-6 | + | II-3-43 | 1-6 | + | II-9B-1 |
| I-6 | + | II-2A-8 | I-6 | + | II-3-44 | 1-6 | + | II-9B-2 |
| I-6 | + | II-2B-1 | I-6 | + | II-3-45 | 1-6 | + | II-9C-1 |
| I-6 | + | II-2B-2 | I-6 | + | II-3-46 | 1-6 | + | II-10A-1 |
| I-6 | + | II-2B-3 | I-6 | + | II-3-47 | 1-6 | + | II-10A-2 |
| I-6 | + | II-2B-4 | I-6 | + | II-3-48 | 1-6 | + | II-10B-1 |
| I-6 | + | II-2B-5 | I-6 | + | II-3-49 | 1-6 | + | II-12A-1 |
| I-6 | + | II-2B-6 | I-6 | + | II-3-50 | 1-6 | + | II-12B-1 |
| I-6 | + | II-3-1 | I-6 | + | II-3-51 | 1-6 | + | II-12B-2 |

(fortgesetzt)

| | | | | | | | | |
|---|---|---|---|---|---|---|---|---|
| I-6 | + | II-3-2 | I-6 | + | II-3-52 | 1-6 | + | II-12B-3 |
| I-6 | + | II-3-3 | I-6 | + | II-3-53 | 1-6 | + | 11-12C-1 |
| I-6 | + | II-3-4 | I-6 | + | II-3-54 | 1-6 | + | II-12C-2 |
| I-6 | + | II-3-5 | I-6 | + | II-3-55 | 1-6 | + | 11-13-1 |
| I-6 | + | II-3-6 | I-6 | + | II-3-56 | 1-6 | + | II-13-2 |
| I-6 | + | II-3-7 | I-6 | + | II-3-57 | 1-6 | + | II-13-3 |
| I-6 | + | II-3-8 | I-6 | + | II-3-58 | 1-6 | + | II-13-4 |
| I-6 | + | II-3-9 | I-6 | + | II-4A-1 | 1-6 | + | II-13-5 |
| I-6 | + | II-3-10 | I-6 | + | II-4A-2 | 1-6 | + | II-13-6 |
| I-6 | + | II-3-11 | I-6 | + | II-4A-3 | 1-6 | + | II-15-1 |
| I-6 | + | II-3-12 | I-6 | + | II-4A-4 | 1-6 | + | II-15-2 |
| I-6 | + | II-3-13 | I-6 | + | II-4A-5 | 1-6 | + | II-15-3 |
| I-6 | + | II-3-14 | I-6 | + | II-4A-6 | 1-6 | + | II-15-4 |
| I-6 | + | II-3-15 | I-6 | + | II-4A-7 | 1-6 | + | II-15-5 |
| I-6 | + | II-3-16 | I-6 | + | II-4A-8 | 1-6 | + | II-15-6 |
| I-6 | + | 11-3-17 | I-6 | + | II-4A-9 | 1-6 | + | II-15-7 |
| I-6 | + | II-3-18 | I-6 | + | II-4B-1 | 1-6 | + | II-15-8 |
| I-6 | + | II-3-19 | I-6 | + | II-4B-2 | 1-6 | + | II-15-9 |
| I-6 | + | II-3-20 | I-6 | + | II-4B-3 | 1-6 | + | II-15-10 |
| I-6 | + | 11-3-21 | I-6 | + | II-4B-4 | 1-6 | + | II-15-11 |
| I-6 | + | II-3-22 | I-6 | + | II-4C-4 | 1-6 | + | 11-15-12 |
| I-6 | + | II-3-23 | I-6 | + | II-5-1 | 1-6 | + | II-15-13 |
| I-6 | + | II-3-24 | I-6 | + | II-5-2 | 1-6 | + | II-16-1 |
| I-6 | + | II-3-25 | I-6 | + | II-6-1 | 1-6 | + | II-17-1 |
| I-6 | + | II-3-26 | I-6 | + | II-6-2 | 1-6 | + | II-18A-1 |
| I-6 | + | II-3-27 | I-6 | + | II-6-3 | 1-6 | + | II-18A-2 |
| I-6 | + | II-3-28 | I-6 | + | II-6-4 | 1-6 | + | II-18A-3 |
| I-6 | + | II-3-29 | I-6 | + | II-6-5 | 1-6 | + | II-18A-4 |
| I-6 | + | II-3-30 | I-6 | + | II-6-6 | 1-6 | + | II-18A-5 |
| I-6 | + | II-3-31 | I-6 | + | II-7A-1 | 1-6 | + | II-18B-1 |
| I-6 | + | II-3-32 | I-6 | + | II-7A-2 | 1-6 | + | 11-19-1 |
| I-6 | + | II-3-33 | I-6 | + | II-7A-3 | 1-6 | + | II-20A-1 |
| I-6 | + | II-3-34 | I-6 | + | II-7A-4 | 1-6 | + | II-20B-1 |
| I-6 | + | II-3-35 | I-6 | + | II-7A-5 | 1-6 | + | II-20C-1 |
| I-6 | + | II-3-36 | I-6 | + | II-7B-1 | 1-6 | + | II-20D-1 |
| I-6 | + | II-3-37 | I-6 | + | II-7C-1 | 1-6 | + | II-20D-2 |
| I-6 | + | II-3-38 | I-6 | + | II-7C-2 | 1-6 | + | II-21-1 |
| I-6 | + | II-3-39 | I-6 | + | II-8A-1 | 1-6 | + | II-21-2 |
| I-6 | + | II-3-40 | I-6 | + | II-8B-1 | 1-6 | + | II-21-3 |
| I-6 | + | II-3-41 | I-6 | + | II-8C-1 | 1-6 | + | II-21-4 |
| I-6 | + | II-21-5 | I-6 | + | II-29-3 | 1-6 | + | II-29-18 |
| I-6 | + | II-21-6 | I-6 | + | II-29-4 | 1-6 | + | II-29-19 |
| I-6 | + | II-21-7 | I-6 | + | II-29-5 | 1-6 | + | II-29-20 |
| I-6 | + | II-22A-1 | I-6 | + | II-29-6 | 1-6 | + | II-29-21 |
| I-6 | + | II-22B-1 | I-6 | + | II-29-7 | 1-6 | + | II-29-22 |
| I-6 | + | II-23A-1 | I-6 | + | II-29-8 | 1-6 | + | II-29-23 |
| I-6 | + | II-23A-2 | I-6 | + | II-29-9 | 1-6 | + | II-29-24 |
| I-6 | + | II-23B-1 | I-6 | + | II-29-10 | 1-6 | + | II-29-25 |
| I-6 | + | II-25-1 | I-6 | + | II-29-11 | 1-6 | + | II-29-26 |
| I-6 | + | II-28-1 | I-6 | + | II-29-12 | 1-6 | + | II-29-27 |
| I-6 | + | II-28-2 | I-6 | + | II-29-13 | 1-6 | + | II-29-28 |

(fortgesetzt)

| | | | | | | | | |
|---|---|---|---|---|---|---|---|---|
| I-6 | + | II-28-3 | I-6 | + | II-29-14 | 1-6 | + | II-29-29 |
| I-6 | + | II-28-4 | I-6 | + | II-29-15 | 1-6 | + | II-29-30 |
| I-6 | + | II-29-1 | I-6 | + | II-29-16 | 1-6 | + | II-29-31 |
| I-6 | + | II-29-2 | I-6 | + | II-29-17 | 1-6 | + | II-29-32 |

Eine bevorzugte Gruppe von erfindungsgemäßen Wirkstoffkombinationen sind solche, die neben einem Wirkstoff der Formel (II), insbesondere einem der im Folgenden aufgeführten und als ganz besonders bevorzugt bezeichneten Wirkstoffe 1. bis 105., die Verbindung der Formel (I-1) enthalten.

Eine weitere bevorzugte Gruppe von erfindungsgemäßen Wirkstoffkombinationen sind solche, die neben einem Wirkstoff der Formel (II), insbesondere einem der im Folgenden aufgeführten und als ganz besonders bevorzugt bezeichneten Wirkstoffe 1. bis 105., die Verbindung der Formel (1-2) enthalten.

Eine weitere bevorzugte Gruppe von erfindungsgemäßen Wirkstoffkombinationen sind solche, die neben einem Wirkstoff der Formel (II), insbesondere einem der im Folgenden aufgeführten und als ganz besonders bevorzugt bezeichneten Wirkstoffe 1. bis 105., die Verbindung der Formel (1-3) enthalten.

Eine weitere bevorzugte Gruppe von erfindungsgemäßen Wirkstoffkombinationen sind solche, die neben einem Wirkstoff der Formel (II), insbesondere einem der im Folgenden aufgeführten und als ganz besonders bevorzugt bezeichneten Wirkstoffe 1. bis 105., die Verbindung der Formel (1-4) enthalten.

Eine weitere bevorzugte Gruppe von erfindungsgemäßen Wirkstoffkombinationen sind solche, die neben einem Wirkstoff der Formel (II), insbesondere einem der im Folgenden aufgeführten und als ganz besonders bevorzugt bezeichneten Wirkstoffe 1. bis 105., die Verbindung der Formel (1-5) enthalten.

Eine weitere bevorzugte Gruppe von erfindungsgemäßen Wirkstoffkombinationen sind solche, die neben einem Wirkstoff der Formel (II), insbesondere einem der im Folgenden aufgeführten und als ganz besonders bevorzugt bezeichneten Wirkstoffe 1. bis 105., die Verbindung der Formel (1-6) enthalten.

Ganz besonders bevorzugt werden folgende Wirkstoffe der Formel (II) in den erfindungsgemäßen Wirkstoffkombinationen eingesetzt:

1. Acrinathrin (II-3-1)

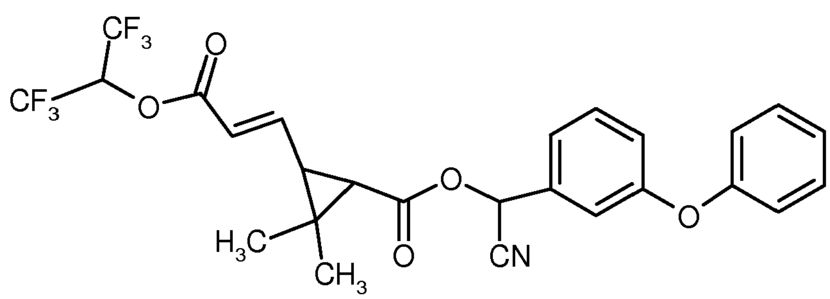

bekannt aus EP-A-048 186

2. Alpha-cypermethrin (II-3-18)

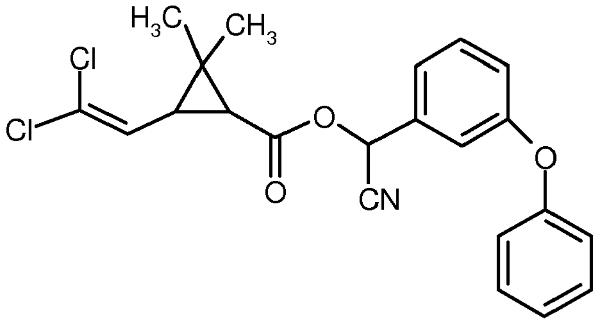

bekannt aus EP-A-067 461

3. Betacyfluthrin (II-3-3)

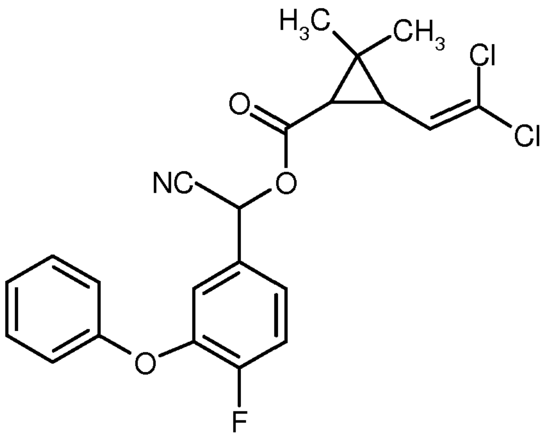

bekannt aus EP-A-206 149

4. Cyhalothrin (II-3-17)

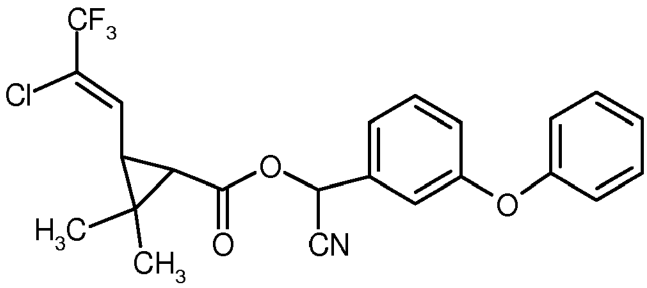

bekannt aus DE-A-2 802 962

5. Cypermethrin (II-3-18)

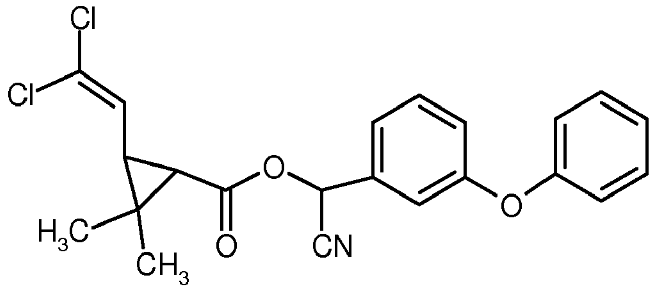

bekannt aus DE-A-2 326 077

6. Deltamethrin (II-3-20)

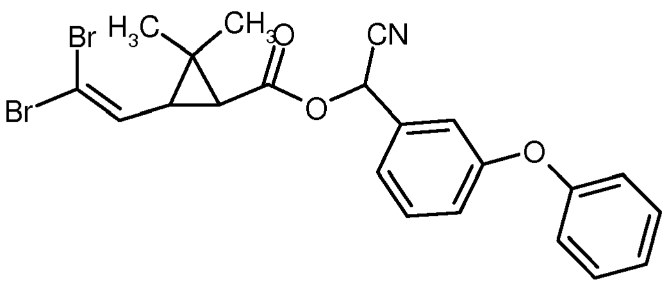

bekannt aus DE-A-2 326 077

7. Esfenvalerat (II-3-22)

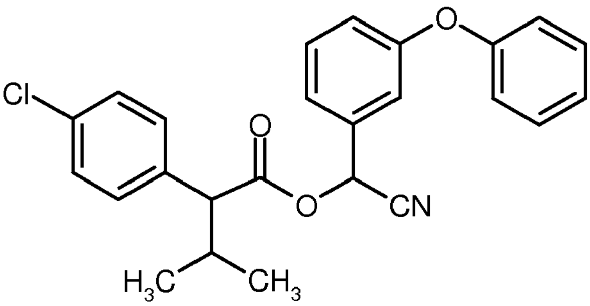

bekannt aus DE-A-2 737 297

8. Etofenprox (II-3-23)

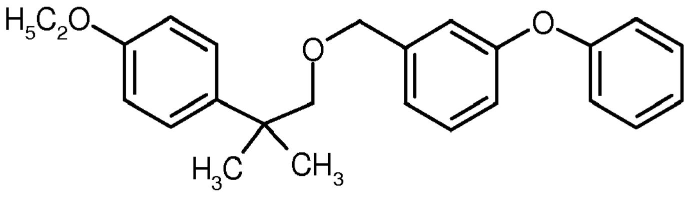

bekannt aus DE-A-3 117 510

9. Fenpropathrin (II-3-25)

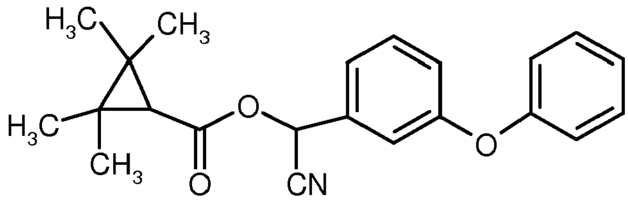

bekannt aus DE-A-2 231 312

10. Fenvalerat (II-3-27)

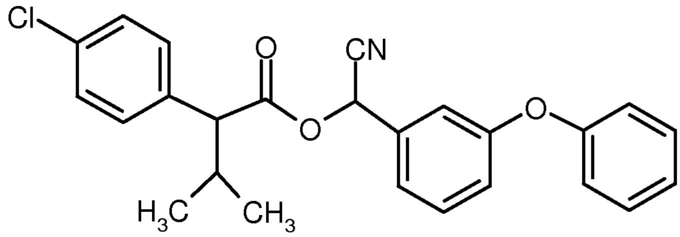

bekannt aus DE-A-2 335 347

11. Flucythrinat (II-3-29)

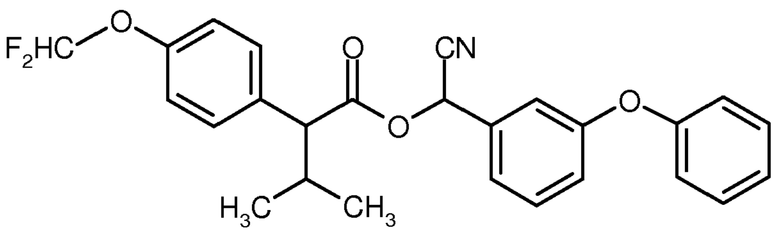

bekannt aus DE-A-2 757 066

12 a. Lambda-cyhalothrin (II-3-37)

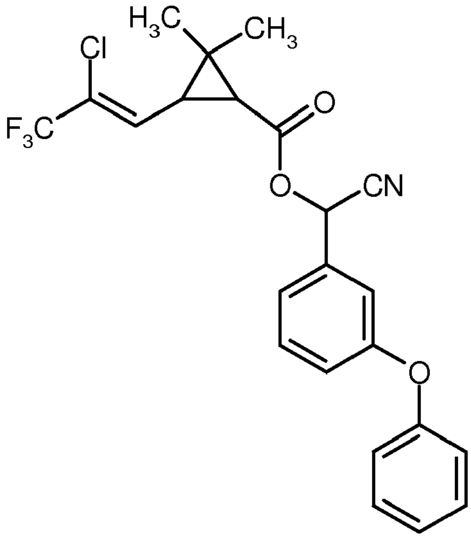

bekannt aus EP-A-106 469

12 b. gamma-Cyhalothrin (II-3-34)

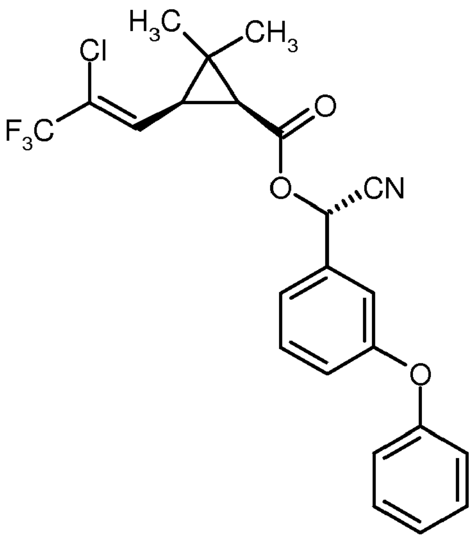

bekannt aus GB-A-02143823

13. Permethrin (II-3-39)

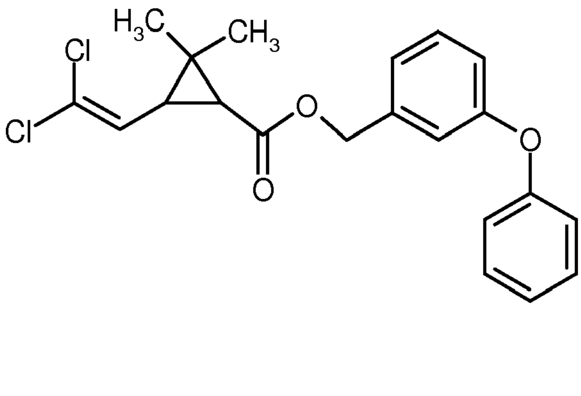

bekannt aus DE-A-2 326 077

14. Taufluvalinat (II-3-48)

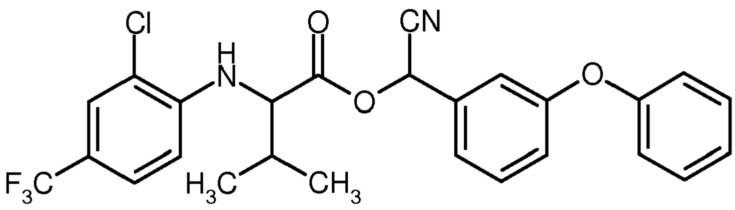

bekannt aus EP-A-038 617

15. Tralomethrin (II-3-52)

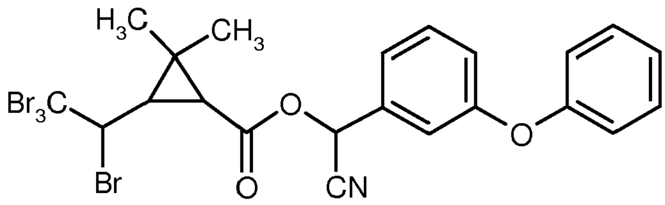

bekannt aus DE-A-2 742 546

16. Zeta-cypermethrin(II-3-18)

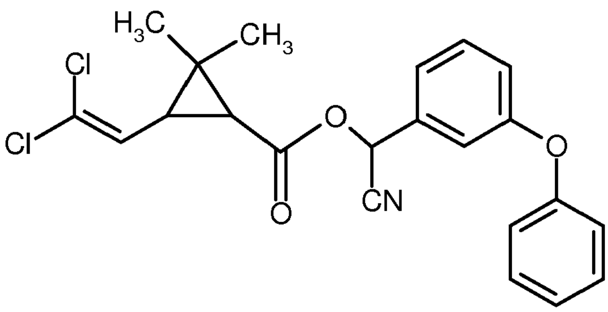

bekannt aus EP-A-026 542

17. Cyfluthrin (II-3-16)

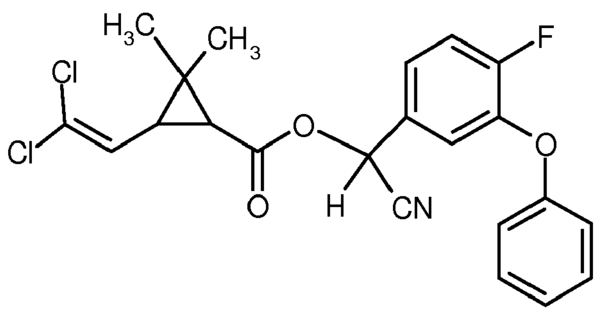

bekannt aus DE-A-27 09 264

18. Bifenthrin (II-3-4)

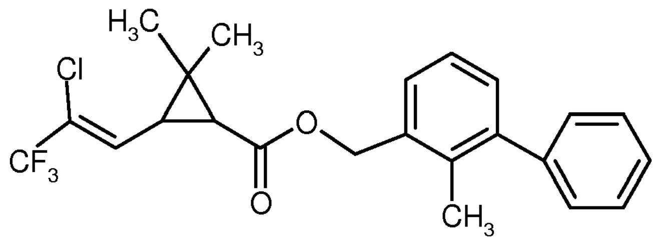

bekannt aus EP-A-049 977

19. Cycloprothrin (II-3-15)

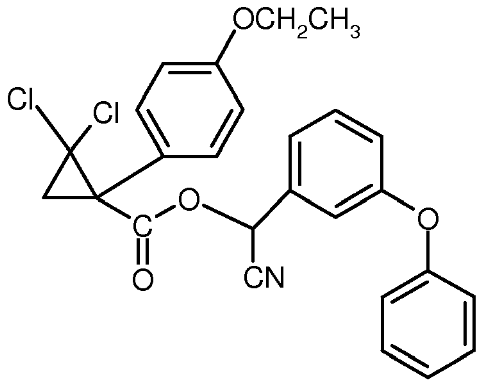

bekannt aus DE-A-2653189

20. Eflusilanat (II-3-56)

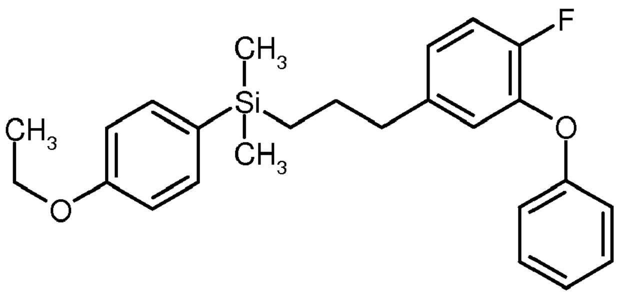

bekannt aus DE-A-36 04 781

21. Fubfenprox (II-3-33)

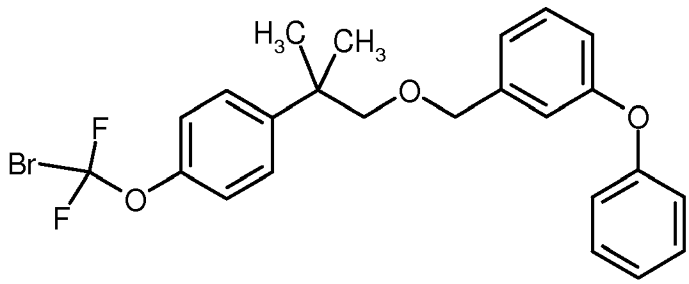

bekannt aus DE-A-37 08 231

22. Transfluthrin (II-3-53)

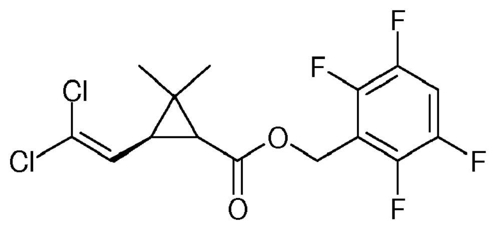

bekannt aus EP 0 279 325

23. Pyrethrin (II-3-55)

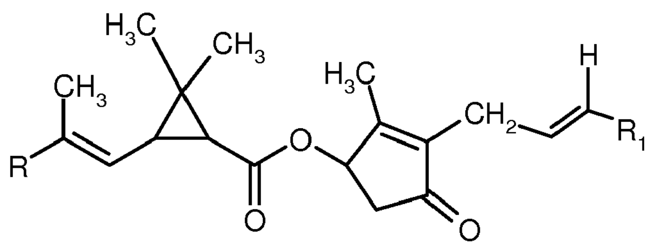

R = $-CH_3$ oder $-CO_2CH_3$

$R_1$ = $-CH=CH_2$ oder $-CH_3$ oder $-CH_2CH_3$ bekannt aus The Pesticide manual, 1997, 11.ausgabe, S.1056

24. Resmethrin (II-3-45)

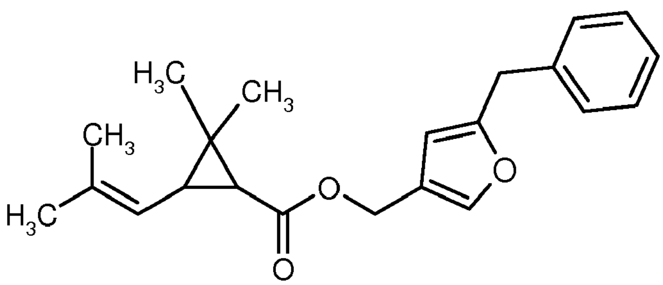

bekannt aus GB-A-1 168 797

25. Imidacloprid (II-4A-4)

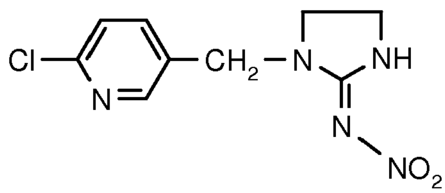

bekannt aus EP-A-00192060

26. Acetamiprid (II-4A-1)

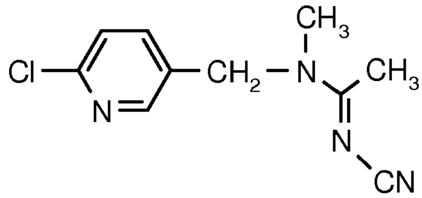

bekannt aus WO 91/04965

27. Thiamethoxam (II-4A-9)

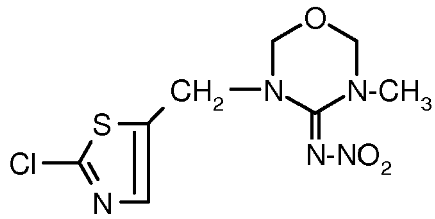

bekannt aus EP-A-00580553

28. Nitenpyram (II-4A-6)

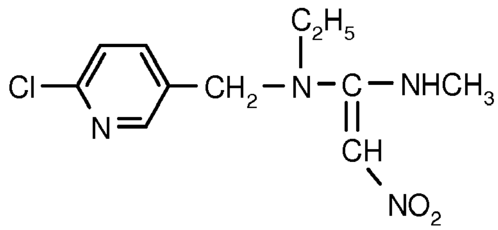

bekannt aus EP-A-00302389

29. Thiacloprid (II-4A-8)

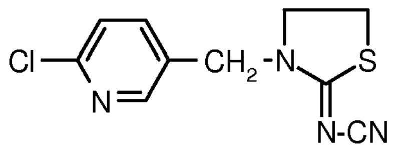

bekannt aus EP-A-00235725

30. Dinotefuran (II-4A-3)

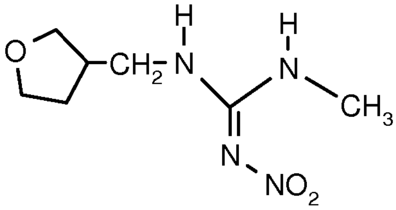

bekannt aus EP-A-00649845

31. Clothianidin (II-4A-2)

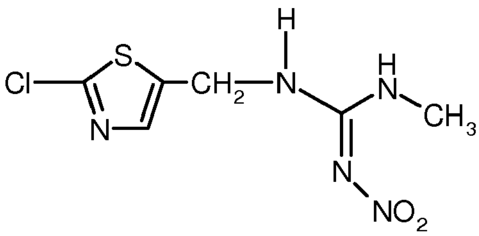

bekannt aus EP-A-00376279

32. Imidaclothiz (II-4A-5)

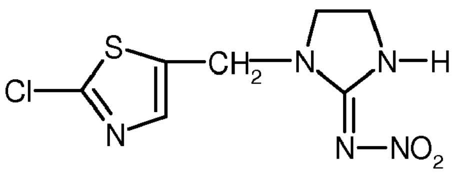

bekannt aus EP-A-00192060

33. Chlorfluazuron (II-15-2)

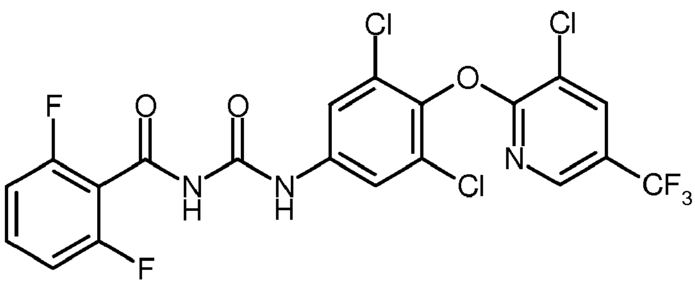

bekannt aus DE-A-2 818 830

34. Diflubenzuron (II-15-3)

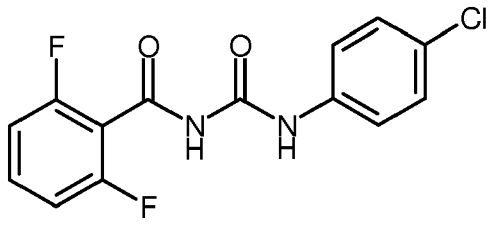

bekannt aus DE-A 2 123 236

35. Lufenuron (II-15-8)

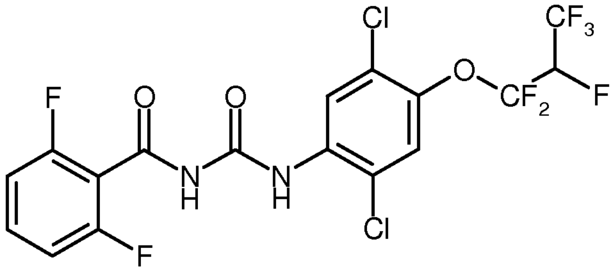

bekannt aus EP-A-179 022

36. Teflubenzuron (II-15-12)

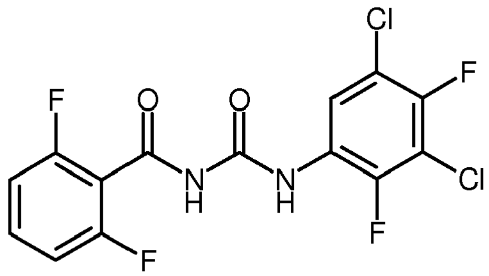

bekannt aus EP-A-052 833

37. Triflumuron (II-15-13)

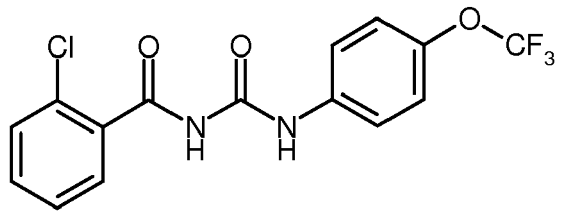

bekannt aus DE-A-2 601 780

38. Novaluron (II-15-9)

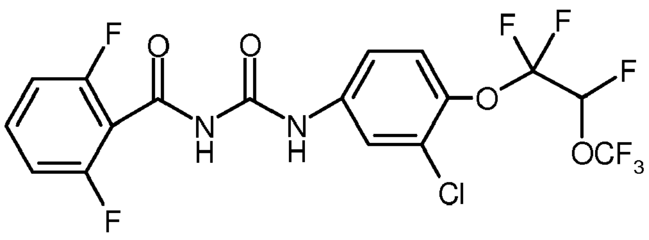

bekannt aus US 4,980,376

39. Flufenoxuron (II-15-6)

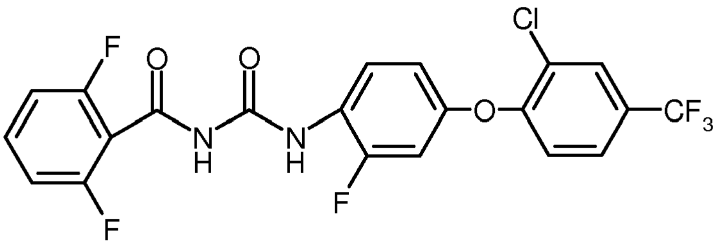

bekannt aus EP-A 161 019

40. Hexaflumuron (II-15-7)

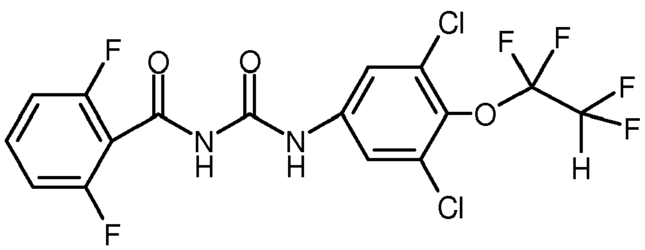

bekannt aus EP-A 71 279

41. Bistrifluron (II-15-1)

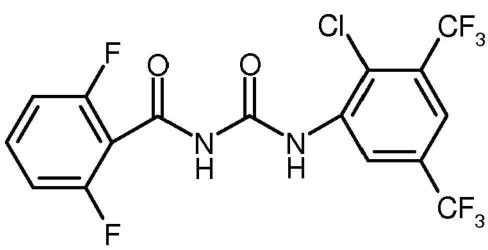

bekannt aus WO 98/00394

42. Noviflumuron (II-15-10)

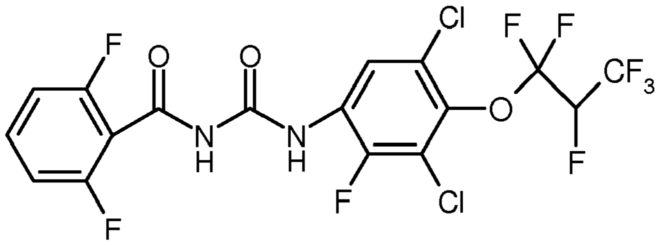

bekannt aus WO 98/19542

43. Buprofezin (II-16-1)

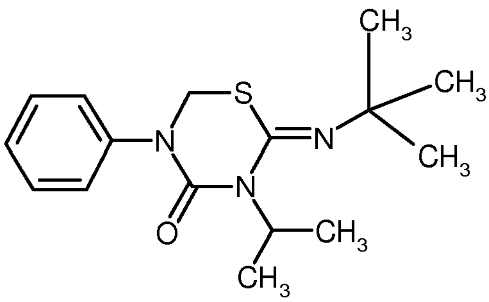

bekannt aus DE-A-2 824 126

44. Cyromazine (II-17-1)

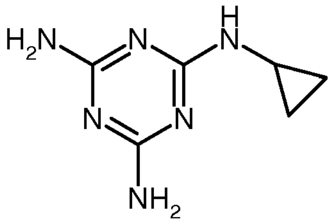

bekannt aus DE-A-2 736 876

45. Methoxyfenozide (II-18A-3)

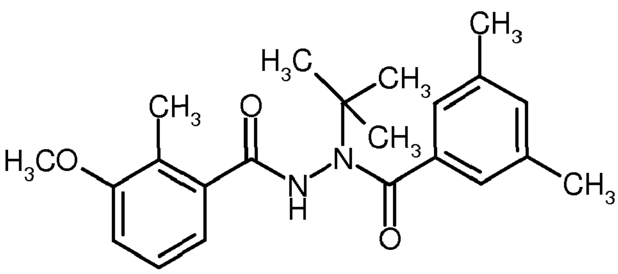

bekannt aus EP-A-639 559

46. Tebufenozide (II-18A-4)

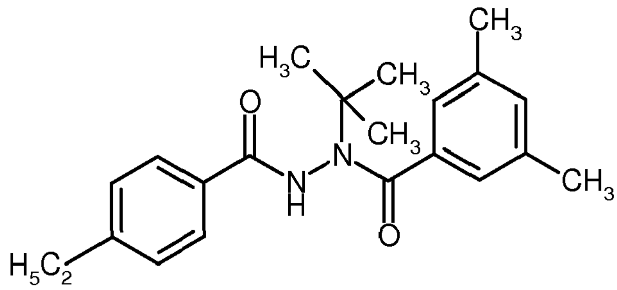

bekannt aus EP-A-339 854

47. Halofenozide (II-18A-2)

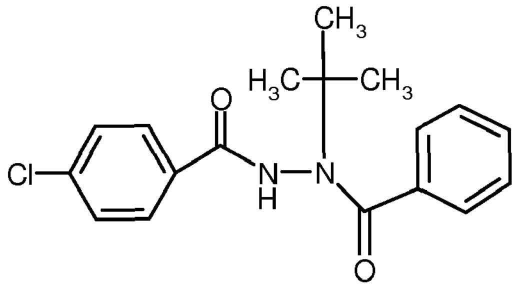

bekannt aus EP-A 228 564

48. Fufenozide (JS-118) (II-18A-5)

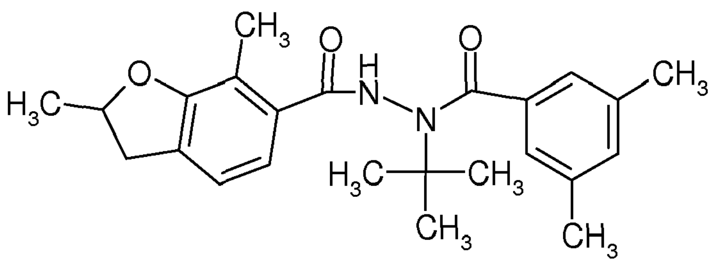

bekannt aus ZL 01108161.9, Handelsname Fu-Shen, Modern Agrochemicals, Vol. 4, No. 3, 2005, 1-7

49. Chromafenozide (II-18A-1)

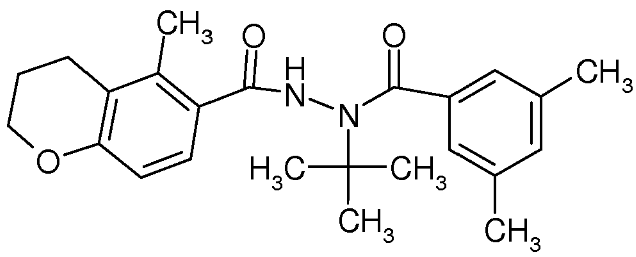

bekannt aus EP-A-496342

50. Endosulfan (II-2A-3)

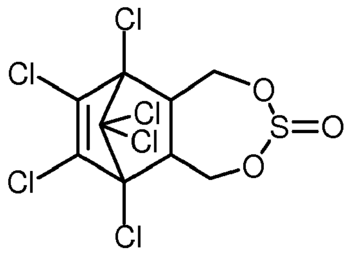

51. Fipronil (II-2B-3)

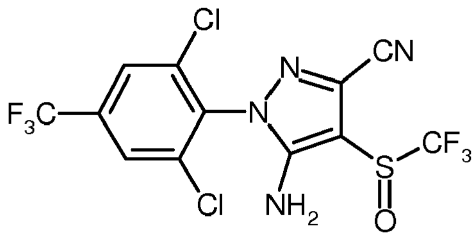

bekannt aus EP-A-295 117

52. Ethiprole (II-2B-2)

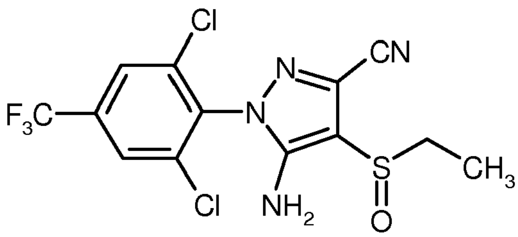

bekannt aus WO 97/22593

53. Pyrafluprole (II-2B-4)

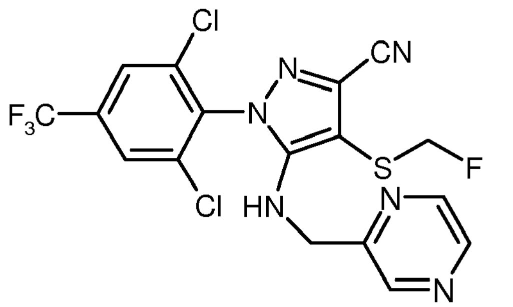

bekannt aus WO 01/00614

54. Pyriprole (II-2B-5)

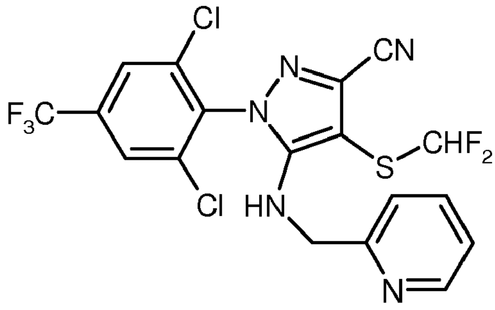

bekannt aus WO 02/10153

55. Flubendiamide (II-28-1)

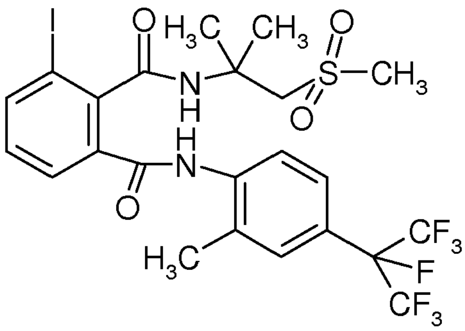

bekannt aus EP-A-01006107

56. die Verbindung (II-28-2)

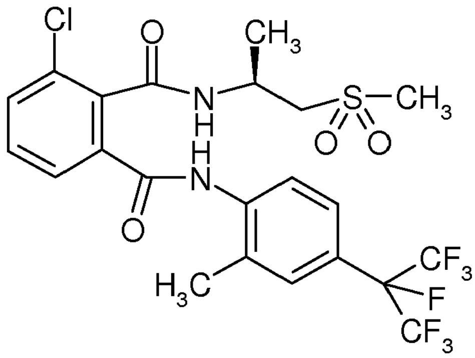

bekannt aus WO 06/022225

57. Rynaxapyr (II-28-3)

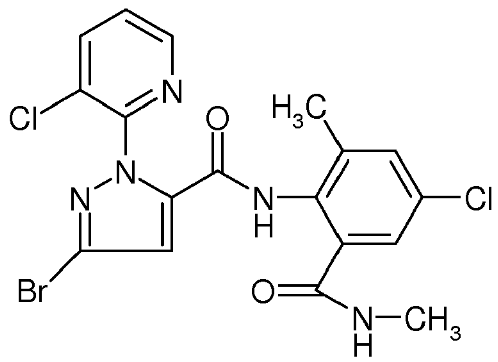

bekannt aus WO 03/015519

57. Cyazypyr (HGW86) (II-28-4)

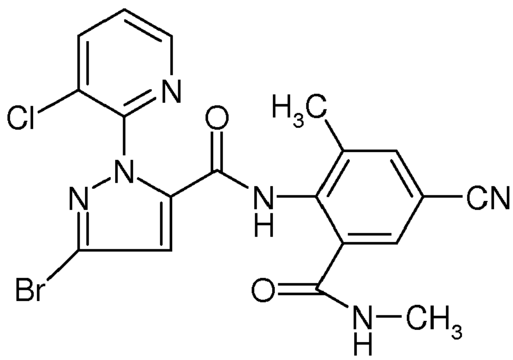

bekannt aus WO 04/067528

59. Emamectin (II-6-2) bekannt aus EP-A-089 202

60. Emamectin benzoate (II-6-3) bekannt aus EP-A-089202

61. Abamectin (II-6-1) bekannt aus DE-A-27 17 040

62. Ivermectin (II-6-4) bekannt aus EP-A-001 689

63. Milbemectin (II-6-6)

bekannt aus The Pesticide Manual, 11. Ausgabe, 1997, S. 846

64. Lepimectin (II-6-5)

bekannt aus EP-A-675 133

65. Tebufenpyrad (II-21-5)

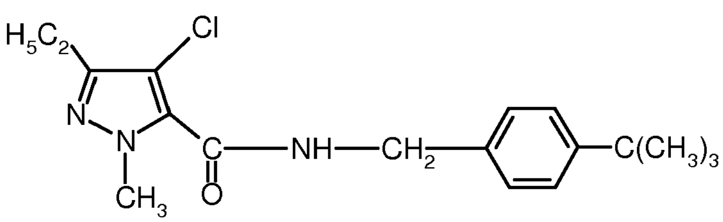

bekannt aus EP-A-289 879

66. Fenpyroximate (II-21-2)

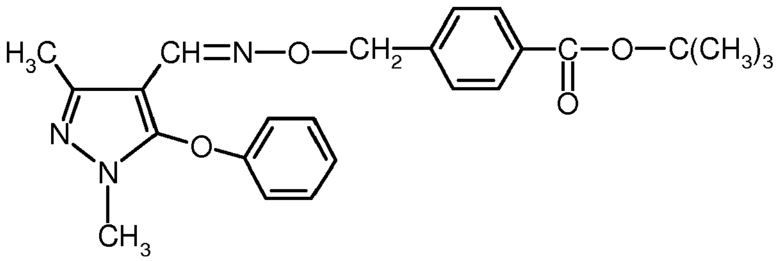

bekannt aus EP-A-234 045

67. Pyridaben (II-21-4)

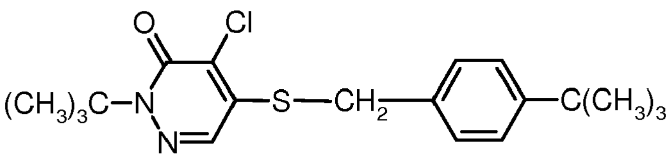

bekannt aus EP-A-134 439

68. Fenazaquin (II-21-1)

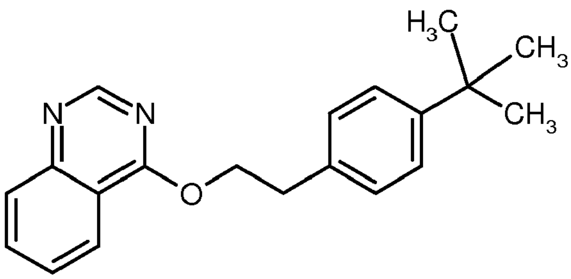

bekannt aus EP-A-326 329

69. Pyrimidifen (II-21-3)

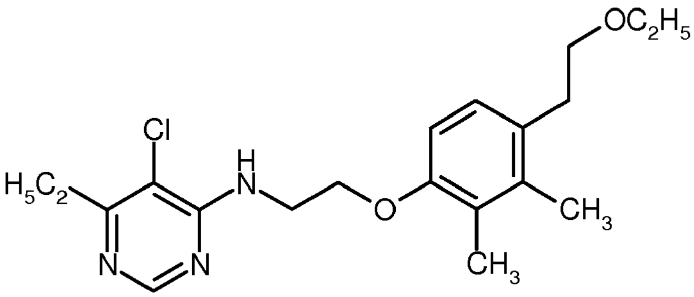

bekannt aus EP-A-196 524

70. Tolfenpyrad (II-21-6)

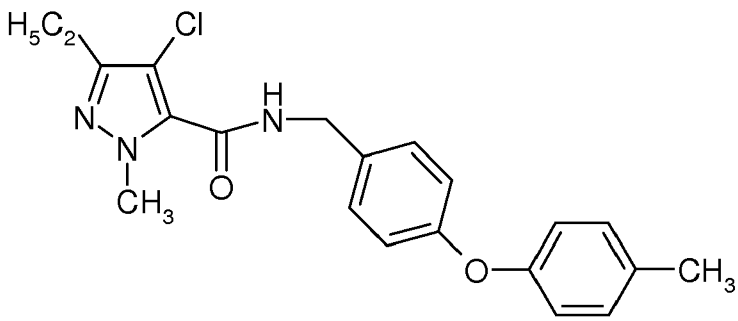

bekannt aus EP-A-365 925

71. Dicofol (II-29-11)

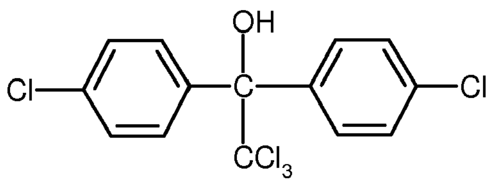

bekannt aus US 2,812,280

72. Cyenopyrafen (II-20D-2)

(1E)-2-Cyano-2-[4-( 1,1-dimethylethyl)phenyl] -1-(1,3,4-trimethyl-1H-pyrazol-5-yl)ethenyl-2,2-dimethylpropanoate

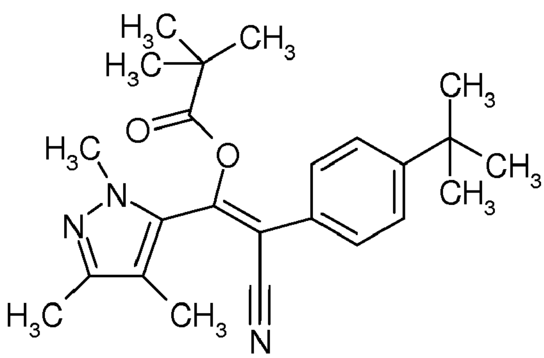

bekannt aus JP-A-2003 201 280

73. Cyflumetofen (II-20D-1)

2-Methoxyethyl-alpha-cyano-alpha- [4-(1,1-dimethylethyl)phenyl] -beta-oxo-2-(trifluoromethyl)benzenepropanoate

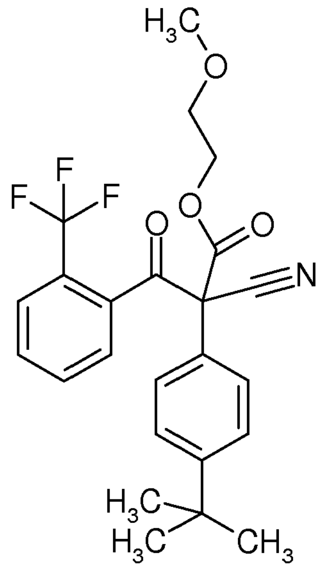

bekannt aus WO 2002/014263

74. Acequinocyl (II-20B-1)

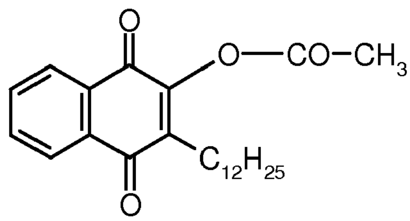

bekannt aus DE-A-26 41 343

75. Fluacrypyrim (II-20C-1)

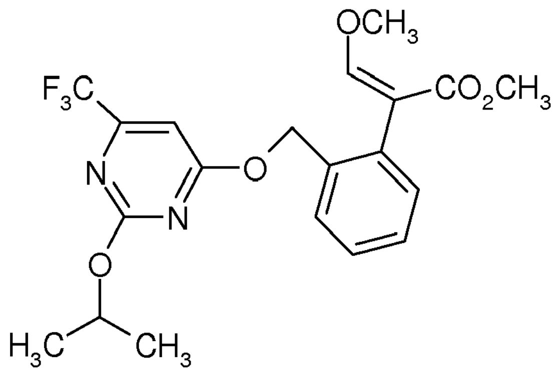

bekannt aus WO 96/16047

76. Bifenazate (II-25-1)

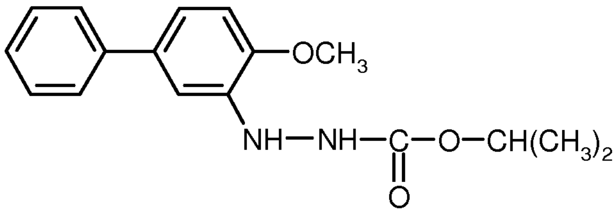

bekannt aus WO 93/10 083

77. Diafenthiuron (II-12A-1)

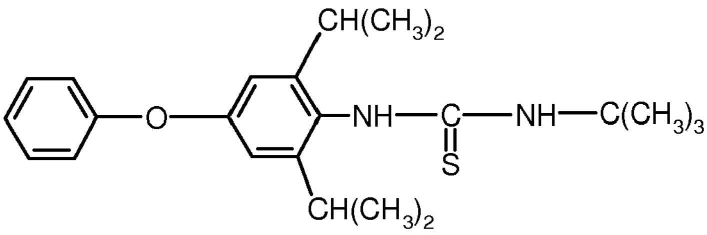

bekannt aus EP-A-210 487

78. Etoxazole (II-10B-1)

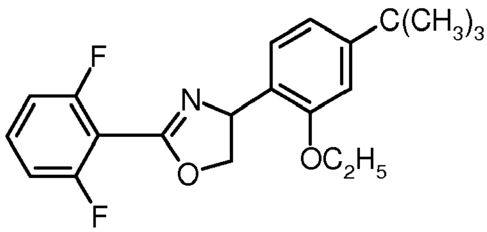

bekannt aus WO 93/22 297

79. Clofentezine (II-10A-1)

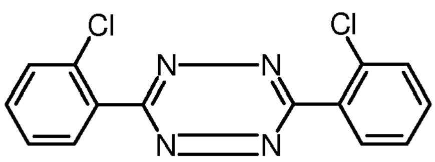

bekannt aus EP-A-005 912

80. dem Makrolid der Formel

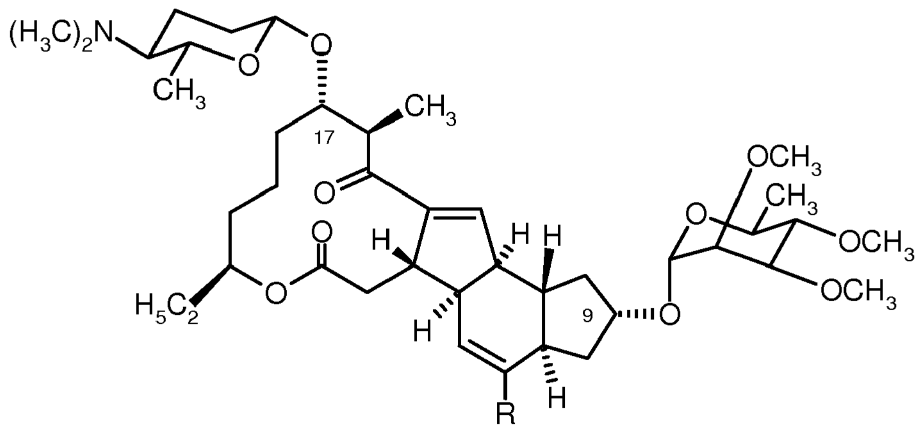

Spinosad (II-5-1) ein Gemisch aus bevorzugt 85 % Spinosyn A R=H 15 % Spinosyn B R = $CH_3$ bekannt aus EP-A-375 316

81. Triarathen (II-29-26)

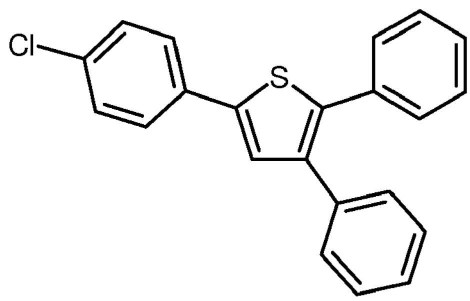

bekannt aus DE-A-2 724 494

82. Tetradifon (II-12C-2)

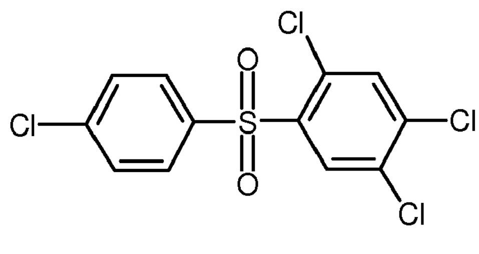

bekannt aus US 2,812,281

83. Propargite (II-12C-1)

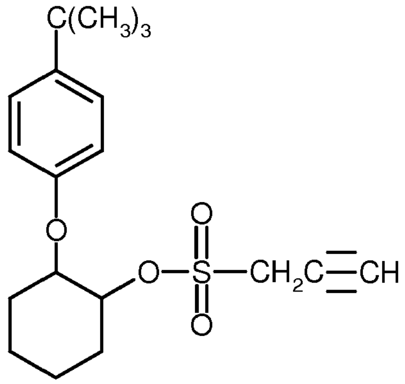

bekannt aus US 3,272,854

84. Hexythiazox (II-10A-2)

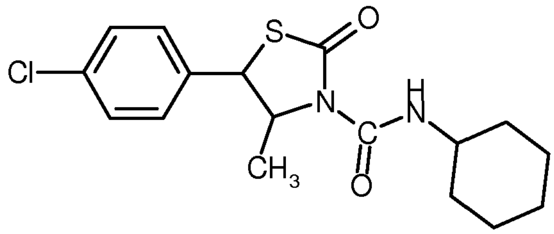

bekannt aus DE-A-3 037 105

85. Bromopropylat (II-29-4)

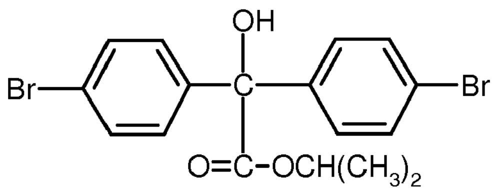

bekannt aus US 3,784,696

86. Chinomethionat (II-29-6)

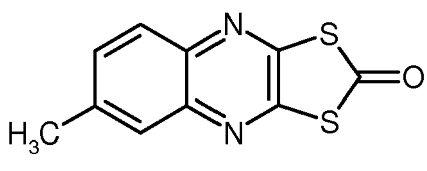

bekannt aus DE-A-1 100 372

87. Amitraz (II-19-1)

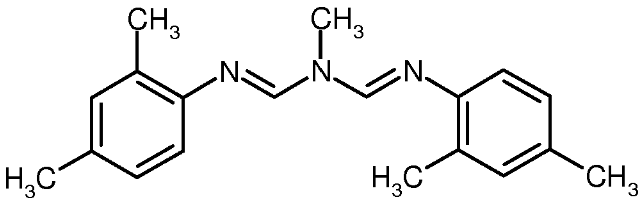

bekannt aus DE-A-2 061 132

88. Pyrifluquinazon (II-9B-2)

1-Acetyl-3,4-dihydro-3-[(3-pyridinylmethyl)amino]-6-[1,2,2,2-tetrafluoro-1-(trifluoromethyl)ethyl-2(1H)-quinazolinone

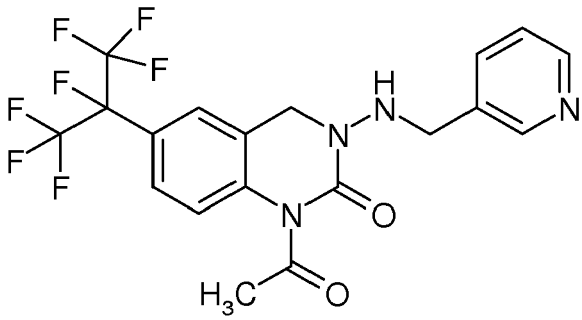

bekannt aus EP-A-01097932

89. Pymetrozine (II-9B-1)

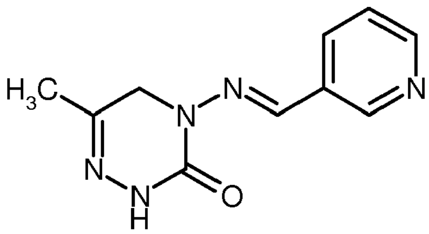

bekannt aus EP-A-314 615

90. Flonicamid (II-9C-1)

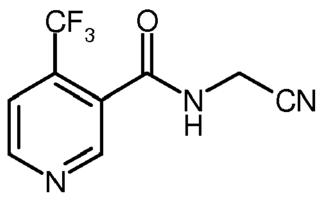

bekannt aus EP-A-00580374

91. Pyriproxyfen (II-7C-1)

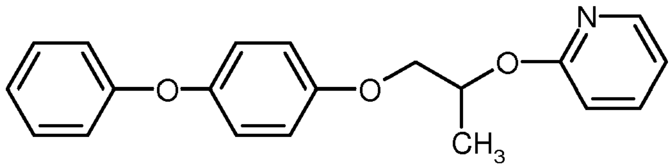

bekannt aus EP-A-128 648

92. Diofenolan (II-7C-2)

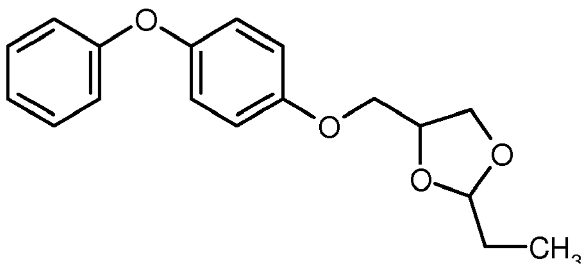

bekannt aus DE-A 2 655 910

93. Chlorfenapyr (11-13-1)

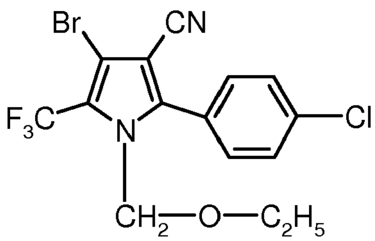

bekannt aus EP-A-347 488

94. Metaflumizone (II-22B-1)

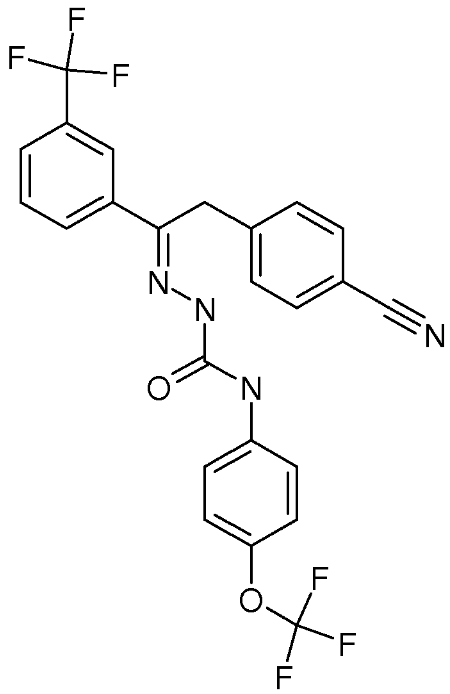

bekannt aus EP-A-00462456

95. Indoxacarb (II-22A-1)

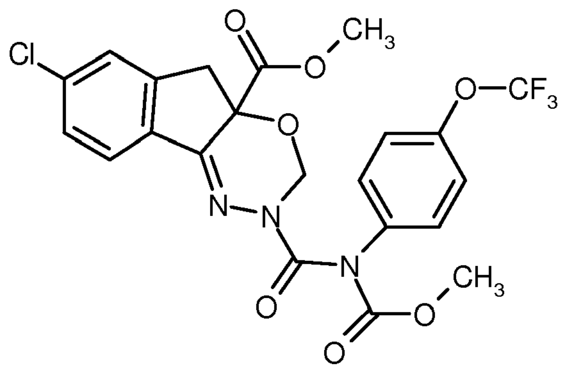

bekannt aus WO 92/11249 sowie das +-Enantiomer DPX-KN 128 bekannt aus ACS Symposium Series 800, S.178

96. Chlorpyrifos (II-1B-12)

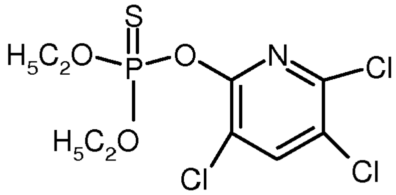

bekannt aus US 3,244,586

97. Spirodiclofen (II-23A-1)

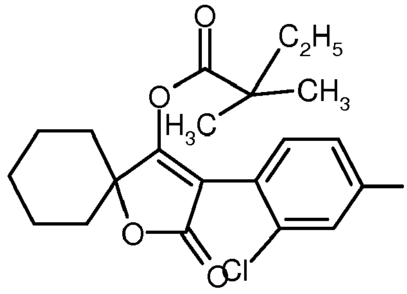

bekannt aus EP-A-528 156

98. Spiromesifen (II-23A-2)

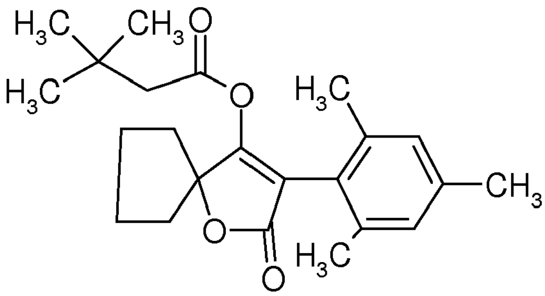

bekannt aus EP-A-528 156

99. Spirotetramat (II-23B-1)

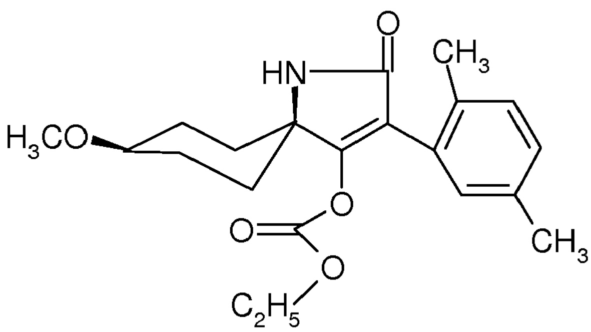

bekannt aus WO 04/007 448 99. Pyridalyl (II-29-23)

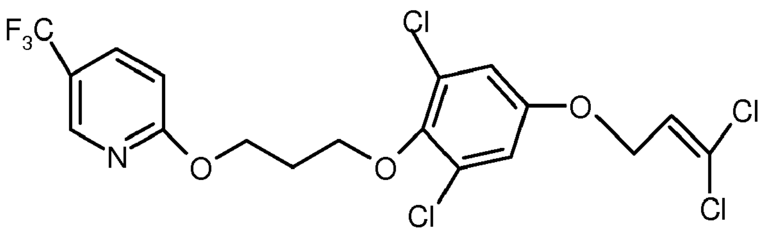

bekannt aus WO 96/11909
101. 4-{[(6-Chlorpyrid-3-yl)methyl](methyl)amino}furan-2(5H)-on (II-29-28)
bekannt aus EP-A-0 539 588)

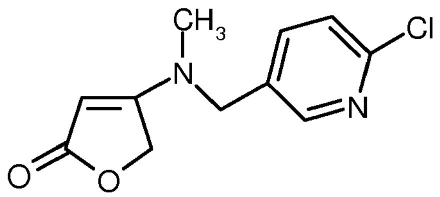

bekannt aus EP-A-0 539 588
102. 4-{[(6-Chlorpyrid-3-yl)methyl](2,2-difluorethyl) amino}furan-2(5H)-on (II-29-29)
bekannt aus WO 2007/115644

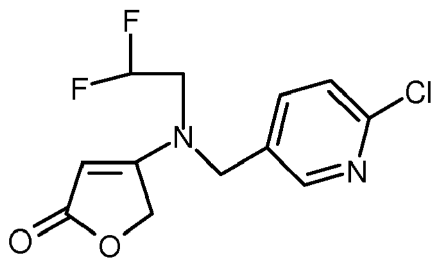

bekannt aus DE-A-102006015467
103. Spinetoram (II-5-2)

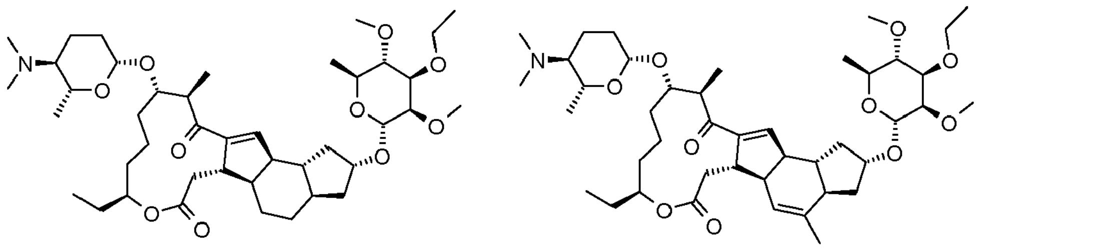

bekannt aus WO 97/00265, Crouse GD et. al. Pest. Management Science 57, 177-185, (2001)
104. 1-{2-Fluor-4-methyl-5-[(2,2,2-trifluorethyl)sulfinyl]phenyl}-3-(trifluormethyl)-1H-1,2,4-triazol-5-amino (II-29-31)

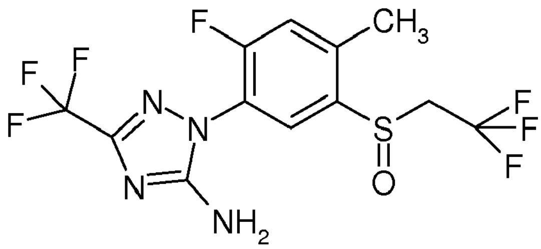

bekannt aus WO 2006/043635.
105. Sulfoxaflor (II-29-32)

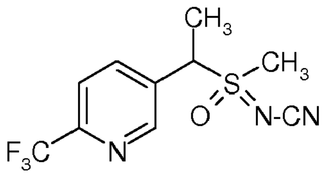

bekannt aus WO 2007/095229 A2 und WO 2007/149134.

Am meisten bevorzugt sind Wirkstoffkombinationen,

- die als Verbindung der Formel (I) die Verbindung der Formel (I-1) enthalten und als Wirkstoff der Formel (II) einen Wirkstoff ausgewählt aus der Gruppe bestehend aus Abamectin, Acephate, Acetamiprid, AKD 1022, Alpha-Cypermethrin, Amitraz, Bifenthrin, Buprofezin, Chloranthraniliprole, Chlorfenapyr, Chlorpyrifos, Clothianidin, Cyazypyr, Cyenopyrafen, Cyflumetofen, Cypermethrin, Cyromazine, Deltamethrin, Diafenthiuron, Dinotefuran, Emamectin-Benzoate, Ethiprole, Fenpyroximate, Fipronil, Flonicamid, Flubendiamid, Flufenoxuron, Gamma-Cyhalothrin, IKA 2002, Imidacloprid, Imidaclothiz, Indoxacarb, L-Cyhalothrin, Lufenuron, Metaflumizone, Methoxyfenozide, Milbemectin, Novaluron, Profenofos, Pymetrozine, Pyridaben, Pyridalyl, Spinetoram, Spinosad, β-Cyfluthrin, Sulfoxaflor, Tebufenpyrad, Thiacloprid, Thiamethoxam, Transfluthrin, Triazophos, Triflumuron, Verbindung 11-28-2, Verbindung 11-29-28, Verbindung II-29-29 und Verbindung II-29-31 enthalten,

- die als Verbindung der Formel (I) die Verbindung der Formel (1-2) enthalten und als Wirkstoff der Formel (II) einen Wirkstoff ausgewählt aus der Gruppe bestehend aus Abamectin, Acephate, Acetamiprid, AKD 1022, Alpha-Cypermethrin, Amitraz, Bifenthrin, Buprofezin, Chloranthraniliprole, Chlorfenapyr, Chlorpyrifos, Clothianidin, Cyazypyr, Cyenopyrafen, Cyflumetofen, Cypermethrin, Cyromazine, Deltamethrin, Diafenthiuron, Dinotefuran, Emamectin-Benzoate, Ethiprole, Fenpyroximate, Fipronil, Flonicamid, Flubendiamid, Flufenoxuron, Gamma-Cyhalothrin, IKA 2002, Imidacloprid, Imidaclothiz, Indoxacarb, L-Cyhalothrin, Lufenuron, Metaflumizone, Methoxyfenozide, Milbemectin, Novaluron, Profenofos, Pymetrozine, Pyridaben, Pyridalyl, Spinetoram, Spinosad, β-Cyfluthrin, Sulfoxaflor, Tebufenpyrad, Thiacloprid, Thiamethoxam, Transfluthrin, Triazophos, Triflumuron, Verbindung 11-28-2, Verbindung 11-29-28, Verbindung II-29-29 und Verbindung II-29-31 enthalten,

- die als Verbindung der Formel (I) die Verbindung der Formel (1-3) enthalten und als Wirkstoff der Formel (II) einen Wirkstoff ausgewählt aus der Gruppe bestehend aus Abamectin, Acephate, Acetamiprid, AKD 1022, Alpha-Cypermethrin, Amitraz, Bifenthrin, Buprofezin, Chloranthraniliprole, Chlorfenapyr, Chlorpyrifos, Clothianidin, Cyazypyr, Cyenopyrafen, Cyflumetofen, Cypermethrin, Cyromazine, Deltamethrin, Diafenthiuron, Dinotefuran, Emamectin-Benzoate, Ethiprole, Fenpyroximate, Fipronil, Flonicamid, Flubendiamid, Flufenoxuron, Gamma-Cyhalothrin, IKA 2002, Imidacloprid, Imidaclothiz, Indoxacarb, L-Cyhalothrin, Lufenuron, Metaflumizone, Methoxyfenozide, Milbemectin, Novaluron, Profenofos, Pymetrozine, Pyridaben, Pyridalyl, Spinetoram, Spinosad, β-Cyfluthrin, Sulfoxaflor, Tebufenpyrad, Thiacloprid, Thiamethoxam, Transfluthrin, Triazophos, Triflumuron, Verbindung 11-28-2, Verbindung 11-29-28, Verbindung II-29-29 und Verbindung II-29-31 enthalten.

Die Wirkstoffkombinationen können darüber hinaus auch weitere fungizid, akarizid oder insektizid wirksame Zumischkomponenten enthalten.

Wenn die Wirkstoffe in den erfindungsgemäßen Wirkstoffkombinationen in bestimmten Gewichtsverhältnissen vorhanden sind, zeigt sich die verbesserte Wirkung. Jedoch können die Gewichtsverhältnisse der Wirkstoffe in den Wirkstoffkombinationen in einem relativ großen Bereich variiert werden. Im allgemeinen enthalten die erfindungsgemäßen Kombinationen Wirkstoffe der Formel (I), insbesondere der Formeln (I-1) bis (1-6) und den Mischpartner der Formel (II) in den in der nachfolgenden Tabelle angegeben bevorzugten und besonders bevorzugten Mischungsverhältnissen: die Mischungsverhältnisse basieren auf Gewichtsverhältnissen. Das Verhältnis ist zu verstehen als Wirkstoff der Formel (I-1) bis Formel (1-6) : Mischpartner

| | Mischpartner | bevorzugtes Mischungsverhältnis | besonders bevorzugtes Mischungsverhältnis | ganz besonders bevorzugtes Mischungsverhältnis |
|---|---|---|---|---|
| 1. | Acrinathrin | 125:1 bis 1:125 | 25:1 bis 1:25 | 5:1 bis 1:5 |
| 2. | Alpha-Cypermethrin | 125:1 bis 1:125 | 25:1 bis 1:25 | 5:1 bis 1:5 |
| 3. | Betacyfluthrin | 125:1 bis 1:125 | 25:1 bis 1:25 | 5:1 bis 1:5 |
| 4. | Cyhalothrin | 125:1 bis 1:125 | 25:1 bis 1:25 | 5:1 bis 1:5 |
| 5. | Cypermethrin | 125:1 bis 1:125 | 25:1 bis 1:25 | 5:1 bis 1:5 |
| 6. | Deltamethrin | 125:1 bis 1:125 | 25:1 bis 1:25 | 5:1 bis 1:5 |
| 7. | Esfenvalerat | 125:1 bis 1:125 | 25:1 bis 1:25 | 5:1 bis 1:5 |
| 8. | Etofenprox | 125:1 bis 1:125 | 25:1 bis 1:25 | 5:1 bis 1:5 |
| 9. | Fenpropathrin | 125:1 bis 1:125 | 25:1 bis 1:25 | 5:1 bis 1:5 |
| 10. | Fenvalerat | 125:1 bis 1:125 | 25:1 bis 1:25 | 5:1 bis 1:5 |
| 11. | Flucythrinat | 125:1 bis 1:125 | 25:1 bis 1:25 | 5:1 bis 1:5 |
| 12.a | Lambda-Cyhalothrin | 125:1 bis 1:125 | 25:1 bis 1:25 | 5:1 bis 1:5 |
| 12.b | Gamma-Cyhalothrin | 125:1 bis 1:125 | 25:1 bis 1:25 | 5:1 bis 1:5 |
| 13. | Permethrin | 125:1 bis 1:125 | 25:1 bis 1:25 | 5:1 bis 1:5 |
| 14. | Tau-fluvalinat | 125:1 bis 1:125 | 25:1 bis 1:25 | 5:1 bis 1:5 |
| 15. | Tralomethrin | 125:1 bis 1:125 | 25:1 bis 1:25 | 5:1 bis 1:5 |
| 16. | Zeta-Cypermethrin | 125:1 bis 1:125 | 25:1 bis 1:25 | 5:1 bis 1:5 |
| 17. | Cyfluthrin | 125:1 bis 1:125 | 25:1 bis 1:25 | 5:1 bis 1:5 |
| 18. | Bifenthrin | 125:1 bis 1:125 | 25:1 bis 1:25 | 5:1 bis 1:5 |
| 19. | Cycloprothrin | 125:1 bis 1:125 | 25:1 bis 1:25 | 5:1 bis 1:5 |
| 20. | Eflusilanat | 125:1 bis 1:125 | 25:1 bis 1:25 | 5:1 bis 1:5 |
| 21. | Fubfenprox | 125:1 bis 1:125 | 25:1 bis 1:25 | 5:1 bis 1:5 |
| 22. | Transfluthrin | 125:1 bis 1:125 | 25:1 bis 1:25 | 5:1 bis 1:5 |
| 23. | Pyrethrin | 125:1 bis 1:125 | 25:1 bis 1:25 | 5:1 bis 1:5 |
| 24. | Resmethrin | 125:1 bis 1:125 | 25:1 bis 1:25 | 5:1 bis 1:5 |
| 25. | Imidacloprid | 125:1 bis 1:125 | 25:1 bis 1:25 | 5:1 bis 1:5 |
| 26. | Acetamiprid | 125:1 bis 1:125 | 25:1 bis 1:25 | 5:1 bis 1:5 |
| 27. | Thiamethoxam | 125:1 bis 1:125 | 25:1 bis 1:25 | 5:1 bis 1:5 |
| 28. | Nitenpyram | 125:1 bis 1:125 | 25:1 bis 1:25 | 5:1 bis 1:5 |
| 29. | Thiacloprid | 125:1 bis 1:125 | 25:1 bis 1:25 | 5:1 bis 1:5 |
| 30. | Dinotefuran | 125:1 bis 1:125 | 25:1 bis 1:25 | 5:1 bis 1:5 |
| 31. | Clothianidin | 125:1 bis 1:125 | 25:1 bis 1:25 | 5:1 bis 1:5 |
| 32. | Imidaclothiz | 125:1 bis 1:125 | 25:1 bis 1:25 | 5:1 bis 1:5 |
| 33. | Chlorfluazuron | 125:1 bis 1:125 | 25:1 bis 1:25 | 5:1 bis 1:5 |
| 34. | Diflubenzuron | 125:1 bis 1:125 | 25:1 bis 1:25 | 5:1 bis 1:5 |
| 35. | Lufenuron | 125:1 bis 1:125 | 25:1 bis 1:25 | 5:1 bis 1:5 |
| 36. | Teflubenzuron | 125:1 bis 1:125 | 25:1 bis 1:25 | 5:1 bis 1:5 |

(fortgesetzt)

| | Mischpartner | bevorzugtes Mischungsverhältnis | besonders bevorzugtes Mischungsverhältnis | ganz besonders bevorzugtes Mischungsverhältnis |
|---|---|---|---|---|
| 37. | Triflumuron | 125:1 bis 1:125 | 25:1 bis 1:25 | 5:1 bis 1:5 |
| 38. | Novaluron | 125:1 bis 1:125 | 25:1 bis 1:25 | 5:1 bis 1:5 |
| 39. | Flufenoxuron | 125:1 bis 1:125 | 25:1 bis 1:25 | 5:1 bis 1:5 |
| 40. | Hexaflumuron | 125:1 bis 1:125 | 25:1 bis 1:25 | 5:1 bis 1:5 |
| 41. | Bistrifluoron | 125:1 bis 1:125 | 25:1 bis 1:25 | 5:1 bis 1:5 |
| 42. | Noviflumuron | 125:1 bis 1:125 | 25:1 bis 1:25 | 5:1 bis 1:5 |
| 43. | Buprofezin | 125:1 bis 1:125 | 25:1 bis 1:25 | 5:1 bis 1:5 |
| 44. | Cyromazine | 125:1 bis 1:125 | 25:1 bis 1:25 | 5:1 bis 1:5 |
| 45. | Methoxyfenozide | 125:1 bis 1:125 | 25:1 bis 1:25 | 5:1 bis 1:5 |
| 46. | Tebufenozide | 125:1 bis 1:125 | 25:1 bis 1:25 | 5:1 bis 1:5 |
| 47. | Halofenozide | 125:1 bis 1:125 | 25:1 bis 1:25 | 5:1 bis 1:5 |
| 48. | Fufenozide (JS-118) | 125:1 bis 1:125 | 25:1 bis 1:25 | 5:1 bis 1:5 |
| 49. | Chromafenozide | 125:1 bis 1:125 | 25:1 bis 1:25 | 5:1 bis 1:5 |
| 50. | Endosulfan | 125:1 bis 1:125 | 25:1 bis 1:25 | 5:1 bis 1:5 |
| 51. | Fipronil | 125:1 bis 1:125 | 25:1 bis 1:25 | 5:1 bis 1:5 |
| 52. | Ethiprole | 125:1 bis 1:125 | 25:1 bis 1:25 | 5:1 bis 1:5 |
| 53. | Pyrafluprole | 125:1 bis 1:125 | 25:1 bis 1:25 | 5:1 bis 1:5 |
| 54. | Pyriprole | 125:1 bis 1:125 | 25:1 bis 1:25 | 5:1 bis 1:5 |
| 55. | Flubendiamide | 125:1 bis 1:125 | 25:1 bis 1:25 | 5:1 bis 1:5 |
| 56. | Verbindung II-28-2 | 125:1 bis 1:125 | 25:1 bis 1:25 | 5:1 bis 1:5 |
| 57. | Rynaxapyr | 125:1 bis 1:125 | 25:1 bis 1:25 | 5:1 bis 1:5 |
| 58. | (Cyazypyr) | 125:1 bis 1:125 | 25:1 bis 1:25 | 5:1 bis 1:5 |
| 59. | Emamectin | 125:1 bis 1:125 | 25:1 bis 1:25 | 5:1 bis 1:5 |
| 60. | Emamectin benzoate | 125:1 bis 1:125 | 25:1 bis 1:25 | 5:1 bis 1:5 |
| 61. | Abamectin | 125:1 bis 1:125 | 25:1 bis 1:25 | 5:1 bis 1:5 |
| 62. | Ivermectin | 125:1 bis 1:125 | 25:1 bis 1:25 | 5:1 bis 1:5 |
| 63. | Milbemectin | 125:1 bis 1:125 | 25:1 bis 1:25 | 5:1 bis 1:5 |
| 64. | Lepimectin | 125:1 bis 1:125 | 25:1 bis 1:25 | 5:1 bis 1:5 |
| 65. | Tebufenpyrad | 125:1 bis 1:125 | 25:1 bis 1:25 | 5:1 bis 1:5 |
| 66. | Fenpyroximat | 125:1 bis 1:125 | 25:1 bis 1:25 | 5:1 bis 1:5 |
| 67. | Pyridaben | 125:1 bis 1:125 | 25:1 bis 1:25 | 5:1 bis 1:5 |
| 68. | Fenazaquin | 125:1 bis 1:125 | 25:1 bis 1:25 | 5:1 bis 1:5 |
| 69. | Pyrimidifen | 125:1 bis 1:125 | 25:1 bis 1:25 | 5:1 bis 1:5 |
| 70. | Tolfenpyrad | 125:1 bis 1:125 | 25:1 bis 1:25 | 5:1 bis 1:5 |
| 71. | Dicofol | 125:1 bis 1:125 | 25:1 bis 1:25 | 5:1 bis 1:5 |
| 72. | Cyenopyrafen | 125:1 bis 1:125 | 25:1 bis 1:25 | 5:1 bis 1:5 |

(fortgesetzt)

| | Mischpartner | bevorzugtes Mischungsverhältnis | besonders bevorzugtes Mischungsverhältnis | ganz besonders bevorzugtes Mischungsverhältnis |
|---|---|---|---|---|
| 73. | Cyflumetofen | 125:1 bis 1:125 | 25:1 bis 1:25 | 5:1 bis 1:5 |
| 74. | Acequinocyl | 125:1 bis 1:125 | 25:1 bis 1:25 | 5:1 bis 1:5 |
| 75. | Fluacrypyrin | 125:1 bis 1:125 | 25:1 bis 1:25 | 5:1 bis 1:5 |
| 76. | Bifenazate | 125:1 bis 1:125 | 25:1 bis 1:25 | 5:1 bis 1:5 |
| 77. | Diafenthiuron | 125:1 bis 1:125 | 25:1 bis 1:25 | 5:1 bis 1:5 |
| 78. | Etoxazole | 125:1 bis 1:125 | 25:1 bis 1:25 | 5:1 bis 1:5 |
| 79. | Clofentezine | 125:1 bis 1:125 | 25:1 bis 1:25 | 5:1 bis 1:5 |
| 80. | Spinosad | 125:1 bis 1:125 | 25:1 bis 1:25 | 5:1 bis 1:5 |
| 81. | Triarathen | 125:1 bis 1:125 | 25:1 bis 1:25 | 5:1 bis 1:5 |
| 82. | Tetradifon | 125:1 bis 1:125 | 25:1 bis 1:25 | 5:1 bis 1:5 |
| 83. | Propargit | 125:1 bis 1:125 | 25:1 bis 1:25 | 5:1 bis 1:5 |
| 84. | Hexythiazox | 125:1 bis 1:125 | 25:1 bis 1:25 | 5:1 bis 1:5 |
| 85. | Bromopropylat | 125:1 bis 1:125 | 25:1 bis 1:25 | 5:1 bis 1:5 |
| 86. | Chinomethionat | 125:1 bis 1:125 | 25:1 bis 1:25 | 5:1 bis 1:5 |
| 87. | Amitraz | 125:1 bis 1:125 | 25:1 bis 1:25 | 5:1 bis 1:5 |
| 88. | Pyrifluquinazon NNI0101 | 125:1 bis 1:125 | 25:1 bis 1:25 | 5:1 bis 1:5 |
| 89. | Pymetrozine | 125:1 bis 1:125 | 25:1 bis 1:25 | 5:1 bis 1:5 |
| 90. | Flonicamid | 125:1 bis 1:125 | 25:1 bis 1:25 | 5:1 bis 1:5 |
| 91. | Pyriproxyfen | 125:1 bis 1:125 | 25:1 bis 1:25 | 5:1 bis 1:5 |
| 92. | Diofenolan | 125:1 bis 1:125 | 25:1 bis 1:25 | 5:1 bis 1:5 |
| 93. | Chlorfenapyr | 125:1 bis 1:125 | 25:1 bis 1:25 | 5:1 bis 1:5 |
| 94. | Metaflumizone | 125:1 bis 1:125 | 25:1 bis 1:25 | 5:1 bis 1:5 |
| 95. | Indoxacarb | 125:1 bis 1:125 | 25:1 bis 1:25 | 5:1 bis 1:5 |
| 96. | Chlorpyrifos | 125:1 bis 1:125 | 25:1 bis 1:25 | 5:1 bis 1:5 |
| 97. | Spirodiclofen | 125:1 bis 1:125 | 25:1 bis 1:25 | 5:1 bis 1:5 |
| 98. | Spiromesifen | 125:1 bis 1:125 | 25:1 bis 1:25 | 5:1 bis 1:5 |
| 99. | Spirotetramat | 125:1 bis 1:125 | 25:1 bis 1:25 | 5:1 bis 1:5 |
| 100. | Pyridalyl | 125:1 bis 1:125 | 25:1 bis 1:25 | 5:1 bis 1:5 |
| 101. | Verbindung II-29-28 | 125:1 bis 1:125 | 25:1 bis 1:25 | 5:1 bis 1:5 |
| 102. | Verbindung II-29-29 | 125:1 bis 1:125 | 25:1 bis 1:25 | 5:1 bis 1:5 |
| 103. | Spinetoram | 125:1 bis 1:125 | 25:1 bis 1:25 | 5:1 bis 1:5 |
| 104. | Verbindung II-29-31 | 125:1 bis 1:125 | 25:1 bis 1:25 | 5:1 bis 1:5 |
| 105. | Sulfoxaflor | 125:1 bis 1:125 | 25:1 bis 1:25 | 5:1 bis 1:5 |

Die erfindungsgemäßen Wirkstoffkombinationen eignen sich zur Bekämpfung von tierischen Schädlingen, vorzugsweise Arthropoden und Nematoden, insbesondere Insekten und Spinnentieren, die im Weinanbau, Obstanbau, in der Landwirtschaft, der Tiergesundheit, in Forsten, im Vorrats- und Materialschutz sowie auf dem Hygienesektor

vorkommen. Sie sind gegen normal sensible und resistente Arten sowie gegen alle oder einzelne Entwicklungsstadien wirksam. Zu den oben erwähnten Schädlingen gehören:

Aus der Ordnung der Anoplura (Phthiraptera) z.B. Damalinia spp., Haematopinus spp., Linognathus spp., Pediculus spp., Trichodectes spp..
Aus der Klasse der Arachnida z.B. Acarus siro, Aceria sheldoni, Aculops spp., Aculus spp., Amblyomma spp., Argas spp., Boophilus spp., Brevipalpus spp., Bryobia praetiosa, Chorioptes spp., Dermanyssus gallinae, Eotetranychus spp., Epitrimerus pyri, Eutetranychus spp., Eriophyes spp., Hemitarsonemus spp., Hyalomma spp., Ixodes spp., Latrodectus mactans, Metatetranychus spp., Oligonychus spp., Ornithodoros spp., Panonychus spp., Phyllocoptruta oleivora, Polyphagotarsonemus latus, Psoroptes spp., Rhipicephalus spp., Rhizoglyphus spp., Sarcoptes spp., Scorpio maurus, Stenotarsonemus spp., Tarsonemus spp., Tetranychus spp., Vasates lycopersici.
Aus der Klasse der Bivalva z.B. Dreissena spp..
Aus der Ordnung der Chilopoda z.B. Geophilus spp., Scutigera spp..
Aus der Ordnung der Coleoptera z.B. Acanthoscelides obtectus, Adoretus spp., Agelastica alni, Agriotes spp., Amphimallon solstitialis, Anobium punctatum, Anoplophora spp., Anthonomus spp., Anthrenus spp., Apogonia spp., Atomaria spp., Attagenus spp., Bruchidius obtectus, Bruchus spp., Ceuthorhynchus spp., Cleonus mendicus, Conoderus spp., Cosmopolites spp., Costelytra zealandica, Curculio spp., Cryptorhynchus lapathi, Dermestes spp., Diabrotica spp., Epilachna spp., Faustinus cubae, Gibbium psylloides, Heteronychus arator, Hylamorpha elegans, Hylotrupes bajulus, Hypera postica, Hypothenemus spp., Lachnosterna consanguinea, Leptinotarsa decemlineata, Lissorhoptrus oryzophilus, Lixus spp., Lyctus spp., Meligethes aeneus, Melolontha melolontha, Migdolus spp., Monochamus spp., Naupactus xanthographus, Niptus hololeucus, Oryctes rhinoceros, Oryzaephilus surinamensis, Otiorrhynchus sulcatus, Oxycetonia jucunda, Phaedon cochleariae, Phyllophaga spp., Popillia japonica, Premnotrypes spp., Psylliodes chrysocephala, Ptinus spp., Rhizobius ventralis, Rhizopertha dominica, Sitophilus spp., Sphenophorus spp., Sternechus spp., Symphyletes spp., Tenebrio molitor, Tribolium spp., Trogoderma spp., Tychius spp., Xylotrechus spp., Zabrus spp..
Aus der Ordnung der Collembola z.B. Onychiurus armatus.
Aus der Ordnung der Dermaptera z.B. Forficula auricularia.
Aus der Ordnung der Diplopoda z.B. Blaniulus guttulatus.
Aus der Ordnung der Diptera z.B. Aedes spp., Anopheles spp., Bibio hortulanus, Calliphora erythrocephala, Ceratitis capitata, Chrysomyia spp., Cochliomyia spp., Cordylobia anthropophaga, Culex spp., Cuterebra spp., Dacus oleae, Dermatobia hominis, Drosophila spp., Fannia spp., Gastrophilus spp., Hylemyia spp., Hyppobosca spp., Hypoderma spp., Liriomyza spp.. Lucilia spp., Musca spp., Nezara spp., Oestrus spp., Oscinella frit, Pegomyia hyoscyami, Phorbia spp., Stomoxys spp., Tabanus spp., Tannia spp., Tipula paludosa, Wohlfahrtia spp.
Aus der Klasse der Gastropoda z.B. Arion spp., Biomphalaria spp., Bulinus spp., Deroceras spp., Galba spp., Lymnaea spp., Oncomelania spp., Succinea spp..
Aus der Klasse der Helminthen z.B. Ancylostoma duodenale, Ancylostoma ceylanicum, Acylostoma braziliensis, Ancylostoma spp., Ascaris lubricoides, Ascaris spp., Brugia malayi, Brugia timori, Bunostomum spp., Chabertia spp., Clonorchis spp., Cooperia spp., Dicrocoelium spp., Dictyocaulus filaria, Diphyllobothrium latum, Dracunculus medinensis, Echinococcus granulosus, Echinococcus multilocularis, Enterobius vermicularis, Faciola spp., Haemonchus spp., Heterakis spp., Hymenolepis nana, Hyostrongulus spp., Loa Loa, Nematodirus spp., Oesophagostomum spp., Opisthorchis spp., Onchocerca volvulus, Ostertagia spp., Paragonimus spp., Schistosomen spp, Strongyloides fuelleborni, Strongyloides stercoralis, Stronyloides spp., Taenia saginata, Taenia solium, Trichinella spiralis, Trichinella nativa, Trichinella britovi, Trichinella nelsoni, Trichinella pseudopsiralis, Trichostrongulus spp., Trichuris trichuria, Wuchereria bancrofti.
Weiterhin lassen sich Protozoen, wie Eimeria, bekämpfen.
Aus der Ordnung der Heteroptera z.B. Anasa tristis, Antestiopsis spp., Blissus spp., Calocoris spp., Campylomma livida, Cavelerius spp., Cimex spp., Creontiades dilutus, Dasynus piperis, Dichelops furcatus, Diconocoris hewetti, Dysdercus spp., Euschistus spp., Eurygaster spp., Heliopeltis spp., Horcias nobilellus, Leptocorisa spp., Leptoglossus phyllopus, Lygus spp., Macropes excavatus, Miridae, Nezara spp., Oebalus spp., Pentomidae, Piesma quadrata, Piezodorus spp., Psallus seriatus, Pseudacysta persea, Rhodnius spp., Sahlbergella singularis, Scotinophora spp., Stephanitis nashi, Tibraca spp., Triatoma spp.
Aus der Ordnung der Homoptera z.B. Acyrthosipon spp., Aeneolamia spp., Agonoscena spp., Aleurodes spp., Aleurolobus barodensis, Aleurothrixus spp., Amrasca spp., Anuraphis cardui, Aonidiella spp., Aphanostigma piri, Aphis spp., Arboridia apicalis, Aspidiella spp., Aspidiotus spp., Atanus spp., Aulacorthum solani, Bemisia spp., Brachycaudus helichrysii, Brachycolus spp., Brevicoryne brassicae, Calligypona marginata, Carneocephala fulgida, Ceratovacuna lanigera, Cercopidae, Ceroplastes spp., Chaetosiphon fragaefolii, Chionaspis tegalensis, Chlorita onukii, Chromaphis juglandicola, Chrysomphalus ficus, Cicadulina mbila, Coccomytilus halli, Coccus spp., Cryptomyzus ribis, Dalbulus spp., Dialeurodes spp., Diaphorina spp., Diaspis spp., Doralis spp., Drosicha spp., Dysaphis

spp., Dysmicoccus spp., Empoasca spp., Eriosoma spp., Erythroneura spp., Euscelis bilobatus, Geococcus coffeae, Homalodisca coagulata, Hyalopterus arundinis, Icerya spp., Idiocerus spp., Idioscopus spp., Laodelphax striatellus, Lecanium spp., Lepidosaphes spp., Lipaphis erysimi, Macrosiphum spp., Mahanarva fimbriolata, Melanaphis sacchari, Metcalfiella spp., Metopolophium dirhodum, Monellia costalis, Monelliopsis pecanis, Myzus spp., Nasonovia ribisnigri, Nephotettix spp., Nilaparvata lugens, Oncometopia spp., Orthezia praelonga, Parabemisia myricae, Paratrioza spp., Parlatoria spp., Pemphigus spp., Peregrinus maidis, Phenacoccus spp., Phloeomyzus passerinii, Phorodon humuli, Phylloxera spp., Pinnaspis aspidistrae, Planococcus spp., Protopulvinaria pyriformis, Pseudaulacaspis pentagona, Pseudococcus spp., Psylla spp., Pteromalus spp., Pyrilla spp., Quadraspidiotus spp., Quesada gigas, Rastrococcus spp., Rhopalosiphum spp., Saissetia spp., Scaphoides titanus, Schizaphis graminum, Selenaspidus articulatus, Sogata spp., Sogatella furcifera, Sogatodes spp., Stictocephala festina, Tenalaphara malayensis, Tinocallis caryaefoliae, Tomaspis spp., Toxoptera spp., Trialeurodes vaporariorum, Trioza spp., Typhlocyba spp., Unaspis spp., Viteus vitifolii.

Aus der Ordnung der Hymenoptera z.B. Diprion spp., Hoplocampa spp., Lasius spp., Monomorium pharaonis, Vespa spp..

Aus der Ordnung der Isopoda z.B. Armadillidium vulgare, Oniscus asellus, Porcellio scaber.

Aus der Ordnung der Isoptera z.B. Reticulitermes spp., Odontotermes spp..

Aus der Ordnung der Lepidoptera z.B. Acronicta major, Aedia leucomelas, Agrotis spp., Alabama argillacea, Anticarsia spp., Barathra brassicae, Bucculatrix thurberiella, Bupalus piniarius, Cacoecia podana, Capua reticulana, Carpocapsa pomonella, Cheimatobia brumata, Chilo spp., Choristoneura fumiferana, Clysia ambiguella, Cnaphalocerus spp., Earias insulana, Ephestia kuehniella, Euproctis chrysorrhoea, Euxoa spp., Feltia spp., Galleria mellonella, Helicoverpa spp., Heliothis spp., Hofmannophila pseudospretella, Homona magnanima, Hyponomeuta padella, Laphygma spp., Lithocolletis blancardella, Lithophane antennata, Loxagrotis albicosta, Lymantria spp., Malacosoma neustria, Mamestra brassicae, Mocis repanda, Mythimna separata, Oria spp., Oulema oryzae, Panolis flammea, Pectinophora gossypiella, Phyllocnistis citrella, Pieris spp., Plutella xylostella, Prodenia spp., Pseudaletia spp., Pseudoplusia includens, Pyrausta nubilalis, Spodoptera spp., Thermesia gemmatalis, Tinea pellionella, Tineola bisselliella, Tortrix viridana, Trichoplusia spp..

Aus der Ordnung der Orthoptera z.B. Acheta domesticus, Blatta orientalis, Blattella germanica, Gryllotalpa spp., Leucophaea maderae, Locusta spp., Melanoplus spp., Periplaneta americana, Schistocerca gregaria.

Aus der Ordnung der Siphonaptera z.B. Ceratophyllus spp., Xenopsylla cheopis.

Aus der Ordnung der Symphyla z.B. Scutigerella immaculata.

Aus der Ordnung der Thysanoptera z.B. Baliothrips biformis, Enneothrips flavens, Frankliniella spp., Heliothrips spp., Hercinothrips femoralis, Kakothrips spp., Rhipiphorothrips cruentatus, Scirtothrips spp., Taeniothrips cardamoni, Thrips spp..

Aus der Ordnung der Thysanura z.B. Lepisma saccharina.

Zu den pflanzenparasitären Nematoden gehören z.B. Anguina spp., Aphelenchoides spp., Belonoaimus spp., Bursaphelenchus spp., Ditylenchus dipsaci, Globodera spp., Heliocotylenchus spp., Heterodera spp., Longidorus spp., Meloidogyne spp., Pratylenchus spp., Radopholus similis, Rotylenchus spp., Trichodorus spp., Tylenchorhynchus spp., Tylenchulus spp., Tylenchulus semipenetrans, Xiphinema spp..

Die Wirkstoffkombinationen können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Einweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoff, vorzugsweise zwischen 0,5 und 90 %.

Die erfindungsgemäßen Wirkstoffkombinationen können in handelsüblichen Formulierungen sowie in den aus diesen Formulierungen bereiteten Anwendungsformen in Mischung mit anderen Wirkstoffen, wie Insektiziden, Lockstoffen, Sterilantien, Bakteriziden, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Auch eine Mischung mit anderen bekannten Wirkstoffen, wie Herbiziden oder mit Düngemitteln und Wachstumsregulatoren ist möglich.

Die erfindungsgemäßen Wirkstoffkombinationen können ferner beim Einsatz als Insektizide in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einerden Anwendungsformen angepaßten üblichen Weise Erfindungsgemäß können alle Planzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Beispielhaft seien die wichtigen Kulturpflanzen, wie Getreide (Weizen, Reis), Mais, Soja, Kartoffel, Zuckerrüben, Tomaten, Erbsen und andere Gemüsesorten, Baumwolle, Tabak, Raps, sowie Obstpflanzen (mit den Früchten Äpfel, Birnen, Zitrusfrüchten und Weintrauben) genannt. Unter Pflanzenteilen sollen alle oberirdischen und unterirdischen Teile und Organe der Pflanzen, wie Spross, Blatt, Blüte und Wurzel verstanden werden, wobei beispielhaft, Blätter, Nadeln, Stengel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhiozome, Ableger und Samen.

Die erfindungsgemäße Behandlung der Pflanzen und Pflanzenteile mit den Wirkstoffkombinationen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetic Modified Organisms) und deren Teile behandelt. Der Begriff "Teile" bzw. "Teile von Pflanzen" oder "Pflanzenteile" wurde oben erläutert.

Besonders bevorzugt werden erfindungsgemäß Pflanzen der jeweils handelsüblichen oder in Gebrauch befindlichen Pflanzensorten behandelt.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Raps sowie Obstpflanzen (mit den Früchten Äpfel, Birnen, Zitrusfrüchten und Weintrauben) erwähnt, wobei Mais, Soja, Kartoffel, Baumwolle und Raps besonders hervorgehoben werden. Als Eigenschaften ("Traits") werden besonders hervorgehoben die erhöhte Abwehr der Pflanzen gegen Insekten durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft erfindungsgemäß mit der erfindungsgemäßen Wirkstoffmischung behandelt werden. Die bei den Mischungen oben angegebenen Vorzugsbereiche gelten auch für die Behandlung dieser Pflanzen. Besonders hervorgehoben sei die Pflanzenbehandlung mit den im vorliegenden Text speziell aufgeführten Mischungen.

Die gute insektizide und akarizide Wirkung der erfindungsgemäßen Wirkstoffkombinationen geht aus den nachfolgenden Beispielen hervor. Während die einzelnen Wirkstoffe in der Wirkung Schwächen aufweisen, zeigen die Kombinationen eine Wirkung, die über eine einfache Wirkungssummierung hinausgeht.

Ein synergistischer Effekt liegt bei Insektiziden und Akariziden immer dann vor, wenn die Wirkung der Wirkstoffkombinationen größer ist als die Summe der Wirkungen der einzeln applizierten Wirkstoffe.

## Biologische Beispiele

Die zu erwartende Wirkung für eine gegebene Kombination zweier Wirkstoffe kann nach S.R. Colby, Weeds 15 (1967), 20-22 wie folgt berechnet werden:

Wenn

X den Abtötungsgrad, ausgedrückt in % der unbehandelten Kontrolle, beim Einsatz des Wirkstoffes A in einer Aufwandmenge von m g/ha oder in einer Konzentration von m ppm bedeutet,

Y den Abtötungsgrad, ausgedrückt in % der unbehandelten Kontrolle, beim Einsatz des Wirkstoffes B in einer Aufwandmenge von n g/ha oder in einer Konzentration von n ppm bedeutet und

E den Abtötungsgrad, ausgedrückt in % der unbehandelten Kontrolle, beim Einsatz der Wirkstoffe A und B in Aufwandmengen von m und n g/ha oder in einer Konzentration von m und n ppm bedeutet,

dann ist

$$E = X + Y - \frac{X \cdot Y}{100}$$

Ist der tatsächliche Abtötungsgrad größer als berechnet, so ist die Kombination in ihrer Abtötung überadditiv, d.h. es liegt ein synergistischer Effekt vor. In diesem Fall muss der tatsächlich beobachtete Abtötungsgrad größer sein als der aus der oben angeführten Formel errechnete Wert für den erwarteten Abtötungsgrad (E).

Beispiel **A**

**Myzus persicae -Test**

Lösungsmittel: 78 Gewichtsteile Aceton
1,5 Gewichtsteile Dimethylformamid
Emulgator: 0,5 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.
Kohlblätter (*Brassica oderacea*), die stark von der Grünen Pfirsichblattlaus (*Myzus persicae*) befallen sind, werden durch Spritzen mit der Wirkstoffzubereitung in der gewünschten Konzentration behandelt.
Nach der gewünschten Zeit wird die Abtötung in % bestimmt. Dabei bedeutet 100 %, dass alle Blattläuse abgetötet wurden; 0 % bedeutet, dass keine Blattläuse abgetötet wurden. Die ermittelten Abtötungswerte verrechnet man nach der Colby-Formel.
Bei diesem Test zeigten z. B. die folgenden Wirkstoffkombinationen gemäß vorliegender Anmeldung eine synergistisch verstärkte Wirksamkeit im Vergleich zu den einzeln angewendeten Wirkstoffen:

Tabelle A - 1: **Myzus persicae - Test**

| Wirkstoff | Konzentration in g/ha | Abtötung in % nach 1$^d$ | |
|---|---|---|---|
| **Verbindung der Formel (I-2)** | 500<br>100<br>20<br>4 | 0<br>0<br>0<br>0 | |
| **Verbindung der Formel (I-3)** | 500<br>100<br>20<br>4 | 0<br>0<br>0<br>0 | |
| **Imidacloprid** | 0,16 | 0 | |
| **Verbindung der Formel (I-2) + Imidacloprid (25 : 1)**<br>erfindungsgemäß | **4+0,16** | **gef.***<br>**90** | **ber.****<br>**0** |
| **Thiacloprid** | 0,16 | 0 | |
| **Verbindung der Formel (I-2) + Thiacloprid (25 : 1)**<br>erfindungsgemäß | **4+0,16** | **gef.***<br>**70** | **ber.****<br>**0** |
| **Verbindung der Formel (I-3) + Thiacloprid (25 : 1)**<br>erfindungsgemäß | **4+0,16** | **gef.***<br>**70** | **ber.****<br>**0** |
| **Thiamethoxam** | 0,16 | 0 | |

(fortgesetzt)

| **Wirkstoff** | **Konzentration in g/ha** | **Abtötung in % nach 1d** | |
|---|---|---|---|
| **Verbindung der Formel (I-2) + Thiamethoxam (25 : 1)**<br>erfindungsgemäß | **4+0,16** | **gef.***<br>**80** | **ber.****<br>**0** |
| **Dinotefuran** | 4 | 0 | |
| **Verbindung der Formel (I-2) + Dinotefuran (5 : 1)**<br>erfindungsgemäß | **20+4** | **gef.***<br>**70** | **ber.****<br>**0** |
| **Abamectin** | 0,16 | 0 | |
| **Verbindung der Formel (I-2) +Abamectin (125 : 1)**<br>erfindungsgemäß | **20 + 0,16** | **gef.***<br>**70** | **ber.****<br>**0** |
| **Emamectin- benzoate** | 0,8 | 0 | |
| **Verbindung der Formel (I-3) + Emamectin- benzoate (125 : 1)**<br>erfindungsgemäß | **100 + 0,8** | **gef.***<br>**80** | **ber.****<br>**0** |
| **Cyazypyr** | 0,8 | 0 | |
| **Verbindung der Formel (I-2) +Cyazypyr (25 : 1)**<br>erfindungsgemäß | **20+ 0,8** | **gef.***<br>**80** | **ber.****<br>**0** |
| **Verbindung der Formel (I-3) + Cyazypyr (25 : 1)**<br>erfindungsgemäß | **20+ 0,8** | **gef.***<br>**80** | **ber.****<br>**0** |
| **Thiodicarb** | 100 | 0 | |
| **Verbindung der Formel (I-2) + Thiodicarb (5 : 1)**<br>erfindungsgemäß | **500 + 100** | **gef.***<br>**80** | **ber.****<br>**0** |
| **L-Cyhalothrin** | 0,032 | 0 | |
| **Verbindung der Formel (I-2) + L- Cyhalothrin (125 : 1)**<br>erfindungsgemäß | **4 + 0,032** | **gef.***<br>**90** | **ber.****<br>**0** |
| **Cypermethrin** | 0,8<br>0,16 | 70<br>0 | |
| **Verbindung der Formel (I-2) + Cypermethrin (25 : 1)**<br>erfindungsgemäß | **4+0,16** | **gef.***<br>**80** | **ber.****<br>**0** |
| **Verbindung der Formel (I-3) + Cypermethrin (25 : 1)**<br>erfindungsgemäß | **20 + 0,8** | **gef.***<br>**90** | **ber.****<br>**70** |
| **β-Cyfluthrin** | 0,032 | 0 | |
| **Verbindung der Formel (I-3) + β- Cyfluthrin (125 : 1)**<br>erfindungsgemäß | **4 + 0,032** | **gef.***<br>**70** | **ber.****<br>**0** |
| **Deltamethrin** | 0,032 | 70 | |

(fortgesetzt)

| Wirkstoff | Konzentration in g/ha | Abtötung in % nach 1d | |
|---|---|---|---|
| **Verbindung der Formel (I-2) + Deltamethrin (125 : 1)**<br>erfindungsgemäß | **4 + 0,032** | **gef.***<br>**90** | **ber.****<br>**70** |
| **4-{[(6-Chlorpyrid-3-yl)methyl](2,2-difluorethyl) amino} furan-2(5H)-on** | 4 | 70 | |
| **Verbindung der Formel (I-3) + 4- {[(6-Chlorpyrid-3-yl) methyl](2,2-difluorethyl)amino}furan-2(5H)-on (25 : 1)** | **100+4** | **gef.***<br>**90** | **ber.****<br>**70** |
| erfindungsgemäß | | | |
| **Ethiprole** | 20 | 0 | |
| **Verbindung der Formel (I-2) + Ethiprole (25 : 1)**<br>erfindungsgemäß | **500 + 20** | **gef.***<br>**90** | **ber.****<br>**0** |
| **Verbindung der Formel (I-3) + Ethiprole (25 : 1)**<br>erfindungsgemäß | **500 + 20** | **gef.***<br>**90** | **ber.****<br>**0** |
| **Chloranthraniliprole** | 0,8 | 0 | |
| **Verbindung der Formel (I-3) + Chloranthraniliprole (125 : 1)**<br>erfindungsgemäß | **100 + 0,8** | **gef.***<br>**80** | **ber.****<br>**0** |
| **Diafenthiuron** | 20 | 0 | |
| **Verbindung der Formel (I-2) + Diafenthiuron (5 : 1)**<br>erfindungsgemäß | **100 + 20** | **gef.***<br>**70** | **ber.****<br>**0** |
| **Verbindung der Formel (I-3) + Diafenthiuron (5 : 1)**<br>erfindungsgemäß | **100 + 20** | **gef.***<br>**70** | **ber.****<br>**0** |
| **Tebufenpyrad** | 20 | 0 | |
| **Verbindung der Formel (I-2) + Tebufenpyrad (5 : 1)**<br>erfindungsgemäß | **100 + 20** | **gef.***<br>**70** | **ber.****<br>**0** |
| **Gamma-Cyhalothrin** | 0,032 | 0 | |
| **Verbindung der Formel (I-2) + Gamma-Cyhalothrin (125 : 1)**<br>erfindungsgemäß | **4 + 0,032** | **gef.***<br>**80** | **ber.****<br>**0** |
| **Verbindung der Formel (I-3) +Gamma-Cyhalothrin (125 : 1)**<br>erfindungsgemäß | **4+ 0,032** | **gef.***<br>**90** | **ber.****<br>**0** |
| **Alpha-Cypermethrin** | 0,16 | 0 | |
| **Verbindung der Formel (I-3) + Alpha-Cypermethrin (125 : 1)**<br>erfindungsgemäß | **20 + 0,16** | **gef.***<br>**80** | **ber.****<br>**0** |
| **Tefluthrin** | 4 | 70 | |
| **Verbindung der Formel (I-2) + Tefluthrin (25 : 1)**<br>**erfindungsgemäß** | **100+4** | **gef.***<br>**100** | **ber.****<br>**70** |

(fortgesetzt)

| Wirkstoff | Konzentration in g/ha | Abtötung in % nach 1d | |
|---|---|---|---|
| erfindungsgemäß | | | |
| **Verbindung der Formel (I-3) + Tefluthrin (25 : 1)** erfindungsgemäß | **100+4** | **gef.*** **100** | **ber.**** **70** |
| * gef. = gefundene Wirkung ** ber. = nach der Colby-Formel berechnete Wirkung | | | |

Tabelle A - 2: **Myzus persicae - Test**

| Wirkstoff | Konzentration in g/ha | Abtötung in % nach 6d | |
|---|---|---|---|
| **Verbindung der Formel (I-3)** | 20<br>4 | 70<br>70 | |
| **Thiacloprid** | 0,16 | 0 | |
| **Verbindung der Formel (I-3) + Thiacloprid (25 : 1)** erfindungsgemäß | **4+0,16** | **gef.*** **100** | **ber.**** **70** |
| **Thiamethoxam** | 0,16 | 0 | |
| **Verbindung der Formel (I-3) + Thiamethoxam (25 : 1)** erfindungsgemäß | **4+0,16** | **gef.*** **100** | **ber.**** **70** |
| **Acetamiprid** | 0,16 | 0 | |
| **Verbindung der Formel (I-3) + Acetamiprid (25 : 1)** | **4+0,16** | **gef.*** **100** | **ber.**** **70** |
| erfindungsgemäß | | | |
| **Dinotefuran** | 4 | 0 | |
| **Verbindung der Formel (I-3) + Dinotefuran (5 : 1)** erfindungsgemäß | **20+4** | **gef.*** **100** | **ber.**** **70** |
| **Flubendiamide** | 0,8 | 0 | |
| **Verbindung der Formel (I-3) + Flubendiamide (25 : 1)** erfindungsgemäß | **20 + 0,8** | **gef.*** **100** | **ber.**** **70** |
| **Metaflumizone** | 4 | 0 | |
| **Verbindung der Formel (I-3) + Metaflumizone (5 : 1)** erfindungsgemäß | **20+4** | **gef.*** **100** | **ber.**** **70** |
| **Spirotetramat** | 0,16 | 0 | |
| **Verbindung der Formel (I-3) + Spirotetramat (25 : 1)** erfindungsgemäß | **4+0,16** | **gef.*** **100** | **ber.**** **70** |
| **Spiromesifen** | 0,8 | 0 | |
| **Verbindung der Formel (I-3) + Spiromesifen (25 : 1)** | **20 + 0,8** | **gef.*** **100** | **ber.**** **70** |

(fortgesetzt)

| Wirkstoff | Konzentration in g/ha | Abtötung in % nach 6d |
|---|---|---|
| erfindungsgemäß | | |
| **Spirodiclofen** | 4 | 0 |
| **Verbindung der Formel (I-3) + Spirodiclofen (5 : 1)**<br>erfindungsgemäß | **20+4** | **gef.* 100** **ber.** 70** |
| **Abamectin** | 0,16 | 0 |
| **Verbindung der Formel (I-3) + Abamectin (125 : 1)** | **20 + 0,16** | **gef.* 90** **ber.** 70** |
| erfindungsgemäß | | |
| **Emamectin-benzoate** | 0,16 | 0 |
| **Verbindung der Formel (I-3) + Emamectin-benzoate (125 : 1)**<br>erfindungsgemäß | **20 + 0,16** | **gef.* 100** **ber.** 70** |
| **Pyridalyl** | 0,8 | 0 |
| **Verbindung der Formel (I-3) + Pyridalyl (25 : 1)**<br>erfindungsgemäß | **20 + 0,8** | **gef.* 100** **ber.** 70** |
| **Buprofezin** | 500 | 0 |
| **Verbindung der Formel (I-3) + Buprofezin (1 : 25)**<br>erfindungsgemäß | **20 + 500** | **gef.* 100** **ber.** 70** |
| * gef. = gefundene Wirkung<br>** ber. = nach der Colby-Formel berechnete Wirkung | | |

Beispiel B

**Phaedon cochleariae - Larven -Test**

Lösungsmittel: 78 Gewichtsteile Aceton
1,5 Gewichtsteile Dimethylformamid

Emulgator: 0,5 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter (*Brassica oderacea*) werden durch Spritzen mit der Wirkstoffzubereitung in der gewünschten Konzentration behandelt und mit Larven des Meerrettichblattkäfers (*Phaedon cochleariae*) besetzt, solange die Blätter noch feucht sind.

Nach der gewünschten Zeit wird die Abtötung in % bestimmt. Dabei bedeutet 100 %, dass alle Käferlarven abgetötet wurden; 0 % bedeutet, dass keine Käferlarven abgetötet wurden. Die ermittelten Abtötungswerte verrechnet man nach der Colby-Formel.

Bei diesem Test zeigten die folgenden Wirkstoffkombinationen gemäß vorliegender Anmeldung eine synergistisch verstärkte Wirksamkeit im Vergleich zu den einzeln angewendeten Wirkstoffen:

Tabelle B - 1: **Phaedon cochleariae Larven - Test**

| Wirkstoff | Konzentration in g/ha | Abtötung in % nach 2d | |
|---|---|---|---|
| **Verbindung der Formel (I-2)** | 500<br>100<br>20<br>4 | 0<br>0<br>0<br>0 | |
| **Verbindung der Formel (I-3)** | 500<br>100<br>20<br>4 | 0<br>0<br>0<br>0 | |
| **Dinotefuran** | 20 | 17 | |
| **Verbindung der Formel (I-2) + Dinotefuran (5 : 1)**<br>erfindungsgemäß | **100 + 20** | **gef.***<br>**67** | **ber.****<br>**17** |
| Emamectin-benzoate | 0,8 | 50 | |
| **Verbindung der Formel (I-2) + Emamectin-benzoate (125 : 1)**<br>erfindungsgemäß | **100 + 0,8** | **gef.***<br>**83** | **ber.****<br>**50** |
| **Verbindung der Formel (I-3) + Emamectin-benzoate (125 : 1)**<br>erfindungsgemäß | **100 + 0,8** | **gef.***<br>**83** | **ber.****<br>**50** |
| **Cyazypyr** | 0,8 | 50 | |
| **Verbindung der Formel (I-3) + Cyazypyr (25 : 1)**<br>erfindungsgemäß | **20 + 0,8** | **gef.***<br>**83** | **ber.****<br>**50** |
| **Methiocarb** | 100 | 50 | |
| **Verbindung der Formel (I-2) + Methiocarb (5 : 1)**<br>erfindungsgemäß | **500 + 100** | **gef.***<br>**100** | **ber.****<br>**50** |
| **Verbindung der Formel (I-3) + Methiocarb (5 : 1)**<br>erfindungsgemäß | **500 + 100** | **gef.***<br>**100** | **ber.****<br>**50** |
| **Cypermethrin** | **4** | **17** | |
| **Verbindung der Formel (I-2) + Cypermethrin (25 : 1)**<br>erfindungsgemäß | **100+4** | **gef.***<br>**67** | **ber.****<br>**17** |
| **Deltamethrin** | 0,8 | 67 | |
| **Verbindung der Formel (I-2) + Deltamethrin (125 : 1)**<br>erfindungsgemäß | **100 + 0,8** | **gef.***<br>**100** | **ber.****<br>**67** |
| **Spinosad** | 4 | 33 | |
| **Verbindung der Formel (I-2) + Spinosad (25 : 1)** | **100+4** | **gef.***<br>**83** | **ber.****<br>**33** |
| erfindungsgemäß | | | |

(fortgesetzt)

| Wirkstoff | Konzentration in g/ha | Abtötung in % nach 2d | |
|---|---|---|---|
| **Fipronil** | 0,8 | 50 | |
| **Verbindung der Formel (I-3) +Fipronil (5 : 1)**<br>erfindungsgemäß | **4 + 0,8** | **gef.*<br>100** | **ber.**<br>50** |
| **Rynaxapyr** | 0,8 | 67 | |
| **Verbindung der Formel (I-3) +Rynaxapyr (125: 1)**<br>erfindungsgemäß | **100 + 0,8** | **gef.*<br>100** | **ber.**<br>67** |
| **Spinetoram** | 4 | 50 | |
| **Verbindung der Formel (I-3) +Spinetoram (125 : 1)**<br>erfindungsgemäß | **500 + 4** | **gef.*<br>100** | **ber.**<br>50** |
| **Fenpyroximate** | 20 | 0 | |
| **Verbindung der Formel (I-2) +Fenpyroximate (25 : 1)**<br>erfindungsgemäß | **500 + 20** | **gef.*<br>80** | **ber.**<br>0** |
| * gef. = gefundene Wirkung<br>** ber. = nach der Colby-Formel berechnete Wirkung | | | |

Tabelle B - 2: **Phaedon cochleariae Larven - Test**

| Wirkstoff | Konzentration in g/ha | Abtötung in % nach 6d | |
|---|---|---|---|
| **Verbindung der Formel (I-2)** | 500<br>100<br>20<br>4 | 0<br>0<br>0<br>0 | |
| **Verbindung der Formel (I-3)** | 500<br>100<br>4 | 0<br>0<br>0 | |
| **Imidacloprid** | 20 | 33 | |
| **Verbindung der Formel (I-3) + Imidacloprid (25 : 1)** | **500 + 20** | **gef.*<br>67** | **ber.**<br>33** |
| erfindungsgemäß | | | |
| **Thiacloprid** | 20 | 0 | |
| **Verbindung der Formel (I-2) + Thiacloprid (25 : 1)**<br>erfindungsgemäß | **500 + 20** | **gef.*<br>50** | **ber.**<br>0** |
| **Verbindung der Formel (I-3) +Thiacloprid (25 : 1)**<br>erfindungsgemäß | **500 + 20** | **gef.*<br>50** | **ber.**<br>0** |
| **Thiamethoxam** | 20 | 50 | |
| **Verbindung der Formel (I-2) + Thiamethoxam (25 : 1)**<br>erfindungsgemäß | **500 + 20** | **gef.*<br>100** | **ber.**<br>50** |

(fortgesetzt)

| Wirkstoff | Konzentration in g/ha | Abtötung in % nach 6[d] |
|---|---|---|
| **Acetamiprid** | 20 | 0 |
| **Verbindung der Formel (I-2) + Acetamiprid (25 : 1)**<br>erfindungsgemäß | **500 + 20** | **gef.* 33 ber.** 0** |
| **Verbindung der Formel (I-3) + Acetamiprid (25 : 1)**<br>erfindungsgemäß | **500 + 20** | **gef.* 83 ber.** 0** |
| **Abamectin** | 0,16 | 0 |
| **Verbindung der Formel (I-2) + Abamectin (125 : 1)**<br>erfindungsgemäß | **20 + 0,16** | **gef.* 50 ber.** 0** |
| **Cyazypyr** | 0,16 | 33 |
| **Verbindung der Formel (I-2) + Cyazypyr (25 : 1)**<br>Erfindungsgemäß | **4+0,16** | **gef.* 67 ber.** 33** |
| **1-{2-Fluor-4-methyl-5-[(2,2,2-trifluorethyl)sulfinyl] phenyl}-3-(trifluormethyl)-1H-1,2,4-triazol-5-amin** | 100 | 0 |
| **Verbindung der Formel (I-2) + 1- {2-Fluor-4-methyl-5-[(2,2,2-trifluorethyl)sulfinyl]phenyl}-3-(trifluormethyl)-1H-1,2,4-triazol-5-amin (5 : 1)** | **500 + 100** | **gef.* 100 ber.** 0** |
| erfindungsgemäß | | |
| **Verbindung der Formel (I-3) + 1-{2-Fluor-4-methyl-5-[(2,2,2-trifluorethyl)sulfinyl]phenyl}-3-(trifluormethyl)-1H-1,2,4-triazol-5-amin (5 : 1)**<br>erfindungsgemäß | **500 + 100** | **gef.* 100 ber.** 0** |
| **L-Cyhalothrin** | 0,8 | 33 |
| **Verbindung der Formel (I-2) + L-Cyhalothrin (125 : 1)**<br>erfindungsgemäß | **100 + 0,8** | **gef.* 100 ber.** 33** |
| **Verbindung der Formel (I-3) + L-Cyhalothrin (125 : 1)**<br>erfindungsgemäß | **100 + 0,8** | **gef.* 100 ber.** 33** |
| ß-Cyfluthrin | 0,8 | 33 |
| **Verbindung der Formel (I-3) + β-Cyfluthrin (125 : 1)**<br>erfindungsgemäß | **100 + 0,8** | **gef.* 67 ber.** 33** |
| **Ethiprole** | 0,16 | 0 |
| **Verbindung der Formel (I-2) +Ethiprole (25 : 1)**<br>erfindungsgemäß | **4+0,16** | **gef.* 50 ber.** 0** |
| **Verbindung der Formel (I-3) +Ethiprole (25 : 1)**<br>erfindungsgemäß | **4+0,16** | **gef.* 67 ber.** 0** |
| Indoxacarb | 0,8 | 0 |

(fortgesetzt)

| Wirkstoff | Konzentration in g/ha | Abtötung in % nach 6d | |
|---|---|---|---|
| **Verbindung der Formel (I-2) +Indoxacarb (5 : 1)** erfindungsgemäß | **4 + 0,8** | **gef.* 67** | **ber.** 0** |
| **Verbindung der Formel (I-3) +Indoxacarb (5 : 1)** erfindungsgemäß | **4 + 0,8** | **gef.* 50** | **ber.** 0** |
| **Lufenuron** | | | |
| | 100 | 33 | |
| **Verbindung der Formel (I-2) +Lufenuron (5 : 1)** erfindungsgemäß | **500 + 100** | **gef.* 67** | **ber.** 33** |
| **Tebufenpyrad** | 100 | 0 | |
| **Verbindung der Formel (I-2) +Tebufenpyrad (5 : 1)** erfindungsgemäß | **500 + 100** | **gef.* 100** | **ber.** 0** |
| **Verbindung der Formel (I-3) +Tebufenpyrad (5 : 1)** erfindungsgemäß | **500 + 100** | **gef.* 67** | **ber.** 0** |
| **Milbemectin** | 20 | 0 | |
| **Verbindung der Formel (I-2) + Milbemectin (25 : 1)** erfindungsgemäß | **500 + 20** | **gef.* 67** | **ber.** 0** |
| **Verbindung der Formel (I-3) + Milbemectin (25 : 1)** erfindungsgemäß | **500 + 20** | **gef.* 33** | **ber.** 0** |
| **Novaluron** | 100 | 0 | |
| **Verbindung der Formel (I-3) + Novaluron (5 : 1)** erfindungsgemäß | **500 + 100** | **gef.* 33** | **ber.** 0** |
| **Alpha-Cypermethrin** | 4 | 67 | |
| **Verbindung der Formel (I-2) + Alpha-Cypermethrin (125 : 1)** erfindungsgemäß | **500 + 4** | **gef.* 100** | **ber.** 67** |
| **Verbindung der Formel (I-3) + Alpha-Cypermethrin (125 : 1)** erfindungsgemäß | **500 + 4** | **gef.* 100** | **ber.** 67** |
| **Tefluthrin** | 20 | 33 | |
| **Verbindung der Formel (I-3) + Tefluthrin (25 : 1)** erfindungsgemäß | **500 + 20** | **gef.* 67** | **ber.** 33** |

*** gef. = gefundene Wirkung**
** ber. = nach der Colby-Formel berechnete Wirkung

**Beispiel C**

**Spodoptera frugiperda - Larven -Test**

| | |
|---|---|
| Lösungsmittel: | 78 Gewichtsteile Aceton<br>1,5 Gewichtsteile Dimethylformamid |
| Emulgator: | 0,5 Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter (*Brassica oleracea*) werden durch Spritzen mit der Wirkstoffzubereitung in der gewünschten Konzentration behandelt und mit dem Heerwurm (*Spodoptera frugiperda*) besetzt, solange die Blätter noch feucht sind.

Nach der gewünschten Zeit wird die Abtötung in % bestimmt. Dabei bedeutet 100 %, dass alle Raupen abgetötet wurden; 0 % bedeutet, dass keine Raupen abgetötet wurden. Die ermittelten Abtötungswerte verrechnet man nach der Colby-Formel.

Bei diesem Test zeigten die folgenden Wirkstoffkombinationen gemäß vorliegender Anmeldung eine synergistisch verstärkte Wirksamkeit im Vergleich zu den einzeln angewendeten Wirkstoffen:

Tabelle C - 1: **Spodoptera frugiperda Larven - Test**

| Wirkstoff | Konzentration in g/ha | Abtötung in % nach 2d |
|---|---|---|
| **Verbindung der Formel (I-2)** | 500<br>100<br>20 | 0<br>0<br>0 |
| **Verbindung der Formel (I-3)** | 500 | 0 |
| **Metaflumizone** | 100 | 0 |
| **Verbindung der Formel (I-3) + Metaflumizone (5 : 1)**<br>erfindungsgemäß | **500 + 100** | **gef.*** **33** / **ber.**** **0** |
| **Emamectin-benzoate** | 0,16 | 0 |
| **Verbindung der Formel (I-2) + Emamectin-benzoate (125 : 1)**<br>erfindungsgemäß | **20 + 0,16** | **gef.*** **33** / **ber.**** **0** |
| **Methiocarb** | 100 | 0 |
| **Verbindung der Formel (I-3) + Methiocarb (5 : 1)**<br>erfindungsgemäß | **500 + 100** | **gef.*** **33** / **ber.**** **0** |
| **Indoxacarb** | 100 | 50 |
| **Verbindung der Formel (I-2) + Indoxacarb (5 : 1)**<br>erfindungsgemäß | **500 + 100** | **gef.*** **100** / **ber.**** **50** |
| **Verbindung der Formel (I-3) + Indoxacarb (5 : 1)**<br>erfindungsgemäß | **500 + 100** | **gef.*** **83** / **ber.**** **50** |
| **Rynaxapyr** | 4 | 67 |
| **Verbindung der Formel (I-2) + Rynaxapyr (125 : 1)**<br>erfindungsgemäß | **500 + 4** | **gef.*** **100** / **ber.**** **67** |

(fortgesetzt)

| Wirkstoff | Konzentration in g/ha | Abtötung in % nach 2d | |
|---|---|---|---|
| **Verbindung der Formel (I-3) +Rynaxapyr (125 : 1)** erfindungsgemäß | **500 + 4** | **gef.* 100** | **ber.** 67** |
| **Chlorfenapyr** | 100 | 50 | |
| **Verbindung der Formel (I-2) + Chlorfenapyr (5 : 1)** erfindungsgemäß | **500 + 100** | **gef.* 83** | **ber.** 50** |
| **Verbindung der Formel (I-3) + Chlorfenapyr (5 : 1)** erfindungsgemäß | **500 + 100** | **gef.* 100** | **ber.** 50** |
| **Methoxyfenozide** | 20 | 33 | |
| **Verbindung der Formel (I-2) + Methoxyfenozide (5 : 1)** erfindungsgemäß | **100 + 20** | **gef.* 50** | **ber.** 33** |
| * gef. = gefundene Wirkung<br>** ber. = nach der Colby-Formel berechnete Wirkung | | | |

Tabelle C - 2:

| Wirkstoff | Konzentration in g/ha | Abtötung in % nach 6d | |
|---|---|---|---|
| **Verbindung der Formel (I-2)** | 500<br>100<br>20 | 0<br>0<br>0 | |
| **Verbindung der Formel (I-3)** | 500<br>100<br>20 | 0<br>0<br>0 | |
| **Flubendiamide** | 4 | 33 | |
| **Verbindung der Formel (I-2) + Flubendiamide (25 : 1)** erfindungsgemäß | **100+4** | **gef.* 50** | **ber.** 33** |
| **Verbindung der Formel (I-3) + Flubendiamide (25 : 1)** erfindungsgemäß | **100+4** | **gef.* 50** | **ber.** 33** |
| **Pyridalyl** | 4 | 17 | |
| **Verbindung der Formel (I-2) + Pyridalyl (25 : 1)** erfindungsgemäß | **100+4** | **gef.* 50** | **ber.** 17** |
| **Verbindung der Formel (I-3) + Pyridalyl (25 : 1) erfindungsgemäß** | **100+4** | **gef.* 50** | **ber.** 17** |
| **Cyazypyr** | 0,8 | 50 | |
| **Verbindung der Formel (I-2) + Cyazypyr (25 : 1)** erfindungsgemäß | **20 + 0,8** | **gef.* 83** | **ber.** 50** |
| **Verbindung der Formel (I-3) + Cyazypyr (25 : 1)** erfindungsgemäß | **20 + 0,8** | **gef.* 83** | **ber.** 50** |
| **Chlorpyrifos** | 4 | 0 | |

(fortgesetzt)

| Wirkstoff | Konzentration in g/ha | Abtötung in % nach 6d | |
|---|---|---|---|
| **Verbindung der Formel (I-2) + Chlorpyrifos (5 : 1)** erfindungsgemäß | **20+4** | **gef.*** **67** | **ber.**** **0** |
| **Verbindung der Formel (I-3) + Chlorpyrifos (5 : 1)** erfindungsgemäß | **20+4** | **gef.*** **50** | **ber.**** **0** |
| **L-Cyhalothrin** | 0,8<br>0,16 | 50<br>0 | |
| **Verbindung der Formel (I-2) + L-Cyhalothrin (125 : 1)** erfindungsgemäß | **100 + 0,8** | **gef.*** **100** | **ber.**** **50** |
| **Verbindung der Formel (I-3) + L-Cyhalothrin (125 : 1)** erfindungsgemäß | **20 + 0,16** | **gef.*** **33** | **ber.**** **0** |
| **β-Cyfluthrin** | 0,16 | 0 | |
| **Verbindung der Formel (I-2) + β-Cyfluthrin (125 : 1)** erfindungsgemäß | **20 + 0,16** | **gef.*** **33** | **ber.**** **0** |
| **Verbindung der Formel (I-3) + β-Cyfluthrin (125 : 1)** erfindungsgemäß | **20 + 0,16** | **gef.*** **50** | **ber.**** **0** |
| **Deltamethrin** | 0,032 | 33 | |
| **Verbindung der Formel (I-3) + Deltamethrin (125 : 1)** erfindungsgemäß | **4 + 0,032** | **gef.*** **67** | **ber.**** **33** |
| **Fipronil** | 4 | 0 | |
| **Verbindung der Formel (I-3) + Fipronil (5 : 1)** erfindungsgemäß | **20+4** | **gef.*** **33** | **ber.**** **0** |
| **Lufenuron** | 4 | 0 | |
| **Verbindung der Formel (I-2) + Lufenuron (5 : 1)** erfindungsgemäß | **20+4** | **gef.*** **33** | **ber.**** **0** |
| **Verbindung der Formel (I-3) + Lufenuron (5 : 1)** erfindungsgemäß | **20+4** | **gef.*** **50** | **ber.**** **0** |
| **Transfluthrin** | 4 | 33 | |
| **Verbindung der Formel (I-2) + Transfluthrin (5 : 1)** erfindungsgemäß | **20+4** | **gef.*** **50** | **ber.**** **33** |
| **Verbindung der Formel (I-3) + Transfluthrin (5 : 1)** erfindungsgemäß | **20+4** | **gef.*** **50** | **ber.**** **33** |
| **Carbofuran** | 4 | 0 | |
| **Verbindung der Formel (I-2) + Carbofuran (5 : 1)** erfindungsgemäß | **20+4** | **gef.*** **33** | **ber.**** **0** |
| **Flufenoxuron** | 20 | 33 | |
| **Verbindung der Formel (I-2) + Flufenoxuron (25 : 1)** erfindungsgemäß | **500 + 20** | **gef.*** **100** | **ber.**** **33** |
| **Verbindung der Formel (I-3) + Flufenoxuron (25 : 1)** erfindungsgemäß | **500 + 20** | **gef.*** **100** | **ber.**** **33** |
| **Aldicarb** | | | |
| | 100 | 0 | |

(fortgesetzt)

| Wirkstoff | Konzentration in g/ha | Abtötung in % nach 6d | |
|---|---|---|---|
| **Verbindung der Formel (I-2) + Aldicarb (5 : 1)** erfindungsgemäß | **500 + 100** | **gef.*** 50 | **ber.**** 0 |
| **Verbindung der Formel (I-3) + Aldicarb (5 : 1)** erfindungsgemäß | **500 + 100** | **gef.*** **33** | **ber.**** **0** |
| **Alpha-Cypermethrin** | **0,8** | **33** | |
| **Verbindung der Formel (I-2) + Alpha-Cypermethrin (125 : 1)** erfindungsgemäß | **100 + 0,8** | **gef.*** **83** | **ber.**** **33** |
| **Verbindung der Formel (I-3) + Alpha-Cypermethrin (125 : 1)** erfindungsgemäß | **100 + 0,8** | **gef.*** **83** | **ber.**** **33** |
| **Triflumuron** | 4 | 17 | |
| **Verbindung der Formel (I-2) + Triflumuron (5 : 1)** erfindungsgemäß | **20+4** | **gef.*** **100** | **ber.**** **17** |
| **Verbindung der Formel (I-3) + Triflumuron (5 : 1)** erfindungsgemäß | **20+4** | **gef.*** **50** | **ber.**** **17** |
| **Acrinathrin** | 0,8 | 0 | |
| **Verbindung der Formel (I-2) + Acrinathrin (25 : 1)** erfindungsgemäß | **20 + 0,8** | **gef.*** **50** | **ber.**** **0** |
| **Verbindung der Formel (I-3) + Acrinathrin (25 : 1)** erfindungsgemäß | **20 + 0,8** | **gef.*** **50** | **ber.**** **0** |
| * gef. = gefundene Wirkung<br>** ber. = nach der Colby-Formel berechnete Wirkung | | | |

Beispiel D

**Tetranychus-Test** (OP-resistent/Spritzbehandlung)

| | |
|---|---|
| Lösungsmittel: | 78 Gewichtsteile Aceton |
| | 1,5 Gewichtsteile Dimethylformamid |
| Emulgator: | 0,5 Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Bohnenblattscheiben (Phaseolus vulgaris), die von allen Stadien der Gemeinen Spinnmilbe (*Tetranychus urticae*) befallen sind, werden mit einer Wirkstoffzubereitung in der gewünschten Konzentration gespritzt.

Nach der gewünschten Zeit wird die Wirkung in % bestimmt. Dabei bedeutet 100 %, dass alle Spinnmilben abgetötet wurden; 0 % bedeutet, dass keine Spinnmilben abgetötet wurden.

Bei diesem Test zeigten die folgenden Wirkstoffkombinationen gemäß vorliegender Anmeldung eine synergistisch verstärkte Wirksamkeit im Vergleich zu den einzeln angewendeten Wirkstoffen:

Tabelle D - 1: **Tetranychus urticae - Test**

| Wirkstoff | Konzentration in g/ha | Abtötung in % nach 2d |
|---|---|---|
| **Verbindung der Formel (I-2)** | | |

(fortgesetzt)

| Wirkstoff | Konzentration in g/ha | Abtötung in % nach 2d | |
|---|---|---|---|
| | 500<br>100<br>20<br>4 | 0<br>0<br>0<br>0 | |
| **Verbindung der Formel (I-3)** | 500<br>20<br>4 | 0<br>0<br>0 | |
| **Spiromesifen** | 20 | 0 | |
| **Verbindung der Formel (I-2) + Spiromesifen (25 : 1)** | **500 + 20** | **gef.*<br>20** | **ber.**<br>0** |
| erfindungsgemäß | | | |
| **Abamectin** | 4 | 0 | |
| **Verbindung der Formel (I-2) + Abamectin (125 : 1)**<br>erfindungsgemäß | **500 + 4** | **gef.*<br>90** | **ber.**<br>0** |
| **Verbindung der Formel (I-3) + Abamectin (125 : 1)**<br>erfindungsgemäß | **500 + 4** | **gef.*<br>100** | **ber.**<br>0** |
| **Emamectin-benzoate** | 0,032 | 0 | |
| **Verbindung der Formel (I-3) + Emamectin-benzoate (125 : 1)**<br>erfindungsgemäß | **4 + 0,032** | **gef.*<br>70** | **ber.**<br>0** |
| **Cyazypyr** | 20 | 0 | |
| **Verbindung der Formel (I-3) + Cyazypyr (25 : 1)**<br>erfindungsgemäß | **500 + 20** | **gef.*<br>20** | **ber.**<br>0** |
| **Diafenthiuron** | 4 | 0 | |
| **Verbindung der Formel (I-2) + Diafenthiuron (5 : 1)**<br>erfindungsgemäß | **20+4** | **gef.*<br>20** | **ber.**<br>0** |
| **Verbindung der Formel (I-3) + Diafenthiuron (5 : 1)**<br>erfindungsgemäß | **20+4** | **gef.*<br>20** | **ber.**<br>0** |
| **Tebufenpyrad** | 4<br>0,8 | 70<br>0 | |
| **Verbindung der Formel (I-2) + Tebufenpyrad (5 : 1)**<br>erfindungsgemäß | **4 + 0,8** | **gef.*<br>20** | **ber.**<br>0** |
| **Verbindung der Formel (I-3) + Tebufenpyrad (5 : 1)**<br>erfindungsgemäß | **20+4** | **gef.*<br>100** | **ber.**<br>70** |
| **Gamma-Cyhalothrin** | 0,8 | 0 | |

(fortgesetzt)

| Wirkstoff | Konzentration in g/ha | Abtötung in % nach 2d | |
|---|---|---|---|
| **Verbindung der Formel (I-2) + Gamma-Cyhalothrin (125 : 1)** erfindungsgemäß | **100 + 0,8** | **gef.* 20** | **ber.** 0** |
| **Aldicarb** | 100 | 0 | |
| **Verbindung der Formel (I-2) + Aldicarb (5 : 1)** erfindungsgemäß | **500 + 100** | **gef.* 70** | **ber.** 0** |
| * gef. = gefundene Wirkung<br>** ber. = nach der Colby-Formel berechnete Wirkung | | | |

**Tabelle D - 2:**

| Wirkstoff | Konzentration in g/ha | Abtötung in % nach 6d | |
|---|---|---|---|
| **Verbindung der Formel (I-2)** | 500<br>4 | 0<br>0 | |
| **Verbindung der Formel (I-3)** | 500<br>100<br>20<br>4 | 0<br>0<br>0<br>0 | |
| **Spirodiclofen** | 0,8 | 20 | |
| **Verbindung der Formel (I-2)+ Spirodiclofen (5 : 1)** erfindungsgemäß | **4+0,8** | **gef.* 70** | **ber.* 20** |
| **Verbindung der Formel (I-3)+Spirodiclofen (5: 1)** erfindungsgemäß | **4+0,8** | **gef.* 70** | **ber.** 20** |
| **Pyridalyl** | 20 | 10 | |
| **Verbindung der Formel (I-3)+Pyridalyl (25: 1)** erfindungsgemäß | **500 + 20** | **gef.* 30** | **ber.** 10** |
| **Chlorpyrifos** | 100 | 0 | |
| **Verbindung der Formel (I-3)+Chlorpyrifos (5 : 1)** erfindungsgemäß | **500 + 100** | **gef.* 50** | **ber.** 0** |
| **1-{2-Fluor-4-methyl-5-[(2,2,2-trifluorethyl)sulfinyl] phenyl}-3-(trifluormethyl)-1H-1,2,4-triazol-5-amin** | 4<br>0,8 | 80<br>0 | |
| **Verbindung der Formel (I-2)+1-{2-Fluor-4-methyl-5-[(2,2,2-trifluorethyl)sulfinyl]phenyl}-3-(trifluormethyl)-1H-1,2,4-triazol-5-amin (5 : 1)** erfindungsgemäß | **4+0,8** | **gef.* 20** | **ber.** 0** |
| **Verbindung der Formel (I-3)+ 1-{2-Fluor-4-methyl-5-[(2,2,2-trifluorethyl)sulfinyl]phenyl}-3-(trifluormethyl)-1H-1,2,4-triazol-5-amin (5 : 1)** erfindungsgemäß | **20+4** | **gef.* 100** | **ber.** 80** |

(fortgesetzt)

| Wirkstoff | Konzentration in g/ha | Abtötung in % nach 6[d] | |
|---|---|---|---|
| **Sulfoxaflor** | 4 | 0 | |
| **Verbindung der Formel (I-2)+Sulfoxaflor (125 : 1)**<br>erfindungsgemäß | **500 + 4** | **gef.***<br>**70** | **ber.****<br>**0** |
| **Pyrifluquinazone** | 100 | 0 | |
| **Verbindung der Formel (I-2)+Pyrifluquinazone (5: 1)**<br>erfindungsgemäß | **500 + 100** | **gef.***<br>**20** | **ber.****<br>**0** |
| **L-Cyhalothrin** | 4<br>0,8 | 80<br>0 | |
| **Verbindung der Formel (I-2)+ L-Cyhalothrin (125 : 1)**<br>erfindungsgemäß | **500 + 4** | **gef.***<br>**100** | **ber.****<br>**80** |
| **Verbindung der Formel (I-3)+ L-Cyhalothrin (125: 1)**<br>erfindungsgemäß | **100 + 0,8** | **gef.***<br>**80** | **ber.****<br>**0** |
| **Cypermethrin** | 20 | 0 | |
| **Verbindung der Formel (I-2)+Cypermethrin (25 : 1)**<br>erfindungsgemäß | **500 + 20** | **gef.***<br>**30** | **ber.****<br>**0** |
| **Verbindung der Formel (I-3)+Cypermethrin (25 : 1)** | **500 + 20** | **gef.***<br>**20** | **ber.****<br>**0** |
| erfindungsgemäß | | | |
| **β-Cyfluthrin** | 4 | 0 | |
| **Verbindung der Formel (I-2)+ β-Cyfluthrin (125 : 1)**<br>erfindungsgemäß | **500 + 4** | **gef.***<br>**80** | **ber.****<br>**0** |
| **Verbindung der Formel (I-3)+ β-Cyfluthrin (125 : 1)**<br>erfindungsgemäß | **500 + 4** | **gef.***<br>**20** | **ber.****<br>**0** |
| **Spinosad** | 20 | 80 | |
| **Verbindung der Formel (I-2)+Spinosad (25 : 1)**<br>erfindungsgemäß | **500 + 20** | **gef.***<br>**100** | **ber.****<br>**80** |
| **Verbindung der Formel (I-3)+Spinosad (25 : 1)**<br>erfindungsgemäß | **500 + 20** | **gef.***<br>**100** | **ber.****<br>**80** |
| **Fipronil** | 100 | 0 | |
| **Verbindung der Formel (I-3)+Fipronil (5 : 1)**<br>erfindungsgemäß | **500 + 100** | **gef.***<br>**30** | **ber.****<br>**0** |
| **Ethiprole** | 20 | 0 | |

(fortgesetzt)

| Wirkstoff | Konzentration in g/ha | Abtötung in % nach 6d | |
|---|---|---|---|
| **Verbindung der Formel (I-2)+Ethiprole (25 : 1)**<br>erfindungsgemäß | **500 + 20** | **gef.***<br>**30** | **ber.****<br>**0** |
| **Verbindung der Formel (I-3)+Ethiprole (25: 1)**<br>erfindungsgemäß | **500 + 20** | **gef.***<br>**20** | **ber.****<br>**0** |
| *** gef. = gefundene Wirkung**<br>**** ber. = nach der Colby-Formel berechnete Wirkung** | | | |

**Patentansprüche**

1. Wirkstoffkombinationen enthaltend mindestens eine und bevorzugt genau eine Verbindung der Formel (I)

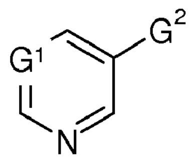

(I)

worin
(Ia)
$G^1$ für N, CH oder C-Halogen steht,
$G^2$ für

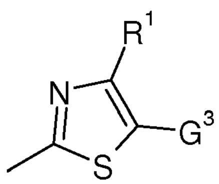

(A)

steht, worin
$R^1$ für Wasserstoff oder Alkyl steht und
$G^3$ für gegebenenfalls substituiertes Heterocyclyl, für gegebenenfalls substituiertes Heteroaryl oder für gegebenenfalls substituiertes Aryl steht oder
(Ib)
$G^1$ für N oder C-Halogen steht,
$G^2$ für

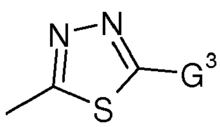

(B)

steht, worin
$G^3$ für gegebenenfalls substituiertes Heterocyclyl, für gegebenenfalls substituiertes Heteroaryl oder für gegebenenfalls substituiertes Aryl steht oder
(Ic) $G^1$ für CH steht,
$G^2$ für

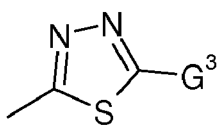

(B)

steht, worin
$G^3$ für gegebenenfalls substituiertes Heterocyclyl oder für substituiertes Furanyl oder für durch Halogen, Nitro, Amino, Alkylamino, Dialkylamino, Halogenalkyl, Cycloalkylalkyl, Alkoxy, Halogenalkoxy, Alkylthio, Alkoxyalkyl, Bis(alkoxy)alkyl, Alkoxycarbonyl, alpha-Hydroxyimino-alkoxycarbonylmethyl, alpha-Alkoxyimino-alkoxycarbonylmethyl, $C(X)NR^2R^3$, (worin X für Sauerstoff oder Schwefel steht, $R^2$ für Wasserstoff oder Alkyl steht und $R^3$ für Alkyl, Halogenalkyl, Alkoxy, Cyanoalkyl, Alkinyl, Cycloalkyl, Cycloalkylalkyl, Alkoxyalkyl, Alkylthioalkyl oder Arylalkyl steht oder $R^2$ und $R^3$ gemeinsam mit dem Stickstoffatom, an das sie gebunden sind, einen Ring bilden), Alkylsulfinyl, Alkylsulfonyl, Heterocyclyl, Aryl (welches selbst wiederum substituiert sein kann durch Halogen, Cyano, Nitro, Alkyl und Halogenalkyl), Heteroaryl (welches selbst wiederum substituiert sein kann durch Halogen, Nitro, Alkyl, Halogenalkyl, Alkoxy, Halogenalkoxy, Alkoxyalkyl, Alkylthio, Alkylthioalkyl und Cycloalkyl), Heteroarylalkyl (welches selbst wiederum substituiert sein kann durch Halogen, Nitro, Alkyl, Halogenalkyl, Alkoxy, Halogenalkoxy, Alkoxyalkyl, Alkylthio, Alkylthioalkyl und Cycloalkyl) substituiertes Thienyl oder für jeweils gegebenenfalls substituiertes Hetaryl aus der Reihe Pyrrolyl, Pyrazolyl, Imidazolyl, 1,2,3-Triazolyl, 1,2,4-Triazolyl, Oxazolyl, Isoxazolyl, Thiazolyl, Isothiazolyl, 1,2,3-Oxadiazolyl, 1,2,4-Oxadiazolyl, 1,3,4-Oxadiazolyl, 1,2,5-Oxadiazolyl, 1,2,3-Thiadiazolyl, 1,2,4-Thiadiazolyl, 1,3,4-Thiadiazolyl, 1,2,5-Thiadiazolyl, Pyridyl, Pyrimidinyl, Pyridazinyl, Pyrazinyl, 1,2,3-Triazinyl, 1,2,4-Triazinyl, 1,3,5-Triazinyl, Benzofuryl, Benzisofuryl, Benzothienyl, Benzisothienyl, Indolyl, Isoindolyl, Indazolyl, Benzothiazolyl, Benzisothiazolyl, Benzoxazolyl, Benzisoxazolyl, Benzimidazolyl, 2,1,3-Benzoxadiazole, Chinolinyl, Isochinolinyl, Cinnolinyl, Phthalazinyl, Chinazolinyl, Chinoxalinyl, Naphthyridinyl, Benzotriazinyl, Purinyl, Pteridinyl und Indolizinyl oder für durch Cyano, Nitro, Halogenalkoxy oder Heterocyclyl substituiertes Aryl steht oder
(Id)
$G^1$ für N, CH oder C-Halogen steht,
$G^2$ für

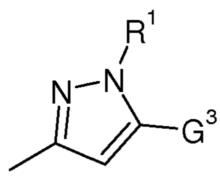

(C)

steht, worin
$R^1$ für Wasserstoff oder Alkyl steht und
$G^3$ für gegebenenfalls substituiertes Heterocyclyl oder für gegebenenfalls substituiertes Heteroaryl oder für gegebenenfalls substituiertes Aryl steht,
sowie Salze, Metallkomplexe und N-Oxide der Verbindungen der Formel (I),
und einen oder mehrere weitere Wirkstoffe aus der Gruppe (der Formel) (II) wie folgt Acetylcholinesterase (AChE) Inhibitoren II-1

II-1.A Carbamate,
zum Beispiel Alanycarb (II-1.A-1), Aldicarb (II-1.A-2), Aldoxycarb (II-1.A-3), Allyxycarb (II-1.A-4), Aminocarb (II-1.A-5), Bendiocarb (II-1.A-6), Benfuracarb (II-1.A-7), Bufencarb (II-1.A-8), Butacarb (II-1.A-9), Butocarboxim (11-1.A-10), Butoxycarboxim (11-1.A-11), Carbaryl (II-1.A-12), Carbofuran (II-1.A-13), Carbosulfan (II-1.A-14),

Cloethocarb (II-1.A-15), Dimetilan (II-1.A-16), Ethiofencarb (II-1.A-17), Fenobucarb (II-1.A-18), Fenothiocarb (II-1.A-19), Formetanate (II-1.A-20), Furathiocarb (II-1.A-21), Isoprocarb (II-1.A-22), Metam-sodium (II-1.A-23), Methiocarb (II-.A-24), Methomyl (II-1.A-25), Metolcarb (II-1.A-26), Oxamyl (II-1.A-27), Pirimicarb (II-1.A-28), Promecarb (II-1.A-29), Propoxur (II-1.A-30), Thiodicarb (II-1.A-31), Thiofanox (II-1.A-32), Trimethacarb (II-1.A-33), XMC (II-1.A-34), Xylylcarb (II-1.A-35)

II-1.B Organophosphate,

zum Beispiel Acephate (II-1.B-1), Azamethiphos (II-1.B-2), Azinphos (-methyl, -ethyl) (II-1.B-3), Bromophos-ethyl (II-1.B-4), Bromfenvinfos (-methyl) (II-1.B-5), Butathiofos (II-1.B-6), Cadusafos (II-1.B-7), Carbophenothion (II-1.B-8), Chlorethoxyfos (II-1.B-9), Chlorfenvinphos (II-1.B-10), Chlormephos (II-1.B-11), Chlorpyrifos (-methyl/-ethyl) (II-1.B-12), Coumaphos (II-1.B-13), Cyanofenphos (II-1.B-14), Cyanophos (II-1.B-15), Chlorfenvinphos (II-1.B-16), Demeton-S-methyl (II-1.B-17), Demeton-S-methylsulphon (II-1.B-18), Dialifos (II-1.B-19), Diazinon (II-1.B-20), Dichlofenthion (II-1.B-21), Dichlorvos/DDVP (II-1.B-22), Dicrotophos (II-1.B-23), Dimethoate (II-1.B-24), Dimethylvinphos (II-1.B-25), Dioxabenzofos (II-1.B-26), Disulfoton (II-1.B-27), EPN (II-1.B-28), Ethion (II-1.B-29), Ethoprophos (II-1.B-30), Etrimfos (II-1.B-31), Famphur (II-1.B-32), Fenamiphos (II-1.B-33), Fenitrothion (II-1.B-34), Fensulfothion (II-1.B-35), Fenthion (II-1.B-36), Flupyrazofos (II-1.B-37), Fonofos (II-1.B-38), Formothion (II-1.B-39), Fosmethilan (II-1.B-40), Fosthiazate (II-1.B-41), Heptenophos (II-1.B-42), Iodofenphos (II-1.B-43), Iprobenfos (II-1.B-44), Isazofos (II-1.B-45), Isofenphos (II-1.B-46), Isopropyl (II-1.B-47), O-salicylate (II-1.B-48), Isoxathion (II-1.B-49), Malathion (II-1.B-50), Mecarbam (11-1.B-51), Methacrifos (II-1.B-52), Methamidophos (II-1.B-53), Methidathion (II-1.B-54), Mevinphos (II-1.B-55), Monocrotophos (II-1.B-56), Naled (II-1.B-57), Omethoate (II-1.B-58), Oxydemeton-methyl (II-1.B-59), Parathion (-methyl/-ethyl) (II-1.B-60), Phenthoate (II-1.B-61), Phorate (II-1.B-62), Phosalone (II-1.B-63), Phosmet (II-1.B-64), Phosphamidon (II-1.B-65), Phosphocarb (II-1.B-66), Phoxim (II-1.B-67), Pirimiphos (-methyl/-ethyl) (II-1.B-68), Profenofos (II-1.B-69), Propaphos (II-1.B-70), Propetamphos (II-1.B-71), Prothiofos (II-1.B-72), Prothoate (II-1.B-73), Pyraclofos (II-1.B-74), Pyridaphenthion (11-1.B-75), Pyridathion (11-1.B-76), Quinalphos (II-1.B-77), Sebufos (II-1.B-78), Sulfotep (II-1.B-79), Sulprofos (II-1.B-80), Tebupirimfos (II-1.B-81), Temephos (II-1.B-82), Terbufos (II-1.B-83), Tetrachlorvinphos (II-1.B-84), Thiometon (II-1.B-85), Triazophos (11-1.B-86), Triclorfon (II-1.B-87), Vamidothion (II-1.B-88)

GABA-gesteuerte Chlorid-Kanal-Antagonisten II-2

II-2A Organochlorine,

zum Beispiel Camphechlor (II-2A-1), Chlordane (II-2A-2), Endosulfan (II-2A-3), Gamma-HCH (II-2A-4), HCH (II-2A-5), Heptachlor (II-2A-6), Lindane (II-2A-7), Methoxychlor (II-2A-8)

II-2B Fiprole (Phenylpyrazole),

zum Beispiel Acetoprole (II-2B-1), Ethiprole (II-2B-2), Fipronil (II-2B-3), Pyrafluprole (II-2B-4), Pyriprole (II-2B-5), Vaniliprole (II-2B-6)

Natrium-Kanal-Modulatoren / Spannungsabhängige Natrium-Kanal-Blocker II-3

II-3 Pyrethroide,

zum Beispiel Acrinathrin (11-3-1), Allethrin (d-cis-trans, d-trans) (11-3-2), Beta-Cyfluthrin (11-3-3), Bifenthrin (11-3-4), Bioallethrin (11-3-5), Bioallethrin-S-cyclopentyl-isomer (II-3-6), Bioethanomethrin (11-3-7), Biopermethrin (11-3-8), Bioresmethrin (11-3-9), Chlovaporthrin (11-3-10), Cis-Cypermethrin (11-3-11), Cis-Resmethrin (11-3-12), Cis-Permethrin (11-3-13), Clocythrin (11-3-14), Cycloprothrin (11-3-15), Cyfluthrin (11-3-16), Cyhalothrin (11-3-17), Cypermethrin (alpha-, beta-, theta-, zeta-)(II-3-18), Cyphenothrin (II-3-19), Deltamethrin (11-3-20), Empenthrin (1R-isomer) (11-3-21), Esfenvalerate (11-3-22), Etofenprox (11-3-23), Fenfluthrin (11-3-24), Fenpropathrin (11-3-25), Fenpyrithrin (11-3-26), Fenvalerate (11-3-27), Flubrocythrinate (11-3-28), Flucythrinate (11-3-29), Flufenprox (II-3-30), Flumethrin (II-3-31), Fluvalinate (11-3-32), Fubfenprox (11-3-33), Gamma-Cyhalothrin (11-3-34), Imiprothrin (11-3-35), Kadethrin (11-3-36), Lambda-Cyhalothrin (11-3-37), Metofluthrin (11-3-38), Permethrin (cis-, trans-) (11-3-39), Phenothrin (1R-trans isomer) (II-3-40), Prallethrin (11-3-41), Profluthrin (11-3-42), Protrifenbute (11-3-43), Pyresmethrin (II-3-44), Resmethrin (11-3-45), RU 15525 (11-3-46), Silafluofen (11-3-47), Tau-Fluvalinate (II-3-48), Tefluthrin (11-3-49), Terallethrin (11-3-50), Tetramethrin (-1R- isomer) (11-3-51), Tralomethrin (11-3-52), Transfluthrin (11-3-53), ZXI 8901 (11-3-54), Pyrethrin (pyrethrum) (11-3-55), Eflusilanat (11-3-56), DDT (11-3-57), Methoxychlor (11-3-58),

Nikotinerge Acetylcholin-Rezeptor-Agonisten/-Antagonisten II-4

II-4A Chloronicotinyle,

zum Beispiel Acetamiprid (II-4A-1), Clothianidin (II-4A-2), Dinotefuran (II-4A-3), Imidacloprid (II-4A-4), Imidaclothiz (II-4A-5), Nitenpyram (II-4A-6), Nithiazin (II-4A-7), Thiacloprid (II-4A-8), Thiamethoxam (II-4A-9),

II-4B Nicotine (II-4B-1), Bensultap (II-4B-2), Cartap (II-4B-3), Thiosulfap-Natrium (II-4B-4), Thiocylam (II-4C-4)

Allosterische Acetylcholin-Rezeptor-Modulatoren (Agonisten)

II-5 Spinosyne,

zum Beispiel Spinosad (II-5-1), Spinetoram (II-5-2)

Chlorid-Kanal-Aktivatoren
II-6 Mectine / Macrolide,
zum Beispiel Abamectin (II-6-1), Emamectin (11-6-2), Emamectin-benzoate (11-6-3), Ivermectin (11-6-4), Lepimectin (11-6-5), Milbemectin (II-6-6)
II-7A Juvenilhormon Analoge,
zum Beispiel Hydroprene (II-7A-1), Kinoprene (II-7A-2), Methoprene (II-7A-3), Epofenonane (II-7A-4), Triprene (II-7A-5), Fenoxycarb (II-7B-1),
Pyriproxifen (II-7C-1), Diofenolan (II-7C-2)
Wirkstoffe mit unbekannten oder nicht spezifischen Wirkmechanismen
II-8 Begasungsmittel,
zum Beispiel Methyl bromide (II-8A-1), Chloropicrin (II-8B-1), Sulfuryl fluoride (II-8C-1)
II-9 Selektive Fraßhemmer,
zum Beispiel Cryolite (II-9A-1), Pymetrozine (II-9B-1), Pyrifluquinazon (NNI0101) (II-9B-2), Flonicamid (II-9C-1)
II-10 Milbenwachstumsinhibitoren,
zum Beispiel Clofentezine (II-10A-1), Hexythiazox (II-10A-2),), Etoxazole (II-10B-1) Inhibitoren der oxidativen Phosphorylierung, ATP-Disruptoren II-12
II-12A Diafenthiuron (II-12A-1)
II-12B Organozinnverbindungen,
zum Beispiel Azocyclotin (II-12B-1), Cyhexatin (II-12B-2), Fenbutatin-oxide (II-12B-3)
II-12C Propargite (II-12C-1), Tetradifon (II-12C-2)
Entkoppler der oxidativen Phoshorylierung durch Unterbrechung des H-Protongradienten II-13
Chlorfenapyr (II-13-1)
Binapacyrl (II-13-2), Dinobuton (II-13-3), Dinocap (II-13-4), DNOC (II-13-5) Mikrobielle Disruptoren der Insektendarmmembran
Bacillus thuringiensis-Stämme (II-13-6)
Inhibitoren der Chitinbiosynthese
II-15 Benzoylharnstoffe,
zum Beispiel Bistrifluron (11-15-1), Chlorfluazuron (11-15-2), Diflubenzuron (11-15-3),
Fluazuron (11-15-4), Flucycloxuron (II-15-5), Flufenoxuron (11-15-6), Hexaflumuron (II-15-7), Lufenuron (11-15-8), Novaluron (11-15-9), Noviflumuron (11-15-10), Penfluron (II-15-11), Teflubenzuron (II-15-12), Triflumuron (II-15-13)
II-16 Buprofezin (II-16-1)
Häutungsstörende Wirkstoffe Cyromazine (II-17-1)
Ecdysonagonisten/-disruptoren (II-18)
II-18A Diacylhydrazine,
zum Beispiel Chromafenozide (II-18A-1), Halofenozide (II-18A-2), Methoxyfenozide (II-18A-3), Tebufenozide (II-18A-4), Fufenozide (JS-118) (II-18A-5)
Azadirachtin (II-18B-1)
Oktopaminerge Agonisten
zum Beispiel Amitraz (II-19-1)
II-20 Seite-III-Elektronentransportinhibitoren/Seite-II-Elektronentransportinhibitoren Hydramethylnon (II-20A-1)
Acequinocyl (II-20B-1)
Fluacrypyrim (II-20C-1)
Cyflumetofen (II-20D-1), Cyenopyrafen (II-20D-2)
Elektronentransportinhibitoren
II-21 Seite-I-Elektronentransportinhibitoren
aus der Gruppe der METI-Akarizide,
zum Beispiel Fenazaquin (II-21-1), Fenpyroximate (II-21-2), Pyrimidifen (II-21-3), Pyridaben (II-21-4), Tebufenpyrad (II-21-5), Tolfenpyrad (II-21-6), Rotenone (II-21-7)
II-22 Spannungsabhängige Natriumkanal-Blocker
zum Beispiel Indoxacarb (II-22A-1)
zum Beispiel Metaflumizone (BAS 3201) (II-22B-1)
II-23 Inhibitoren der Fettsäurebiosynthese
II-23A Tetronsäure-Derivate
zum Beispiel Spirodiclofen (II-23A-1), Spiromesifen (II-23A-2)
II-23B Tetramsäure-Derivate, zum Beispiel Spirotetramat (II-23B-1)
II-25 Neuronale Inhibitoren mit unbekannten Wirkmechanismus Bifenazate (II-25-1)
Ryanodinrezeptor-Effektoren

II-28 Diamide,
zum Beispiel Flubendiamide (II-28-1),

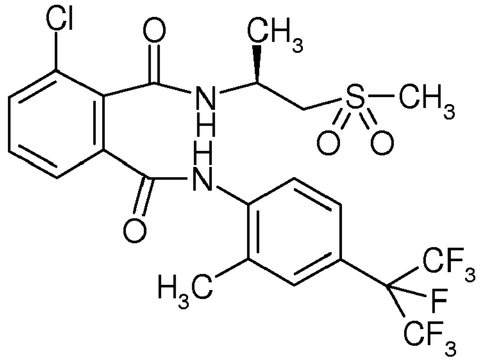

(II-28-2)

Chlorantraniliprole (Rynaxypyr (II-28-3), Cyantraniliprole (Cyazypyr, II-28-4)

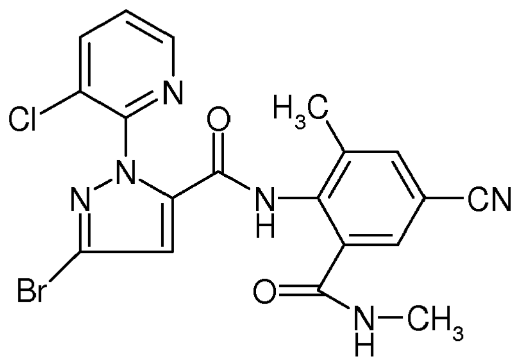

(II-28-4)

II-29 Wirkstoffe mit unbekanntem Wirkmechanismus

Amidoflumet (11-29-1), Benclothiaz (11-29-2), Benzoximate (11-29-3), Bromopropylate (II-29-4), Buprofezin (11-29-5), Chinomethionat (11-29-6), Chlordimeform (11-29-7), Chlorobenzilate (11-29-8), Clothiazoben (11-29-9), Cycloprene (11-29-10), Dicofol (II-29-11), Dicyclanil (II-29-12), Fenoxacrim (II-29-13), Fentrifanil (11-29-14), Flubenzimine (11-29-15), Fluensulfone (5-chloro-2-[(3,4,4-trifluorobut-3-en-1-yl)sulfonyl]-1,3-thiazole), Flufenerim (11-29-16), Flutenzin (11-29-17), Gossyplure (11-29-18), Japonilure (11-29-19), Metoxadiazone (11-29-20), Petroleum (11-29-21), Potassium oleate (11-29-22), Pyridalyl (11-29-23), Sulfluramid (11-29-24), Tetrasul (11-29-25), Triarathene (II-29-26),Verbutin (11-29-27), desweiteren Präparate auf Basis von Bacillus firmus (1-1582, BioNeem, Votivo), 4-{[(6-Chlorpyrid-3-yl)methyl](methyl)amino}furan-2(5H)-on (bekannt aus EP-A-0 539 588) (II-29-28), 4-{[(6-Chlorpyrid-3-yl)methyl](2,2-difluorethyl) amino}furan-2(5H)-on (bekannt aus WO 2007/115644) (II-29-29), 4-{[(6-Chlorpyrid-3-yl)methyl](cyclopropyl)amino}furan-2(5H)-on (bekannt aus EP-A-0 539 588) (11-29-30), 1-{2-Fluor-4-methyl-5-[(2,2,2-trifluorethyl)sulfinyl]phenyl}-3-(trifluormethyl)-1H-1,2,4-triazol-5-amino (II-29-31) (bekannt aus WO 2006/043635) (II-29-31) und Sulfoxaflor (II-29-32).

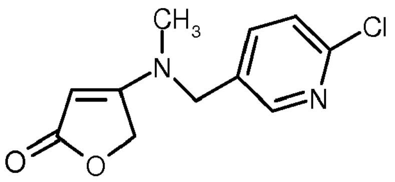

II-29-28

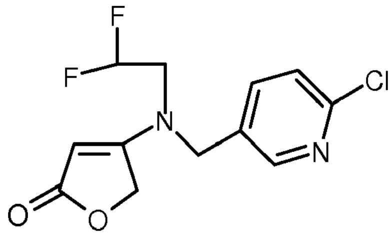

II-29-29

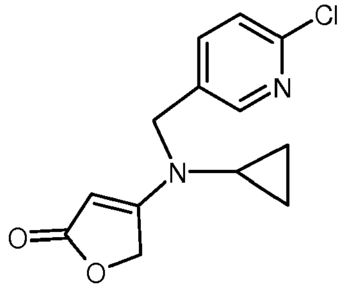

II-29-30

2. Mittel enthaltend Wirkstoffkombinationen gemäß Anspruch 1.

3. Verwendung von Wirkstoffkombinationen gemäß Anspruch 1 oder Mitteln gemäß Anspruch 2 zur Bekämpfung tierischer Schädlinge.

4. Verfahren zur Bekämpfung tierischer Schädlinge, **dadurch gekennzeichnet, dass** man Wirkstoffkombinationen gemäß Anspruch 1 oder Mittel gemäß Anspruch 2 auf tierische Schädlinge und/oder deren Lebensraum einwirken lässt.

5. Verfahren zur Herstellung von Mitteln gemäß Anspruch 2, **dadurch gekennzeichnet, dass** man Wirkstoffkombinationen gemäß Anspruch 1 mit Streckmitteln und/oder oberflächenaktiven Stoffen vermischt.

Europäisches Patentamt
European Patent Office
Office européen des brevets

# EUROPÄISCHER RECHERCHENBERICHT

Nummer der Anmeldung
EP 10 19 0522

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | WO 2010/006713 A2 (BAYER CROPSCIENCE AG [DE]; BRETSCHNEIDER THOMAS [DE]; FRANKEN EVA-MARI) 21. Januar 2010 (2010-01-21)<br>* Seite 77, Zeile 15 - Zeile 20 *<br>* Seite 79, Zeile 22 - Seite 80, Zeile 2 *<br>* Seite 87, Zeile 5 - Zeile 8 *<br>* Seite 110 - Seite 159 *<br>----- | 1-5 | INV.<br>A01N43/56<br>A01N43/78<br>A01N43/824<br>A01P7/04<br>A01N43/82 |
| X | EP 0 288 432 A1 (CIBA GEIGY AG [CH]) 26. Oktober 1988 (1988-10-26)<br>* Seite 3, Zeile 54 - Zeile 58 *<br>* Seite 4, Zeile 1 - Seite 5, Zeile 4 *<br>* Verbindungen 1-3 *<br>* Beispiel 2 *<br>----- | 1-5 | |
| X | DE 36 41 184 A1 (CIBA GEIGY AG [CH]) 11. Juni 1987 (1987-06-11)<br>* Seite 5, Zeile 57 - Zeile 61 *<br>* Seite 6, Zeile 6 - Zeile 11 *<br>* Seite 6, Zeile 12 - Zeile 18 *<br>* Seite 6, Zeile 19 - Zeile 67 *<br>* Ansprüche 6-14 *<br>----- | 1-5 | RECHERCHIERTE SACHGEBIETE (IPC)<br>A01N |
| X | WO 2007/033780 A2 (BAYER CROPSCIENCE AG [DE]; GREUL JOERG NICO [DE]; GAERTZEN OLIVER [DE]) 29. März 2007 (2007-03-29)<br>* Seite 82, Zeile 3 - Zeile 7 *<br>* Seite 85, Zeile 22 - Seite 89, Zeile 22 *<br>* Verbindungen 713, 715, 734 *<br>----- | 1-5 | |

Der vorliegende Recherchenbericht wurde für alle Patentansprüche erstellt

1

| Recherchenort | Abschlußdatum der Recherche | Prüfer |
|---|---|---|
| München | 20. Juni 2011 | Habermann, Jörg |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 10 19 0522

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-06-2011

| Im Recherchenbericht angeführtes Patentdokument | Datum der Veröffentlichung | Mitglied(er) der Patentfamilie | Datum der Veröffentlichung |
|---|---|---|---|
| WO 2010006713 A2 | 21-01-2010 | AR 072572 A1 | 08-09-2010 |
| | | AU 2009270520 A1 | 21-01-2010 |
| | | CA 2730844 A1 | 21-01-2010 |
| | | EP 2309857 A2 | 20-04-2011 |
| | | KR 20110030700 A | 23-03-2011 |
| EP 0288432 A1 | 26-10-1988 | HU 46838 A2 | 28-12-1988 |
| | | JP 2138279 A | 28-05-1990 |
| | | US 4853396 A | 01-08-1989 |
| DE 3641184 A1 | 11-06-1987 | KEINE | |
| WO 2007033780 A2 | 29-03-2007 | AR 056870 A1 | 31-10-2007 |
| | | CA 2623267 A1 | 29-03-2007 |
| | | DE 102005048072 A1 | 05-04-2007 |
| | | EA 200800848 A1 | 30-10-2008 |
| | | EP 1928243 A2 | 11-06-2008 |
| | | JP 2009508891 T | 05-03-2009 |
| | | KR 20080049844 A | 04-06-2008 |
| | | US 2009030024 A1 | 29-01-2009 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2010006713 A
- RU 15525
- EP 0539588 A
- WO 2007115644 A
- WO 2006043635 A
- EP 048186 A
- EP 067461 A
- EP 206149 A
- DE 2802962 A
- DE 2326077 A
- DE 2737297 A
- DE 3117510 A
- DE 2231312 A
- DE 2335347 A
- DE 2757066 A
- EP 106469 A
- GB 02143823 A
- EP 038617 A
- DE 2742546 A
- EP 026542 A
- DE 2709264 A
- EP 049977 A
- DE 2653189 A
- DE 3604781 A
- DE 3708231 A
- EP 0279325 A
- GB 1168797 A
- EP 00192060 A
- WO 9104965 A
- EP 00580553 A
- EP 00302389 A
- EP 00235725 A
- EP 00649845 A
- EP 00376279 A
- DE 2818830 A
- DE 2123236 A
- EP 179022 A
- EP 052833 A
- DE 2601780 A
- US 4980376 A
- EP 161019 A
- EP 71279 A
- WO 9800394 A
- WO 9819542 A
- DE 2824126 A
- DE 2736876 A
- EP 639559 A
- EP 339854 A
- EP 228564 A
- EP 496342 A
- EP 295117 A
- WO 9722593 A
- WO 0100614 A
- WO 0210153 A
- EP 01006107 A
- WO 06022225 A
- WO 03015519 A
- WO 04067528 A
- EP 089202 A
- DE 2717040 A
- EP 001689 A
- EP 675133 A
- EP 289879 A
- EP 234045 A
- EP 134439 A
- EP 326329 A
- EP 196524 A
- EP 365925 A
- US 2812280 A
- JP 2003201280 A
- WO 2002014263 A
- DE 2641343 A
- WO 9616047 A
- WO 9310083 A
- EP 210487 A
- WO 9322297 A
- EP 005912 A
- EP 375316 A
- DE 2724494 A
- US 2812281 A
- US 3272854 A
- DE 3037105 A
- US 3784696 A
- DE 1100372 A
- DE 2061132 A
- EP 01097932 A
- EP 314615 A
- EP 00580374 A
- EP 128648 A
- DE 2655910 A
- EP 347488 A
- EP 00462456 A
- WO 9211249 A
- US 3244586 A
- EP 528156 A
- WO 04007448 A
- WO 9611909 A
- DE 102006015467 A

- WO 9700265 A
- WO 2007095229 A2
- WO 2007149134 A

**In der Beschreibung aufgeführte Nicht-Patentliteratur**

- The Pesticide Manual. British Crop Protection Council, 2003
- The Pesticide manual. 1997, 1056
- Modern Agrochemicals. 2005, vol. 4, 1-7
- The Pesticide Manual. 1997, 846
- *Enantiomer DPX-KN 128 bekannt aus ACS Symposium Series,* vol. 800, 178
- **CROUSE GD.** *Pest. Management Science,* 2001, vol. 57, 177-185
- **S.R. COLBY.** *Weeds,* 1967, vol. 15, 20-22